(19) Europäisches Patentamt
European Patent Office
Office européen des brevets

(11) **EP 1 317 795 B1**

(12) **EUROPÄISCHE PATENTSCHRIFT**

(45) Veröffentlichungstag und Bekanntmachung des Hinweises auf die Patenterteilung:
**10.03.2004  Patentblatt 2004/11**

(21) Anmeldenummer: **01984882.9**

(22) Anmeldetag: **21.12.2001**

(51) Int Cl.$^7$: **H02P 6/08**

(86) Internationale Anmeldenummer:
**PCT/EP2001/015235**

(87) Internationale Veröffentlichungsnummer:
**WO 2002/054576 (11.07.2002 Gazette 2002/28)**

(54) **ELEKTRONISCH KOMMUTIERTER GLEICHSTROMMOTOR**

ELECTRONICALLY COMMUTATED DIRECT CURRENT MOTOR

MOTEUR A COURANT CONTINU A COMMUTATION ELECTRONIQUE

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **28.12.2000  DE 20022125 U**

(43) Veröffentlichungstag der Anmeldung:
**11.06.2003  Patentblatt 2003/24**

(73) Patentinhaber: **Papst-Motoren GmbH & Co. KG**
**78112 St. Georgen (DE)**

(72) Erfinder:
• **BERROTH, Hansjörg**
  **78052 VS-Obereschach (DE)**
• **KUNER, Arnold**
  **78112 St. Georgen (DE)**

(74) Vertreter: **Raible, Hans, Dipl.-Ing. et al**
**Schoderstrasse 10**
**70192 Stuttgart (DE)**

(56) Entgegenhaltungen:
**EP-A- 0 880 223        DE-A- 19 845 626**
**US-A- 5 319 291**

**Beschreibung**

Die Erfindung betrifft einen elektronisch kommutierten Gleichstrommotor mit einem Rotor, ferner mit einem Stator mit einer Wicklungsanordnung, welche mindestens einen Wicklungsstrang aufweist, und mit einer H-Brückenschaltung zur Speisung dieses Wicklungsstranges mit alternierenden Stromimpulsen aus einer Gleichstromquelle.

Aus der US-A-5 319 291 kennt man einen elektronisch kommutierten Gleichstrommotor. Dieser hat einen Rotor, einen Stator mit einer Wicklungsanordnung, welche mindestens einen Wicklungsstrang aufweist, eine H-Brük-kenschaltung zur Speisung dieses Wicklungsstranges mit alternierenden Stromimpulsen aus einer Gleichstromquelle, welch letztere eine positive Leitung und eine negative Leitung aufweist, wobei die H-Brückenschaltung in der Verbindung von einem Anschluss des Wicklungsstranges zur positiven Leitung einen ersten P-Kanal-MOSFET und in der Verbindung von diesem einen Anschluss zur negativen Leitung einen ersten N-Kanal-MOSFET aufweist, und in der Verbindung vom anderen Anschluss des Wicklungsstranges zur positiven Leitung einen zweiten P-Kanal-MOSFET und in der Verbindung von diesem anderen Anschluss zur negativen Leitung einen zweiten N-Kanal-MOSFET aufweist.

Bei diesem bekannten Motor verwendet man ein Verzögerungsglied, um sicher zu stellen, dass der im Augenblick leitende MOSFET vollständig abgeschaltet wird, bevor der andere am gleichen Anschluss der Statorwicklung angeschlossene MOSFET eingeschaltet wird. Eine vergleichbare Lösung ist auch bekannt aus der DE 198 45 626 A1. Diese Verzögerungsglieder können aber nicht verhindern, dass z.B. durch Störimpulse ein N-Kanal-MOSFET und ein P-Kanal-MOSFET gleichzeitig leitend werden. Wenn bei einem derartigen Motor die H-Brückenschaltung auf diese Weise falsch angesteuert wird, kann dies zur Folge haben, dass einer oder mehrerer der in der Brücke verwendeten Halbleiterschalter überlastet oder zerstört werden. Gerade bei der Ansteuerung einer H-Brückenschaltung durch einen Mikrocomputer kann man, z.B. verursacht durch Störimpulse, eine solche falsche Ansteuerung niemals völlig ausschließen. Eine solche falsche Ansteuerung wird auf jeden Fall dazu führen, dass die Lebensdauer eines solchen Motors verringert wird.

Es ist deshalb eine Aufgabe, einen neuen elektronisch kommutierten Gleichstrommotor mit H-Brückenschaltung bereit zu stellen.

Nach der Erfindung wird diese Aufgabe gelöst durch den Gegenstand des Anspruchs 1. Durch die Verriegelungsglieder zwischen den Gates erreicht man, dass ein gleichzeitiges Einschalten der beiden ersten MOSFETs (oder der beiden zweiten MOSFETs) zumindest behindert wird, so dass die Betriebssicherheit in einfacher Weise erhöht wird.

In vorteilhafter Weiterbildung der Erfindung geht man dabei gemäß Anspruch 2 vor. Eine solche Diode ist außerordentlich preiswert und ermöglicht in sehr einfacher Weise, die Betriebssicherheit eines solchen Motors wesentlich zu erhöhen.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den Unteransprüchen. Es zeigt:

Fig. 1      ein Übersichtsschaltbild einer bevorzugten Ausführungsform eines erfindungsgemäßen Gleichstrommotors,

Fig. 2      ein schematisiertes Schaubild zur Erläuterung des Ablaufs der Kommutierung bei einem Motor nach dem Stand der Technik,

Fig. 3      ein schematisiertes Schaubild analog Fig. 2 zur Erläuterung des Ablaufs der Kommutierungsprozedur bei einem Motor nach der Erfindung,

Fig. 4      ein Schaubild des Stromverlaufs, wie er im Verlauf einer Kommutierungsprozedur gemessen wird,

Fig. 5      ein Schaubild eines Stromverlaufs, wie er beim Einsetzen einer Maximalstrombegrenzung gemessen wird,

Fig. 6      ein Zustandsdiagramm zur Erläuterung der Erfindung,

Fig. 7      eine Darstellung des Verlaufs der Magnetflussdichte beim Rotor über einem Umfang von 360° el., und eines Motorstromverlaufs, bei dem die Strombegrenzung einsetzt,

Fig. 8      eine Darstellung analog Fig. 7, welche in stark schematisierter Weise zeigt, welche Folgen das Einsetzen der Strombegrenzung hat, weil ein dem Motor zugeordneter adaptiver Regler wirksam wird, der die Länge BW der Stromblöcke entsprechend vergrößert,

Fig. 9      ein spezielles Ausführungsbeispiel mit einem Mikrocontroller der Firma Arizona Microchip; diese Figur zeigt einen Teil der Beschaltung des Mikrocontrollers, und dieser Teil wird in der nachfolgenden Fig. 10 nicht wiederholt,

Fig. 10    ein detailliertes Schaltbild der Hardware zur Erzeugung der Signale Imin und Imax,

Fig. 11    ein detailliertes Schaltbild der Hardware zur Steuerung der H-Brücke 137,

Fig. 12    ein Übersichtsbild zur Erläuterung der Grundstruktur der verwendeten Software,

Fig. 13    ein Flussdiagramm, welches den grundsätzlichen Ablauf des Programms im Motor 100 zeigt,

Fig. 14    ein Flussdiagramm des Interrupt-Handlers für das Erkennen und Bedienen der verschiedenen Interrupts,

Fig. 15    ein Schaubild zur Erläuterung der nachfolgenden Figuren,

Fig. 16    ein Flussdiagramm der Hall-Interrupt-Routine, die beim Auftreten einer Flanke des Signals HALL ausgeführt wird,

Fig. 17    ein Flussdiagramm der Imax-Interruptroutine, die bei einer Flanke des Signals Imax ausgeführt wird,

Fig. 18    ein Schaubild zur Erläuterung des Ansprechens der Maximalstrom-Begrenzung bei einem schnelllaufenden Motor,

Fig. 19    ein Flussdiagramm der Imin-Interruptroutine, die beim Auftreten des Signals Imin ausgeführt wird,

Fig. 20    ein Flussdiagramm der TIMEOUT-Interruptroutine,

Fig. 21    ein Flussdiagramm zum Inkrementieren des Tastverhältnisses pwm,

Fig. 22    ein Flussdiagramm zum Dekrementieren des Tastverhältnisses pwm,

Fig. 23    ein Flussdiagramm zur Erläuterung der bei einer Kommutierung ablaufenden Vorgänge,

Fig. 24    ein Flussdiagramm zur Erläuterung der Kommutierung bei einer normalen Drehzahl des Motors 100,

Fig. 25    ein Flussdiagramm zur Erläuterung von Einzelheiten der Kommutierungsprozedur beim Abschalten eines Stromes in der Wicklung 102,

Fig. 26    ein Diagramm zur Erläuterung von Vorgängen bei der Kommutierung,

Fig. 27    ein Flussdiagramm zur Erläuterung der Berechnung einer Zeitdauer t_HALL bei niedrigen und hohen Drehzahlen,

Fig. 28    ein Diagramm zur Erläuterung der Berechnung der Zeitdauer t_HALL bei niedrigen und bei hohen Drehzahlen,

Fig. 29    eine Routine CALC_ACCEL zur Berücksichtigung der Beschleunigung,

Fig. 30    eine Routine RGL für die Drehzahlregelung,

Fig. 31    eine Routine zur adaptiven Modifikation des Tastverhältnisses pwm abhängig von Betriebsbedingungen des Motors,

Fig. 32    ein Schaubild zur Erläuterung der Wirkungsweise von Fig. 31, und

Fig. 33    ein Schaubild mit Zahlenwerten zur vertieften Erläuterung von Fig. 26.

In der nachfolgenden Beschreibung werden für gleiche oder gleich wirkende Teile dieselben Bezugzeichen verwendet, und diese werden gewöhnlich nur einmal beschrieben. Da die Materie schwierig ist, werden häufig konkrete Zahlenwerte angegeben, z.B. 3 A, 1,6 A, 200 μs, 1000 U/min etc., um den Text lesbarer zu machen. Es versteht sich aber von selbst, dass diese konkreten Werte nur bevorzugte Beispiele sind, die die Erfindung in keiner Weise beschränken.

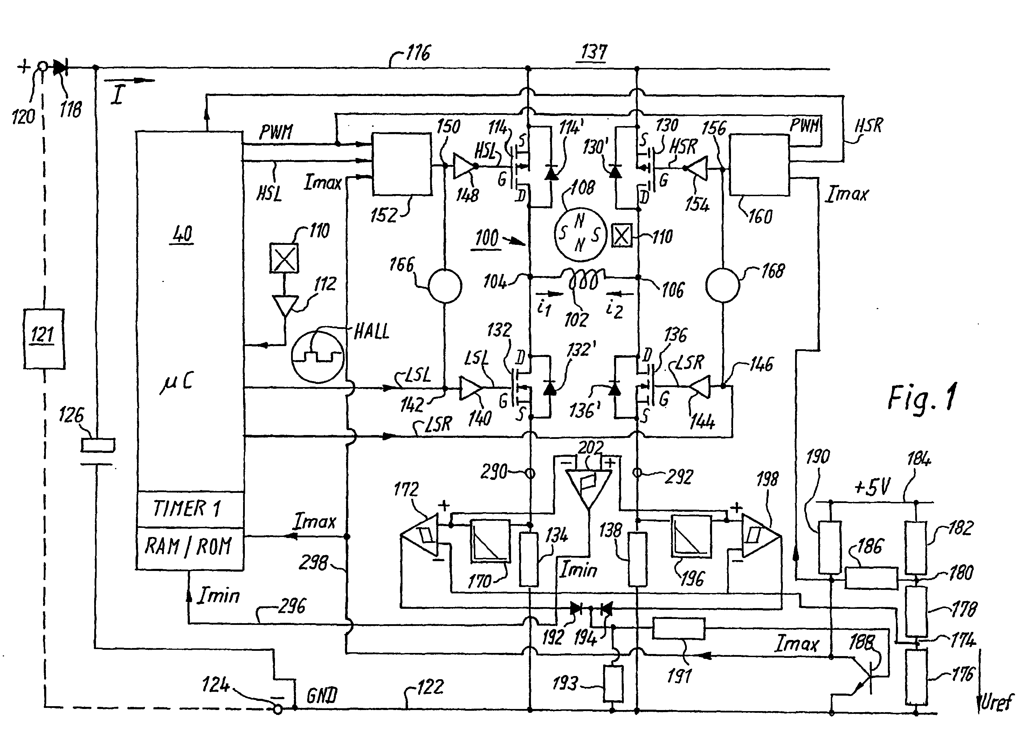

**Fig. 1** zeigt eine Übersichtsdarstellung einer bevorzugten Ausführungsform eines Motors nach der Erfindung.

Der eigentliche Motor 100 hat bei dieser Ausführungsform einen Wicklungsstrang 102 mit zwei Anschlüssen 104, 106, sowie einen permanentmagnetischen Rotor 108. Das nachfolgende Ausführungsbeispiel bezieht sich auf einen Motor 100 mit vierpoligem Rotor 108, doch sind naturgemäß beliebige Polzahlen und auch andere Zahlen von Wicklungssträngen möglich. Das Beispiel des Motors 100 wurde wegen seiner Einfachheit gewählt, um das Verständnis der - sehr komplexen - Erfindung zu erleichtern.

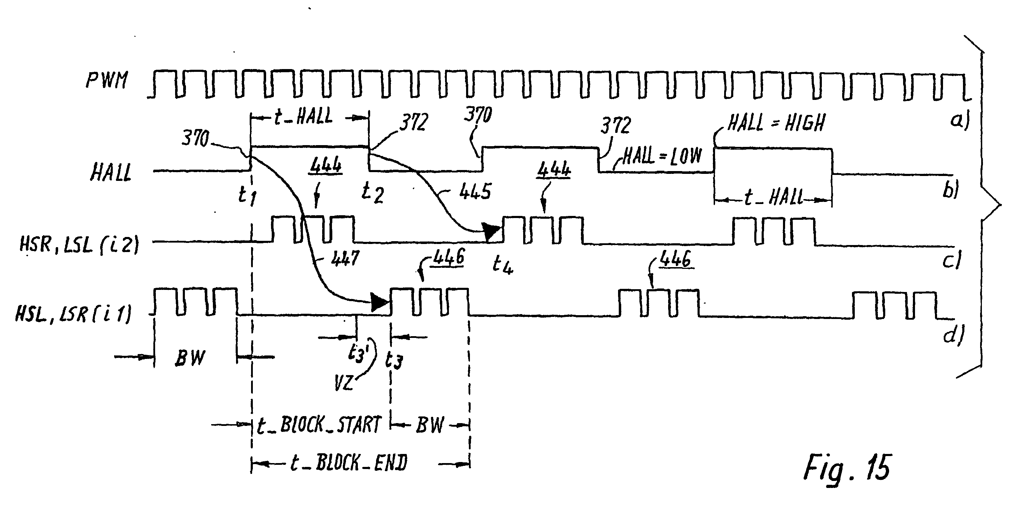

Das Ausführungsbeispiel zeigt einen Motor 100, bei dem im Bereich einer Rotordrehung von 180° el. ein Strom $i_1$ in Richtung vom Anschluss 104 zum Anschluss 106 fließt, und im Bereich der anschließenden Rotordrehung von 180° el. ein Strom i2 von 106 nach 104. Zeitdauer (Beginn und Ende) und Amplitude der Ströme i1 und i2 werden nach den Bedürfnissen des Motors variiert, was meist als sogenannte Blockregelung bezeichnet wird, d.h. der Strom i1 kann z.B. eine Länge zwischen 0° und 180° el. haben, ebenso der Strom $i_2$. Ferner ist auch ohne jeden Mehraufwand eine sogenannte Frühzündung möglich, wie in Fig. 15 bei VZ angedeutet und bei den nachfolgenden Gleichungen (3a) und (4a) erläutert.

Da ein solcher Motor nur eine einzige Wicklung 102 benötigt, ist er sehr einfach. Er wird bevorzugt zum Antrieb von Lüftern verwendet. Die DE 2 346 380 zeigt ein Beispiel für den Aufbau eines solchen Motors, wie er in sehr vielen Varianten produziert wird.

Der Motor 100 hat bevorzugt einen vom Rotor 108 gesteuerten galvanomagnetischen Rotorstellungssensor 110, z.B. einen Hallgenerator, und dieser ist in Fig. 1 links nochmals dargestellt. Seine Ausgangssignale werden über einen Verstärker 112 verstärkt, zu Rechteckimpulsen HALL umgeformt, und dann einem Mikrocontroller μC 40 zugeführt, wo jede Flanke dieser Impulse HALL einen Interrupt auslöst (im folgenden als HALL-Interrupt bezeichnet), vgl.

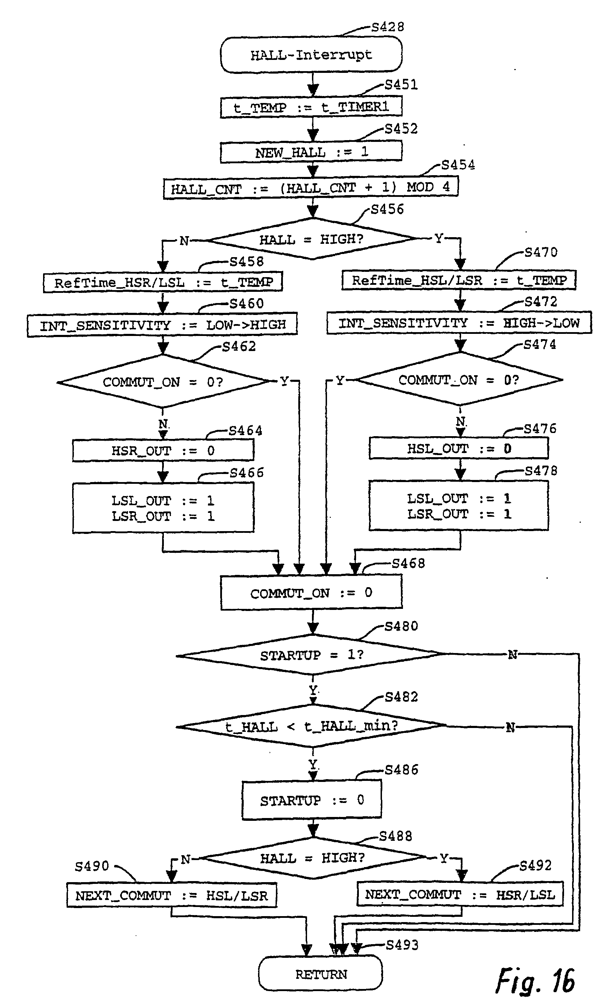

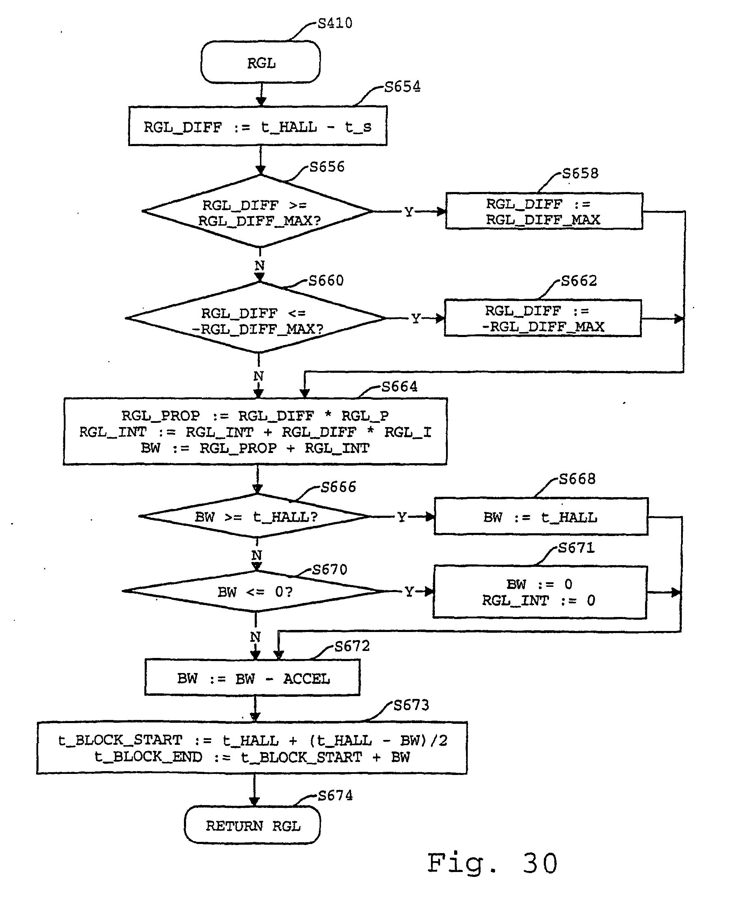

Fig. 16. Wegen der Magnetisierung des Rotors 108 wird jeweils nach einer Drehung des Rotors 108 von 180° el. ein solcher HALL-Interrupt ausgelöst. Der Abstand t_HALL zwischen zwei HALL-Interrupts ist bei niedrigen Drehzahlen hoch und bei hohen Drehzahlen niedrig und ist deshalb ein Maß für die Drehzahl des Rotors 108, das für die Drehzahlregelung (Fig. 30) verwendet wird. Die Zeitspanne t_HALL entspricht der Zeit, die der Rotor 108 für eine Drehung von 180° el. benötigt, vgl. nachfolgend die Gleichungen (6) und (7).

Der Anschluss 104 der Wicklung 102 ist mit dem Drain D eines P-Kanal-MOSFET 114 verbunden, dessen Source S an eine Plusleitung 116 angeschlossen ist, die über eine Schutzdiode 118 mit einem Plusanschluss 120 verbunden ist, der gewöhnlich an ein schematisch angedeutetes Netzgerät 121 angeschlossen wird, das eine Gleichspannung von z.B. 12, 24, 48 oder 60 V liefert, je nach Typ des Motors 100. Die Minusleitung (GND) des Motors 100 ist mit 122, ihr Anschluss mit 124 bezeichnet. Zwischen der Plusleitung 116 und der Minusleitung 122 liegt ein Kondensator 126.

Bei seinem Betrieb "atmet" der Motor 100, d.h. er nimmt abwechselnd Energie aus dem Netzgerät 121 und dem Kondensator 126 auf und gibt zwischendurch - während der Kommutierungsprozeduren - Energie ab, die vom Kondensator 126 zwischengespeichert werden muss, damit die Spannung zwischen den Leitungen 116 und 122 nicht zu hoch wird. Deshalb hat der Kondensator 126 eine Größe, die bei konventionellen Motoren mit vergleichbaren Leistungsdaten bei ca. 500 μF liegt und die bei der Erfindung signifikant gesenkt werden kann. In kleinen Motoren ist es nicht einfach, größere Kondensatoren 126 unterzubringen. Durch die hohe Temperatur in einem Motor ist die Lebensdauer eines solchen Kondensators begrenzt. Eines der Objekte der Erfindung ist es deshalb, den Kondensator 126 klein zu halten und elektrisch wenig zu belasten. Bei einer Betriebsspannung von 12 V kann z.B. die Größe dieses Kondensators 60 bis 100 μF betragen, wenn der Motor nach der Erfindung arbeitet.

Der Anschluss 106 der Wicklung 102 ist mit dem Drain D eines P-Kanal-MOSFET 130 verbunden, dessen Source S mit der Leitung 116 verbunden ist.

Der Anschluss 104 ist auch mit dem Drain D eines N-Kanal-MOSFET 132 verbunden, dessen Source S über einen Messwiderstand 134 mit der Minusleitung 122 verbunden ist.

Ebenso ist der Anschluss 106 mit dem Drain D eines N-Kanal-MOSFET 136 verbunden, dessen Source S über einen Messwiderstand 138 mit der Minusleitung 122 verbunden ist.

Antiparallel zu den MOSFETS 114, 130, 132, 136 liegen in üblicher Weise Freilaufdioden 114', 130', 132', 136'.

Das Gate G des MOSFET 132 ist an den Ausgang eines Verstärkers 140 angeschlossen, dessen Eingang 142 vom μC 40 ein Signal LSL zugeführt wird, wenn der MOSFET 132 eingeschaltet werden soll. (LSL wird nachfolgend auch als LSL_OUT bezeichnet, analog die Signale LSR, HSL und HSR).

Das Gate G des MOSFET 136 ist an den Ausgang eines Verstärkers 144 angeschlossen, dessen Eingang 146 vom μC 40 ein Signal LSR zugeführt wird, wenn der Transistor 136 eingeschaltet werden soll.

Das Gate G des MOSFET 114 ist an den Ausgang eines Verstärkers 148 angeschlossen, dessen Eingang 150 vom Ausgangssignal eines Verknüpfungsglieds 152 gesteuert wird. Zusammen mit dem Verstärker 148 bildet es ein NAND-Gate, d.h. wenn eines der Eingangssignale des Verknüpfungsglieds 152 niedrig ist, wird der MOSFET 114 gesperrt. In diesem Fall hat das Verknüpfungsglied 152 ein niedriges Ausgangssignal. Durch dieses wird der Treiberverstärker 148 hochohmig und zieht das Potenzial am Gate G des FET 114 nach oben, so dass dieser nichtleitend wird.

Das Gate G des MOSFET 130 ist an den Ausgang eines Verstärkers 154 angeschlossen, dessen Eingang 156 vom Ausgangssignal eines Verknüpfungsglieds 160 gesteuert wird. Zusammen mit dem Verstärker 154 bildet es ein NAND-Gate, d.h. wenn eines der Eingangssignale des Verknüpfungsglieds 160 niedrig ist, wird der MOSFET 130 gesperrt. Die Wirkungsweise ist wegen der Symmetrie der Schaltung dieselbe wie beim FET 114.

Beiden Verknüpfungsgliedern 152 und 160 wird vom µC 40 ein PWM-Signal PWM zugeführt, das z.B. eine Frequenz von 20 kHz hat und dessen Tastverhältnis pwm durch den µC 40 zwischen 0 und 100 % eingestellt werden kann. Dieses Signal PWM wird im Betrieb kontinuierlich vorn µC 40 erzeugt und bestimmt, wie hoch der Strom ist, der dem Motor 100 zugeführt wird.

Ebenso wird beiden Verknüpfungsgliedern 152 und 160, sowie dem µC 40, ein (niedriges) Signal Imax zugeführt, wenn der Strom im MOSFET 132 oder im MOSFET 136 einen vorgegebenen Grenzwert überschreitet. Dieses Signal Imax führt zur sofortigen Abschaltung beider MOSFETs 114 und 130 über die Hardware des Motors. (Zu einem gegebenen Zeitpunkt kann stets nur einer dieser beiden MOSFETs 114, 130 leitend sein.) Das Signal Imax ist also "lowaktiv", d.h. es schaltet den Strom dann ab, wenn es niedrig wird.

Ferner wird dem Verknüpfungsglied 152 vom µC 40 ein Kommutierungssignal HSL zugeführt, um den Transistor 114 zu steuern. Ebenso wird dem Verknüpfungsglied 160 vom µC 40 ein Kommutierungssignal HSR zugeführt, um den Transistor 130 zu steuern.

Die Begriffe HSL etc. sind mnemotechnisch und bedeuten

| HSL | High Side Left | Transistor 114 |
|-----|----------------|----------------|
| HSR | High Side Right | Transistor 130 |
| LSL | Low Side Left | Transistor 134 |
| LSR | Low Side Right | Transistor 136 |

Die vier Transistoren 114, 130, 132, 136 bilden zusammen mit der Wicklung 102 eine sogenannte H-Brücke (oder Vollbrücke) 137 mit den oberen (High Side oder HS) Transistoren 114, 130 und den unteren (Low Side oder LS) Transistoren 132, 136. Wenn die Transistoren 114 und 136 eingeschaltet sind, fließt ein Strom i1 in der Wicklung 102 von links nach rechts. Wenn die Transistoren 130 und 132 eingeschaltet sind, fließt ein Strom i2 in der Wicklung 102 von rechts nach links.

Zwischen den Eingängen 142 und 150 ist eine Verriegelung 166 vorgesehen, welche verhindert, dass die Transistoren 114 und 132 gleichzeitig leitend sind.

Ebenso ist zwischen den Eingängen 146 und 156 eine Verriegelung 168 vorgesehen, welche verhindert, dass beide Transistoren 130 und 136 gleichzeitig leitend sind. Diese Verriegelungen dienen zum Schutz der H-Brücke 137.

Die Spannung am Widerstand 134 wird über ein Signalfilter 170 (zum Ausfiltern von Störimpulsen) dem Pluseingang eines Komparators 172 zugeführt, dessen Minuseingang an einen Knotenpunkt 174 angeschlossen ist, der über einen Widerstand 176 mit der Minusleitung 122 und über einen Widerstand 178 mit einem Knotenpunkt 180 verbunden ist, welcher über einen Widerstand 182 mit einer Leitung 184 verbunden ist, die an einer geregelten Spannung von + 5 V liegt. Die Spannung am Widerstand 176 stellt also eine Referenzspannung Uref dar, welche festlegt, bei welchem Strom die Maximalstromerkennung anspricht.

Der Knotenpunkt 180 ist über einen Widerstand 186 mit dem Kollektor eines npn-Transistors 188 verbunden, an dem bei Überstrom ein (niedriges) Signal Imax erzeugt wird und der deshalb mit den Verknüpfungsgliedern 152 und 160 sowie dem µC 40 direkt verbunden ist, außerdem über einen Widerstand 190 mit der Leitung 184.

Der Emitter des Transistors 188 ist mit der Minusleitung 122 verbunden. Seine Basis ist über einen Widerstand 191 an die Katoden zweier Dioden 192, 194 angeschlossen, die über einen Widerstand 193 mit der Minusleitung 122 (GND) verbunden sind. Die Anode der Diode 192 ist mit dem Ausgang des Komparators 172 verbunden.

Die Spannung am Messwiderstand 138 wird über ein Signalfilter 196 dem Pluseingang eines Komparators 198 zugeführt, dessen Minuseingang mit dem Knotenpunkt 174 verbunden ist. Der Ausgang des Komparators 198 ist mit der Anode der Diode 194 verbunden.

Wenn der Strom durch den Messwiderstand 134 zu hoch wird, wird der Plus-Eingang des Komparators 172 positiver als der Minuseingang, so dass der Transistor 188 über die Diode 192 einen Basisstrom erhält und eingeschaltet wird. Wenn der Strom durch den Widerstand 138 zu hoch wird, wird der Plus-Eingang des Komparators 198 positiver als sein Minuseingang, so dass der Transistor 188 über die Diode 194 einen Basisstrom erhält und leitend wird.

In beiden Fällen wird hierdurch der Widerstand 186 parallel zu den Widerständen 176, 178 geschaltet, wodurch der Strom durch den Widerstand 182 und dadurch der Spannungsabfall an diesem Widerstand erhöht wird. Dadurch sinkt automatisch die Referenzspannung Uref, sobald der Transistor 188 einschaltet, und dies bewirkt eine Schalthysterese, d.h. der Komparator 172 schaltet z.B. bei einem Überstrom von 3 A ein und schaltet erst bei etwa 1,6 A wieder ab, ebenso der Komparator 198. Dies bedeutet, dass die oberen Transistoren 114, 130 z.B. bei 3 A zwangsweise abgeschaltet werden und erst dann wieder eingeschaltet werden können (nicht müssen!), wenn der Strom im Widerstand 134 oder 138 auf 1,6 A gefallen ist. Dies verhindert eine Überlastung der oberen Transistoren 114, 130, d.h. der gerade leitende Transistor wird bei einem Überstrom voll ausgeschaltet, sobald das niedrige Signal Imax am Kollektor des Transistors 188 erzeugt wird, und er kann erst dann wieder eingeschaltet werden, wenn das Signal Imax nicht mehr erzeugt wird und die übrigen Kriterien für seine Einschaltung vorliegen, wie sie nachfolgend näher erläutert werden.

Zur Erkennung des Nulldurchgangs für den Fall, dass beide oberen Transistoren 114, 130 gesperrt und beide unteren Transistoren 132, 136 leitend sind, dient ein Komparator 202, dessen Minuseingang mit dem Pluseingang des Komparators 172 und dessen Pluseingang mit dem Pluseingang des Komparators 198 verbunden ist.

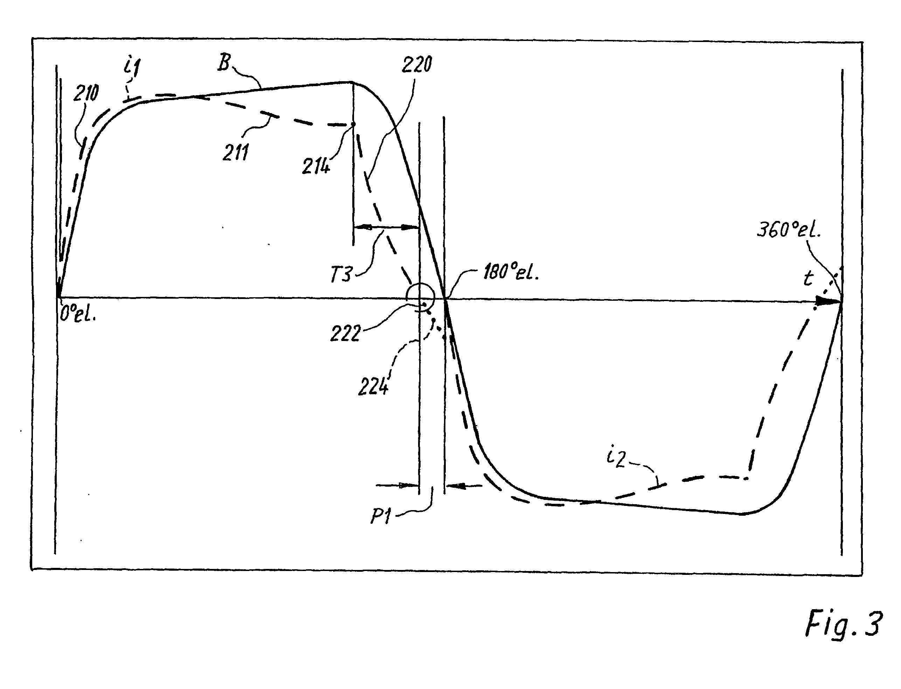

Wenn nach dem Abschalten eines zuvor leitenden oberen Transistors 114 oder 130 die beiden unteren Transistoren 132, 136 leitend gesteuert werden, entsteht durch den Strom, welcher von der in der Wicklung 102 gespeicherten elektrischen Energie erzeugt wird, an beiden Widerständen 134, 138 ein Spannungsabfall, und wenn der Strom durch die Wicklung 102 vom motorischen in den generatorischen Betrieb übergeht, wie das in Fig. 3 an der Stelle 222 der Fall ist, ändert dieser Strom seine Richtung und geht dabei durch Null.

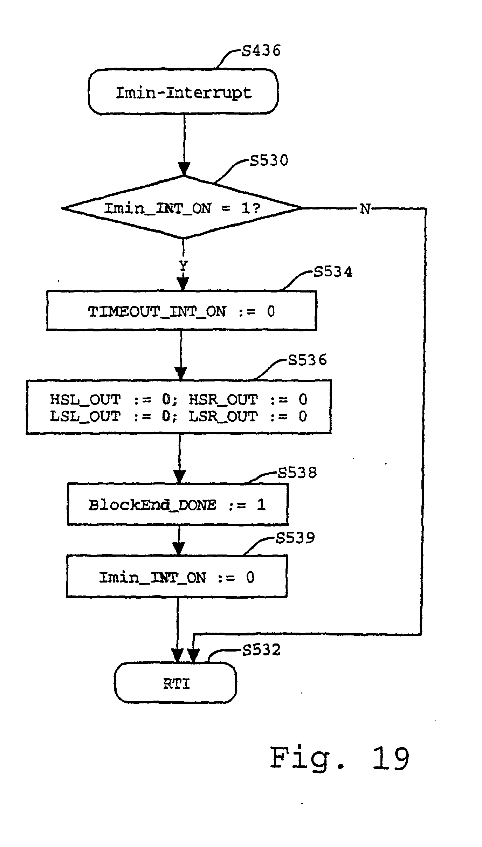

Wenn z.B. der Strom im motorischen Betrieb vom Anschluss 106 über die Widerstände 138, 134 zum Anschluss 104 fließt, ist der Pluseingang des Komparators 202 positiver als sein Minuseingang. Nach dem Nulldurchgang fließt der Strom vom Anschluss 104 über die Widerstände 134, 138 zum Anschluss 106, und jetzt wird der Minuseingang des Komparators 202 positiver als der Pluseingang, so dass sich im Nulldurchgang des Stromes das Signal Imin am Ausgang des Komparators 202 sprunghaft ändert, also entweder von Low nach High, oder von High nach Low. Deshalb entsteht beim Nulldurchgang eine abrupte Signaländerung (Schaltflanke) am Ausgang des Komparators 202, und diese bewirkt im µC 40 einen Interrupt, durch den alle vier Transistoren 114, 130, 132, 136 gesperrt werden. Dieser Interrupt wird als Imin-Interrupt bezeichnet und wird nachfolgend in Fig. 19 näher erläutert.

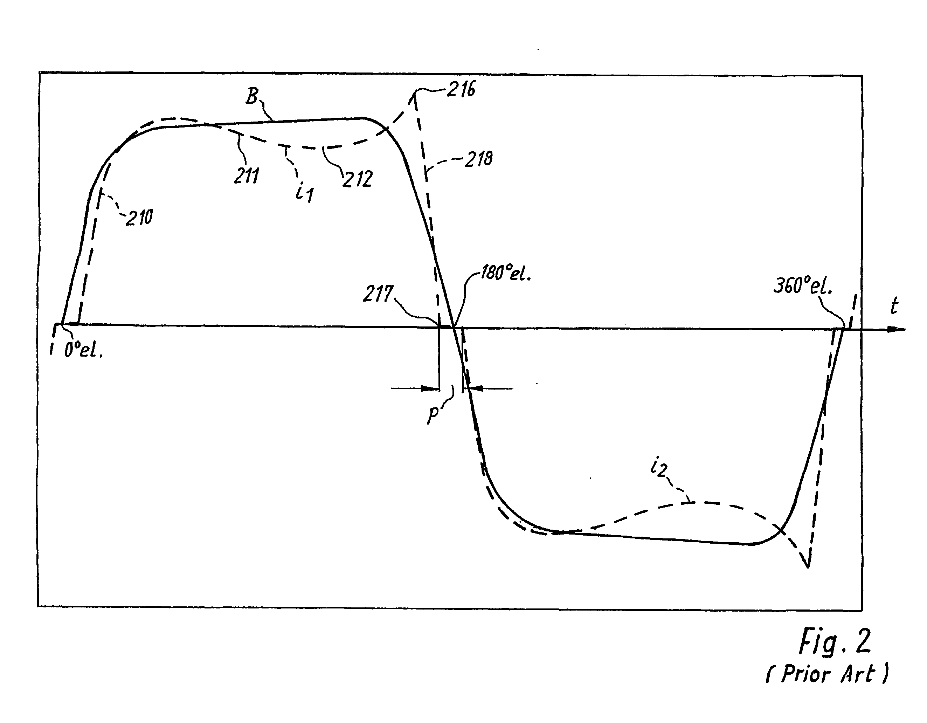

Zur Erläuterung der prinzipiellen Wirkungsweise von Fig. 1 wird auf die Fig. 2 und 3 Bezug genommen, welche stark schematisiert die Arbeitsweise erläutern. Fig. 2 zeigt den Verlauf des Stroms im Stator bei einem Motor nach dem Stand der Technik, und Fig. 3 zeigt den analogen Verlauf bei einem Motor nach der Erfindung. Die Fig. 2 und 3 zeigen über einem Drehwinkel von 360° el. folgende Werte:

**a) Die Magnetflussdichte ("Induktion") B am Rotor 108.**

Die Magnetflussdichte wird in Tesla (T) gemessen. Ihr Verlauf ist bei diesem Beispiel etwa trapezförmig. Man spricht dann von einer "trapezförmigen Magnetisierung". Dies ist im Rahmen der vorliegenden Erfindung ein bevorzugter, jedoch nicht der einzige denkbare Verlauf von B.

Die Änderungen der Magnetflussdichte B induzieren in der Statorwicklung 102 eine Spannung, wenn sich der Rotor 108 dreht. Die Form dieser Spannung entspricht der Form von B, ist also hier ebenfalls trapezförmig. Die Amplitude dieser Spannung steigt mit steigender Drehzahl an. Man bezeichnet diese Spannung als "induzierte Spannung" oder "Gegen-EMK" (counter EMF).

**b) Fig. 2 zeigt den Stromverlauf des Statorstroms bei einem konventionellen Motor.**

Der Strom $i_1$ durch die Wicklung 102 beginnt gewöhnlich zeitlich nach 0° el. und steigt - wegen des niedrigen Wertes von B, also der niedrigen Gegen-EMK in diesem Bereich, am Anfang bei 210 rasch an. Dieser Anstieg bewirkt, dass ein Teil der durch den Strom i1 zugeführten Energie - mit zeitlicher Verzögerung - in kinetische Energie des Rotors 108 transformiert wird. Der Strom i1 sinkt dann bei 211 wegen der höheren Gegen.EMK bis zu einem Minimum 212 wieder etwas ab. Ab 212 steigt in Fig. 2, also bei einem konventionellen Motor, der Strom i1 bis zu einem Maximum 216 an, wo der Strom i1 abgeschaltet wird und danach längs einer Kurve 218 auf Null sinkt. Der Nulldurchgang 217 wird bei diesem Beispiel (Fig. 2) etwas vor 180° el. erreicht, kann aber auch nach 180° el. liegen, je nach der Winkelstellung des Hallgenerators 110.

Für den Strom i2, der vom Anschluss 106 zum Anschluss 104 fließt, sind die Vorgänge - wegen der Symmetrie der Anordnung - analog und werden deshalb nicht nochmals beschrieben. Der Strom $i_2$ beginnt in Fig. 2 bei 180° el.

Die Zeitspanne P zwischen der Stelle 217 und dem Beginn des Stroms i2 bezeichnet man als Schaltpause oder Schaltlücke P. Diese ist u.a. notwendig, um einen Kurzschluss in der H-Brücke 137 zu verhindern. (Wenn in Fig. 1 z.B. die Transistoren 114 und 132 gleichzeitig leitend wären, entstünde durch sie ein Kurzschlussstrom von der Plusleitung 116 zur Minusleitung 122).

Im Winkelbereich etwa von 0° el. bis zum Maximum 216 wird bei einem ECM mit konventioneller Kommutierung der Wicklungsstrom i1 mit zeitlicher Verzögerung in kinetische Energie des Rotors 108 umgewandelt.

Wird an der Stelle 216 der Strom i1 abrupt abgeschaltet, so entsteht an der Wicklung 102 eine hohe induzierte Spannung, welche bestrebt ist, diesen Strom i1 weiter fließen zu lassen, so dass der Strom i1 zwischen den Stellen 216 und 217 über die Freilaufdioden 132' und 130' zum Kondensator 126 fließt und diesen auflädt. Dabei wird die in der Wicklung 102 gespeicherte Energie E fast vollständig in den Kondensator 126 umgeladen, weshalb dieser sehr groß sein muss, damit nicht die Spannung zwischen den Leitungen 116 und 122 zu stark ansteigt. Die Energie E hängt ab vom Quadrat des Stromes I zum Zeitpunkt 216, und von der Induktivität L der Wicklung 102. Es gilt

$$E = I^2 * L/2 \tag{1}$$

wobei
E = gespeicherte magnetische Energie in der Wicklung 102
I = augenblicklicher Strom in der Wicklung 102
L = Induktivität der Wicklung 102.
Da I beim Abschalten sehr hoch ist, ist auch die in der Wicklung 102 induktiv gespeicherte Energie E sehr hoch.

Diese Energie wird nach dem Abschalten der Wicklung 102 in den Kondensator 126 übertragen. Es handelt sich also um eine Blindleistung, die zwischen dem Kondensator 126 und der Wicklung 102 hin- und herpendelt, und da diese Blindleistung groß ist, muss auch der Kondensator 126 groß sein. Durch die hohen Ströme, die infolge dieser Blindleistung fließen, entstehen auch unnötige Verluste, die den Wirkungsgrad des Motors reduzieren.

Bei der Erfindung soll diese Blindleistung reduziert werden, d.h. möglichst wenig von der Energie aus der Wicklung 102 soll beim Abschalten in den Kondensator 126 zurückfließen, sondern mit dieser Energie soll der Rotor 108 angetrieben werden.

**Die Kommutierungprozedur nach der Erfindung (Fig. 3)**

Aus diesem Grund wird gemäß Fig. 3 eine Kommutierungsprozedur verwendet, die stark vom Herkömmlichen abweicht. Auch bei Fig. 3 steigt der Strom i1 nach dem Einschalten bei 210 stark an und nimmt bei 211 ab. Insofern ist der Verlauf ähnlich wie bei Fig. 2. Unterschiedlich ist aber folgendes:

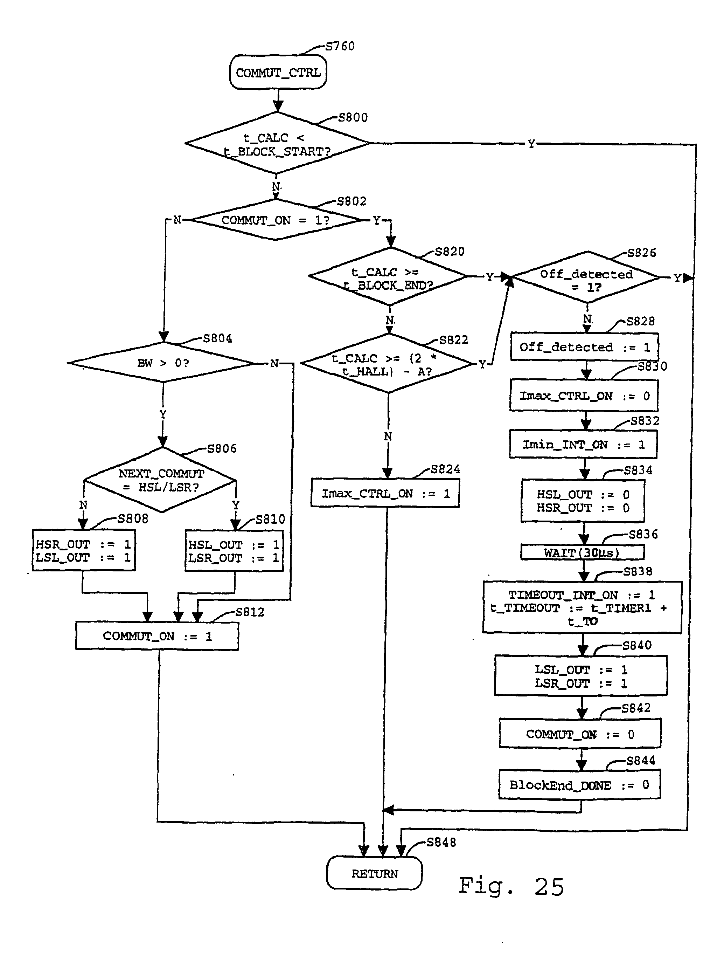

a) Die Energiezufuhr von den Leitungen 116, 122 zur Wicklung 102 wird an einer vom µC 40 berechneten Stelle 214 abgeschaltet, gewöhnlich dort, wo der Motorstrom i1 noch nicht sein Maximum 216 (Fig. 2) erreicht hat. Die Berechnung des Abschaltzeitpunkts 214 ist bei Fig. 30 beschrieben. Abgeschaltet wird dadurch, dass der augenblicklich leitende obere Transistor (entweder 114 oder 130) an der Stelle 214 abgeschaltet wird. Nachfolgend wird bei Fig. 25 beispielhaft beschrieben, wie das geschehen kann.

b) Anschließend an den Zeitpunkt 214, gewöhnlich nach einer kurzen Pause, werden beide unteren Transistoren 132 und 136 leitend gesteuert, vgl. Fig. 25, S840, so dass der Strom i1 durch diese beiden Transistoren weiterhin fließen kann, wobei er im FET 136 vom Drain D zur Source S fließt, was bei einem FET möglich ist. Dies bewirkt eine niederohmige Verbindung zwischen den Anschlüssen 104 und 106 der Wicklung 102, und in dieser Verbindung klingt der Strom i1 längs einer Kurve 220 ab, wobei er weiterhin den Rotor 108 antreibt, also motorische Energie erzeugt.

c) An einer Stelle 222 geht der Strom i1 durch Null und würde danach als generatorischer Strom 224 weiterfließen, wenn die Transistoren 132 und 136 weiterhin leitend sein würden. Dieser Strom 224 ist mit Punkten angedeutet. Da er bremsend wirken würde, ist er unerwünscht.

Um dies zu verhindern, wird durch den OP-Verstärker 202 (Fig. 1) im Bereich der Stelle 222 das Signal Imin erzeugt. Dieses erzeugt einen Imin-Interrupt im µC 40, so dass letzterer sofort alle vier Transistoren 114, 130, 132, 136 der H-Brücke 137 nichtleitend steuert. Dies geschieht bei dem Beispiel gemäß Fig. 3 kurz nach dem Punkt 222.

Da im Zeitpunkt 222 der Strom i1 = 0 ist, ist bei der Abschaltung aller MOSFETs in der Wicklung 102 keine Energie mehr gespeichert. Folglich kann nach dem Abschalten der Wicklung 102 keine Energie von dieser in den Kondensator 126 zurückgespeist werden.

An der Wicklung 102 liegt zu diesem Zeitpunkt nur noch die durch den Rotormagneten 108 induzierte Spannung, die aber zum Zeitpunkt 222 niedrig ist, gewöhnlich nur wenige Volt beträgt, und deshalb nicht stört.

Nach einer kurzen Schaltpause P1 wird dann der Strom i2 eingeschaltet. Der Zeitpunkt für die Einschaltung wird vom µC 40 berechnet, vgl. Fig. 30.

Beim Start des Motors würde es zu lange dauern, bis i1 im Abschnitt 220 den Wert Null erreicht hat, und deshalb wird hier der Strom durch eine spezielle Funktion, genannt TIMEOUT-Funktion, nach einer vorgegebenen Zeit abgeschaltet, z.B. nach 500 bis 800 µs, auch wenn i1 (oder $i_2$) den Wert Null noch nicht erreicht hat. Man überwacht also hier die Zeit T3 ab Erreichen der Stelle 214, an der die oberen Transistoren 114, 130 abgeschaltet werden, ebenso den Strom Imin. Spätestens nach Ablauf von T3 werden alle Transistoren der H-Brücke 137 abgeschaltet, alternativ bei Erzeugung des Imin-Interrupts, wenn dieser früher auftritt als das Ende von T3. T3 liegt typisch im Bereich 500 bis 800 μs.

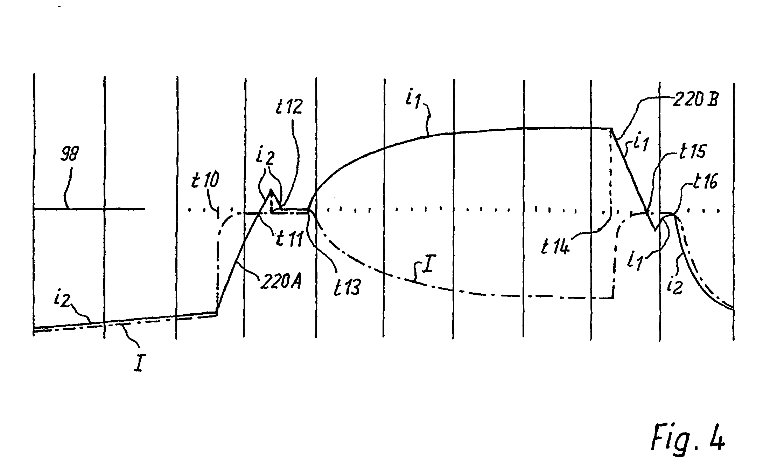

**Fig. 4** zeigt den Strom durch die Wicklung 102, wie er im Betrieb tatsächlich gemessen wird, und zum Vergleich den Strom I in der Zuleitung 116 (Fig. 1). Der Strom durch die Wicklung 102 ändert bei der Drehung des Rotors 108 seine Richtung, während der Strom I nur in einer Richtung fließt. Der Strom I ist zur besseren Vergleichbarkeit nach unten aufgetragen, bezogen auf eine Nulllinie 98.

Zu einem Zeitpunkt t10 erhält der Strom i2 hier seinen Abschaltbefehl, so dass der obere Transistor 130 gesperrt wird und nach einer kurzen Verzögerung beide unteren Transistoren 132, 136 eingeschaltet werden, wodurch der Strom i2 längs einer Kurve 220A abklingt.

Zu einem Zeitpunkt t11 geht der Strom i2 durch Null, und zu einem Zeitpunkt t12 wird der bereits beschriebene Imin-Interrupt wirksam, durch den alle vier Transistoren 114, 130, 134, 138 gesperrt werden, so dass in der Wicklung 102 ab einem Zeitpunkt kurz nach t12 bis zu einem Zeitpunkt t13 kein Strom fließt.

Zum Zeitpunkt t13, der im μC 40 errechnet wird, vgl. Fig. 30, wird der Strom $i_1$ eingeschaltet, indem die Transistoren 114 und 138 leitend gesteuert werden, so dass der Strom i1 in der dargestellten Weise ansteigt. Zu einem Zeitpunkt t14, der im μC 40 berechnet wird, wird $i_1$ abgeschaltet, indem der obere Transistor 114 gesperrt wird, und die unteren Transistoren 132, 136 werden beide leitend gesteuert, so dass der Strom i1 längs einer Kurve 220B abnimmt und zum Zeitpunkt t15 den Wert Null erreicht. Kurz danach wird der Imin-Interrupt wirksam und sperrt alle vier Transistoren 114, 130, 132, 136 bis zu einem Zeitpunkt t16, an dem die Transistoren 130 und 132 eingeschaltet werden, damit der Strom i2 fließen kann.

Wie Fig. 4 zeigt, ist links von t10 der Strom I in der Zuleitung 116 identisch mit dem Strom i2 in der Wicklung 102.

Zum Zeitpunkt t10 kann kein Strom I aus der Plusleitung 116 mehr fließen, da der obere Transistor 130 geöffnet ist und die beiden unteren Transistoren 132, 136 leiten, so dass der Strom i2 nur durch diese beiden Transistoren weiterfließt. Deshalb bleibt der Strom I praktisch von t10 bis t13 auf dem Wert Null.

Ab t13 bis t14 verläuft I spiegelbildlich zu $i_1$, d.h. beide Ströme sind dem Betrag nach gleich groß. Von t14 bis t16 hat I den Wert Null, und ab t16 hat I wieder praktisch denselben Wert wie $i_2$, wobei möglicherweise kurz nach t16 zusätzlich etwas Energie aus dem Kondensator 126 zugeliefert wird.

Durch die Erfindung vermeidet man also weitgehend, dass Energie zwischen der Wicklung 102 und dem Kondensator 126 hin und her pendelt, so dass der Kondensator 126 entsprechend kleiner bemessen werden kann.

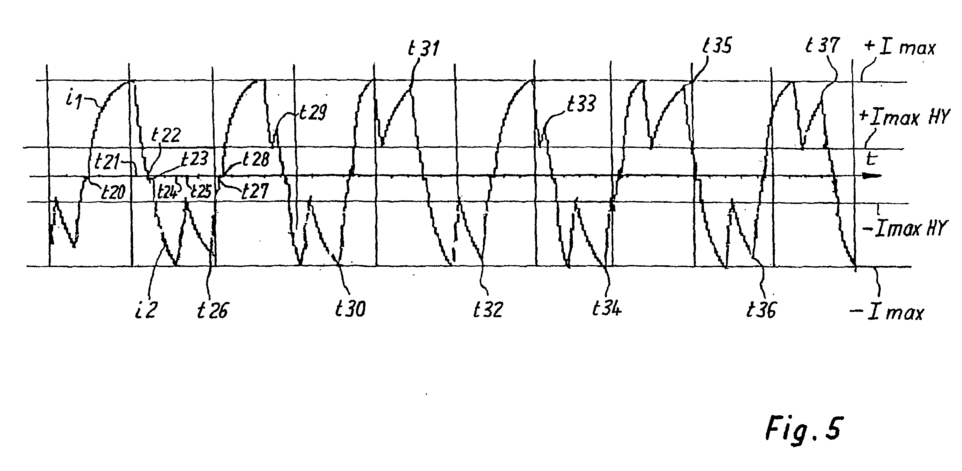

**Fig. 5** zeigt an einem Oszillogramm einen typischen Verlauf der Ströme bei Einsetzen der Strombegrenzung. Diese begrenzt die Ströme $i_1$ und $i_2$ bei diesem Ausführungsbeispiel auf einen Wert Imax von 3A.

Bei t20 beginnt der Strom $i_1$. Durch die Kommutierungssteuerung im μC 40 wird an einem Zeitpunkt t21 der Strom i1 durch Öffnen des Transistors 114 unterbrochen, und durch Schließen der beiden Transistoren 132, 136 wird die Wicklung 102 ab t21 bis zu einem Zeitpunkt t22 kurzgeschlossen.

Ab t23 werden die Transistoren 130, 132 eingeschaltet, damit ein Strom $i_2$ fließt. Dieser steigt rasch auf den negativen Strom-Grenzwert -Imax an. Dort wird zum Zeitpunkt t24 der obere Transistor 130 durch das Signal Imax gesperrt, so dass der Strom $i_2$ bis zu einem Zeitpunkt t25 fällt, wobei beide Transistoren 132, 136 leitend gesteuert werden. Bei t25 schaltet der Transistor 188 das Signal Imax wieder ab, da i2 auf 1,6 A gefallen ist, so dass i2 erneut ansteigt, weil der Transistor 130 wieder leitend wird.

Zu einem Zeitpunkt t26 wird durch die Kommutierungssteuerung der Transistor 130 geöffnet, und beide unteren Transistoren 132, 136 werden eingeschaltet, so dass $i_2$ bei t27 den Wert Null erreicht. Bei t28 wird erneut $i_1$ eingeschaltet, indem die Transistoren 114 und 136 leitend gesteuert werden.

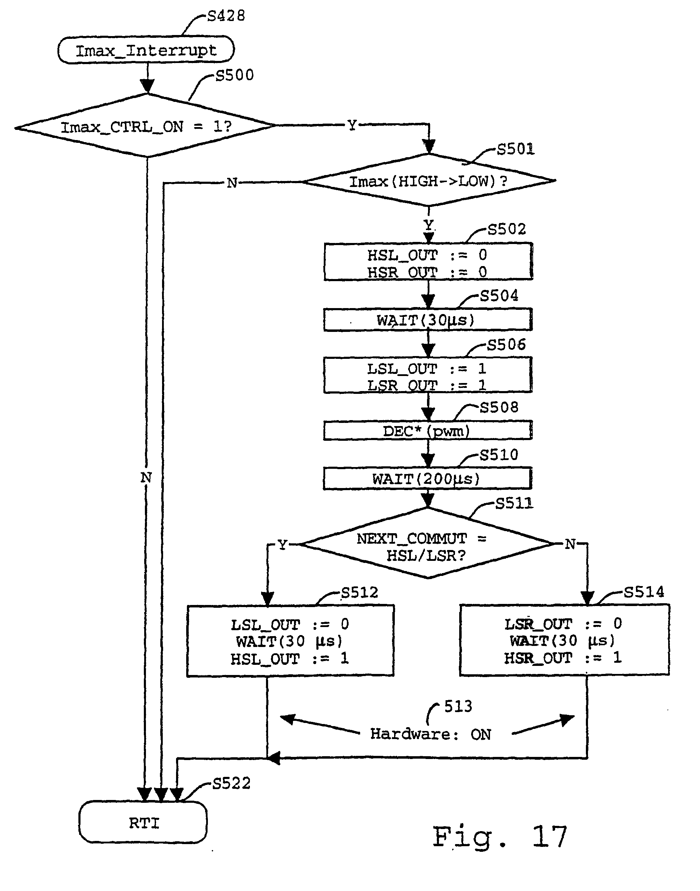

Jedes Mal, wenn das Signal Imax niedrig wird, wird das Tastverhältnis pwm des Signals PWM etwas reduziert, vgl. S508 in Fig. 17, so dass nach ein paar Umdrehungen die Werte +Imax und -Imax nicht mehr erreicht werden und man wieder die "glatte" Stromform gemäß Fig. 3 erhält. Während der maximale Strom wieder unter Imax (3 A) gesenkt wird, wird der Wert BW durch den Regler (Fig. 30) vergrößert, sofern das möglich ist, und auch das Tastverhältnis pwm wird ggf. langsam erhöht, bis der Motor wieder normal, also mit der gewünschten Drehzahl, läuft. Ggf. kann sich der Vorgang auch wiederholen, d.h. das Signal Imax kann erneut auftreten, wenn pwm zu stark erhöht wird.

In Fig. 5 sind die Stellen, an denen die Kommutierungssteuerung den betreffenden Strom unterbricht, mit t29 bis t37 bezeichnet. Die Werte, bei denen die Strombegrenzung einsetzt, sind mit +Imax und -Imax bezeichnet, und die Stromwerte infolge Schalthysterese sind mit +ImaxHY und -ImaxHY bezeichnet. Beim Ausführungsbeispiel ist Imax = 3 A, und ImaxHY = 1,6 A.

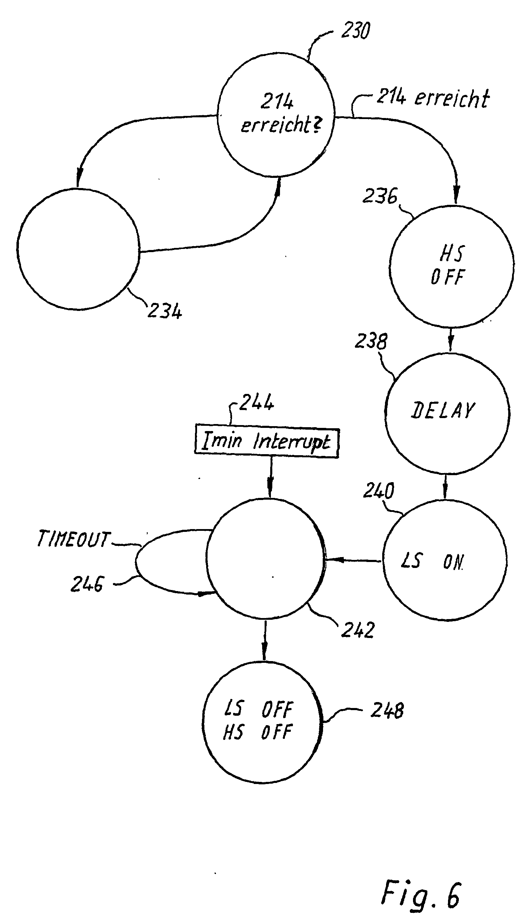

**Fig. 6** zeigt die beschriebenen Vorgänge nochmals anschaulich anhand eines Zustandsdiagramms. Bei 230 befindet sich der Motor 100 im Bereich 210, 211 der Fig. 3, und es wird überwacht, ob der Punkt 214 erreicht ist, an dem die Energiezufuhr von den Leitungen 116, 122 zum Motor 100 beendet werden soll.

Wird bei 230 festgestellt, dass das Ende der Bestromung noch nicht erreicht ist, so wird im Zustand 234 die Bestromung fortgesetzt, und anschließend wird erneut bei 230 überwacht, ob der Zeitpunkt 214 erreicht ist. Ist dies der Fall, so geht der Motor 100 in den Zustand 236 HS OFF, wo beide oberen Transistoren 114, 130 abgeschaltet werden, was die Energiezufuhr zum Motor 100 unterbricht.

Anschließend geht das Programm in eine kurze Verzögerung DELAY 238 und schaltet dann im Zustand LS ON 240 beide unteren Transistoren 132, 136 ein, so dass die Wicklung 102 im wesentlichen im Kurzschluss betrieben wird und der Strom längs der Kurve 220 (Fig. 3) abklingt. Dies wird im anschließenden Zustand 242 ("Warten, bis Strom auf Null gefallen ist") überwacht. Dabei treibt der Strom in der Wicklung 102 weiterhin den Rotor 108 an.

Erreicht der Strom den Wert Null, so wird durch den Komparator 202 ein Signal Imin erzeugt und bewirkt einen Imin-Interrupt 244.

Gleichzeitig wird bei 246 in der Funktion TIMEOUT überwacht, ob die vorgegebene Zeit T3 (Fig. 3) abgelaufen ist.

Das frühere von beiden Ereignissen (TIMEOUT 246 oder Imin-Interrupt 244) bewirkt den Übergang zum Zustand 248, also die komplette Abschaltung aller vier Transistoren der H-Brücke 137 (LS OFF & HS OFF). In diesem Zustand kann die kinetische Energie des Rotors 108 nicht generatorisch in den Kondensator 126 transportiert werden, weil der Augenblickswert der durch den Rotor 108 generatorisch erzeugten Spannung niedriger ist als die Spannung zwischen den Leitungen 116 und 122.

Durch ein geschicktes Energiemanagement wird also hier das eingangs beschriebene "Atmen" des Motors 100 weitgehend unterbunden, d.h. im normalen Lauf des Motors 100 fließt nur wenig Blindleistung zwischen der Wicklung 102 und dem Kondensator 126 hin und her. Da jedoch die Erzeugung des Imin-Interrupts 244 wegen der Zeitdauer der erforderlichen Rechenschritte nicht exakt zum Zeitpunkt 222 (Fig. 3) des Nulldurchgangs erfolgen kann, sondern etwas danach, wird nach wie vor ein Kondensator 126 benötigt, um Energie aus dem Motor zwischenzuspeichern, doch kann er kleiner sein als bisher. Dieser Kondensator wird auch benötigt, um beim Abschalten des Motors Energie aufzunehmen und einen zu hohen Anstieg der Spannung zwischen den Leitungen 116 und 122 zu vermeiden.

**Die Funktion der Maximalstromerkennung**

Die Maximalstromerkennung mittels der Komparatoren 172 und 198 wurde bereits bei Fig. 1, 3, 4 und 5 beschrieben. Sie erzeugt das Signal Imax, das über die Verknüpfungsglieder 152, 160 (Fig. 1) direkt auf die oberen Transistoren 114, 130 wirkt und bei Überstrom den im Augenblick leitenden Transistor 114 oder 130 sofort abschaltet. Außerdem wird das Signal Imax auch dem µC 40 zugeführt und erzeugt dort einen Imax-Interrupt. Durch diesen werden u.a. Programmschritte initiiert, die bei nachfolgenden Stromimpulsen den Strom durch die Wicklung 102 so weit absenken, dass kein Überstrom mehr entsteht.

Übersteigt nämlich der Strom durch die Messwiderstände 134, 138 einen am Widerstand 176 eingestellten Wert (in Fig. 1 als Uref bezeichnet), so wird im µC 40 ein Imax-Interrupt erzeugt, und die oberen Transistoren 114, 130 werden direkt durch Hardware abgeschaltet. Nach Ablauf einer kurzen Verzögerung werden beide unteren Transistoren 132, 136 eingeschaltet, so dass die Anschlüsse 104, 106 der Wicklung 102 durch die beiden FETs 132, 136 kurzgeschlossen werden. Die anschließenden Programmschritte hängen wesentlich von Art und Drehzahl des Motors ab, d. h. es sind verschiedene Varianten möglich.

Bei einer Variante wird, wenn der Strom in der Wicklung 102 den Wert Null erreicht, in der bereits beschriebenen Weise der Imin-Interrupt 244 erzeugt. Als Sicherheit wird zusätzlich die Zeit ab LS ON 240 (Fig. 6) durch die bereits beschriebene Funktion TIMEOUT 246 gemessen.

Wenn die Zeit TIMEOUT abgelaufen ist, bevor der Imin-Interrupt 244 erzeugt wird, bewirkt das den Befehl OFF für die beiden unteren Transistoren 132, 136. Falls der Imin-Interrupt früher kommt, bewirkt er das Signal LS OFF (OFF = AUS). Nach einer Verzögerung wird dann die Bestromung der Wicklung 102 fortgesetzt, d.h. wenn in der augenblicklichen Drehstellung des Rotors 108 der Strom in der Wicklung 202 von 104 nach 106 fließen soll, werden die Transistoren 114, 136 wieder eingeschaltet und die Transistoren 130, 132 bleiben ausgeschaltet. Bei einem Strom in der umgekehrten Richtung (von 106 nach 104) gilt analog das Umgekehrte.

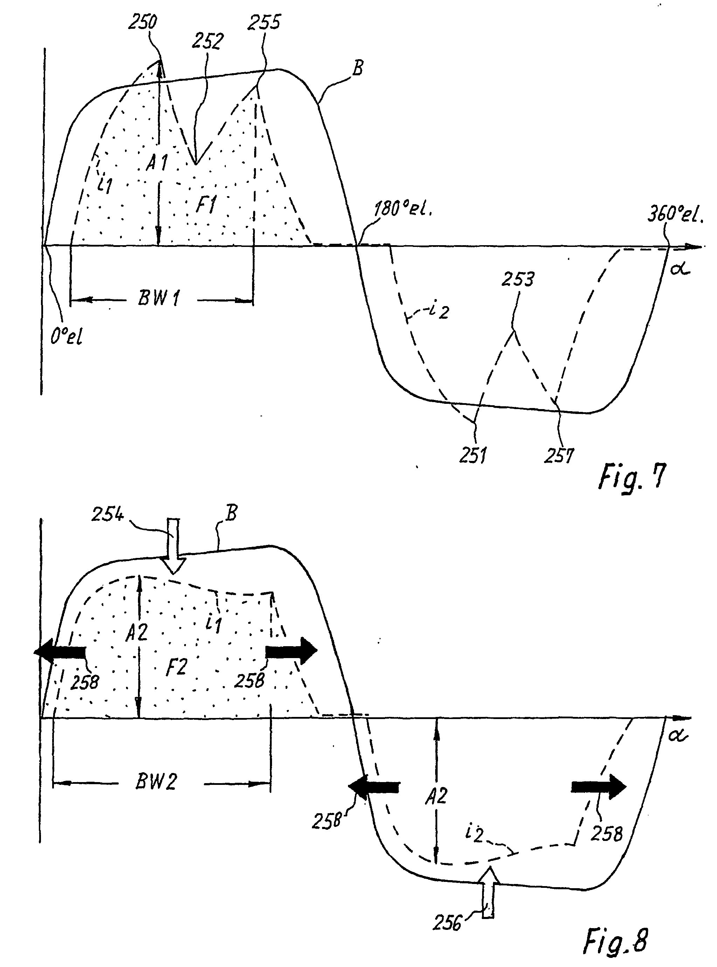

**Fig. 7** zeigt schematisch Stromimpulse i1, i2, deren Amplitude A1 an den Stellen 250, 251 den Strom Imax (3 A) erreicht, so dass an diesen Stellen die Strombegrenzung einsetzt und der Strom bis zu einer Stelle 252 bzw. 253 fällt. Dort wird der Strom wieder eingeschaltet, weil das (low-aktive) Signal Imax nicht mehr erzeugt wird, und steigt wieder an bis zu Stellen 255 bzw. 257, wo der Abschaltbefehl vom µC 40 erteilt wird. - An beiden Stellen 250 und 251 wird das Tastverhältnis pwm durch den Programmschritt S508 der Fig. 17 reduziert, um die Amplitude A1 zu reduzieren.

Gemäß **Fig. 8** hat diese Reduzierung des Tastverhältnisses pwm zur Folge, dass - nach einer zeitlichen Verzögerung - die Amplitude A2 des Stroms im Motor 100 auf einen Wert reduziert wird, der unter 3 A liegt, wie das durch die hellen Pfeile 254, 256 der Fig. 8 symbolisiert wird. In Fig. 7 hat die Blocklänge eines Impulses den Wert BW1, nämlich die Zeit vom Einschaltbefehl bis zum Ausschaltbefehl für diesen Impuls.

Als Kompensation für die Reduzierung der Amplitude von A1 auf A2 wird in Fig. 8 die Blocklänge BW für die Steuerung der Impulse i1, i2 auf einen Wert BW2 verlängert, wie das durch die dunklen Pfeile 258 symbolisch angedeutet ist, so dass sich an der dem Motor 100 zugeführten Energie nichts ändert, d.h. die Fläche F1 unter der Kurve i1 der Fig. 7 entspricht im wesentlichen der Fläche F2 unter der Kurve i1 der Fig. 8. Didaktisch kann man sich das so vorstellen, dass durch eine Kraft 254, 256 in Fig. 8 die Impulse i1, i2 etwas in die Breite gepresst werden, so dass die Amplitude A1 nicht mehr erreicht wird, wobei die geringere Amplitude A2 der Ströme i1, i2 in Fig. 8 dadurch kompensiert wird, dass deren Blocklänge BW2 zunimmt.

Dies ist deshalb wichtig, weil bei einer Überschreitung des Maximalstroms die Verluste - durch die bei Fig. 5 beschriebenen Vorgänge - ansteigen und die Gefahr besteht, dass die MOSFETs überlastet werden. Auch läuft der Motor 100 ruhiger, wenn er mit einem Strom unterhalb seines eingestellten Maximalstroms betrieben wird. Naturgemäß dürfen die Impulse i1 und i2 nur eine Blocklänge BW von etwas weniger als 180° el. erreichen, da sonst ein Brückenkurzschluss auftreten könnte.

Wenn die Blocklänge BW der Impulse i1, i2 zu groß wird, wird sie durch die Software des Motors verkürzt, und zur Kompensation wird in diesem Fall die Amplitude erhöht, d.h. der Motor geht dann tendenziell vom Zustand gemäß Fig. 8 zum Zustand gemäß Fig. 7. Für diesen Fall kehrt sich die Richtung der Pfeile 254, 256, 258 um.

Beim Anlauf kann ggf. durch die Strombegrenzung der Anlaufstrom begrenzt werden, doch ist auch ein Anlauf ohne Überstrom in der Weise möglich, dass man das Tastverhältnis pwm des Signals PWM (Fig. 1) nach Art einer Rampe langsam erhöht.

Für die Realisierung der Erfindung wird durch die Software des Motors berechnet

a) welches Tastverhältnis pwm das Signal PWM im Augenblick haben soll,
b) zu welchem Zeitpunkt ein Stromimpuls eingeschaltet werden muss, und
c) zu welchem Zeitpunkt ein Stromimpuls abgeschaltet werden muss.

Dies wird nachfolgend näher erläutert.

Die Blocklänge BW wird beim Ausführungsbeispiel von einem Drehzahlregler berechnet, der nachfolgend bei Fig. 30 beschrieben wird. BW wird also für die Berechnung vorgegeben und ist unabhängig vom Tastverhältnis pwm des Signals PWM. (Naturgemäß kann bei der Berechnung von BW das Tastverhältnis auch voll oder teilweise berücksichtigt werden, doch ergibt sich ohne eine solche Berücksichtigung ein kürzeres Programm, was bei einem Motor wichtig ist.)

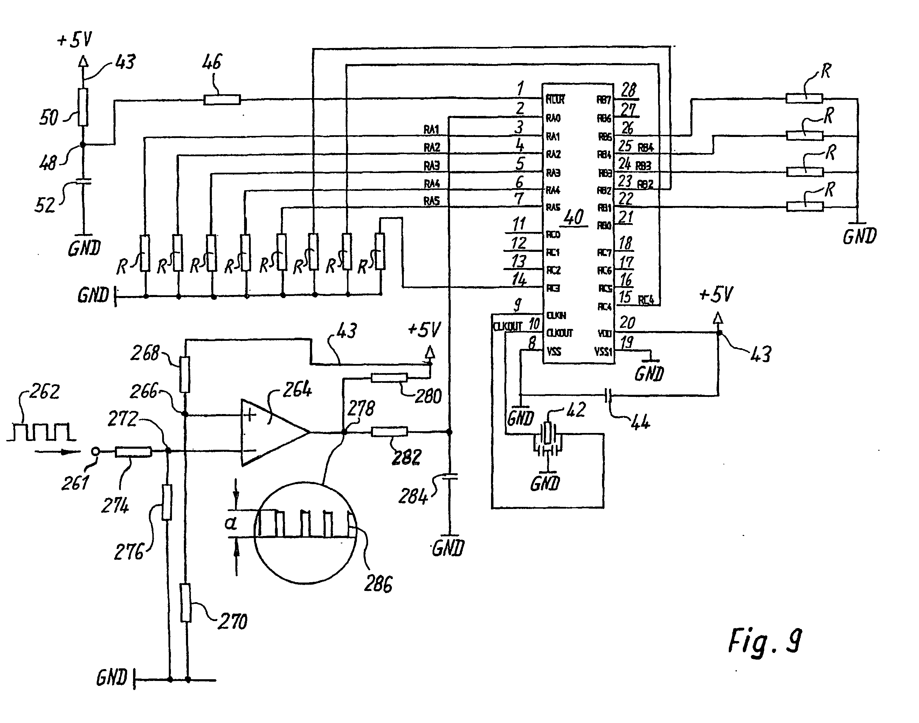

**Fig. 9** zeigt einen Teil der Beschaltung des beim Ausführungsbeispiel verwendeten Mikrocontrollers (μC) 40, hier vom Typ PIC16C72A der Firma Arizona Microchip. Dieser arbeitet hier mit einer Taktfrequenz von 4 MHz. Er hat 28 Eingänge 1 bis 28, die wie folgt bezeichnet sind:

| 1 | MCLR/ (Reseteingang) |
|---|---|
| 2 bis 7 | RA0 ... RA5 |
| 8 | VSS (Masseanschluss) |
| 9 | CLKIN |
| 10 | CLKOUT |
| 11 bis 18 | RC0...RC7 |
| 19 | VSS1 (Masseanschluss) |
| 20 | VDD (+ 5 V) |
| 21 bis 28 | RB0 ... RB7 |

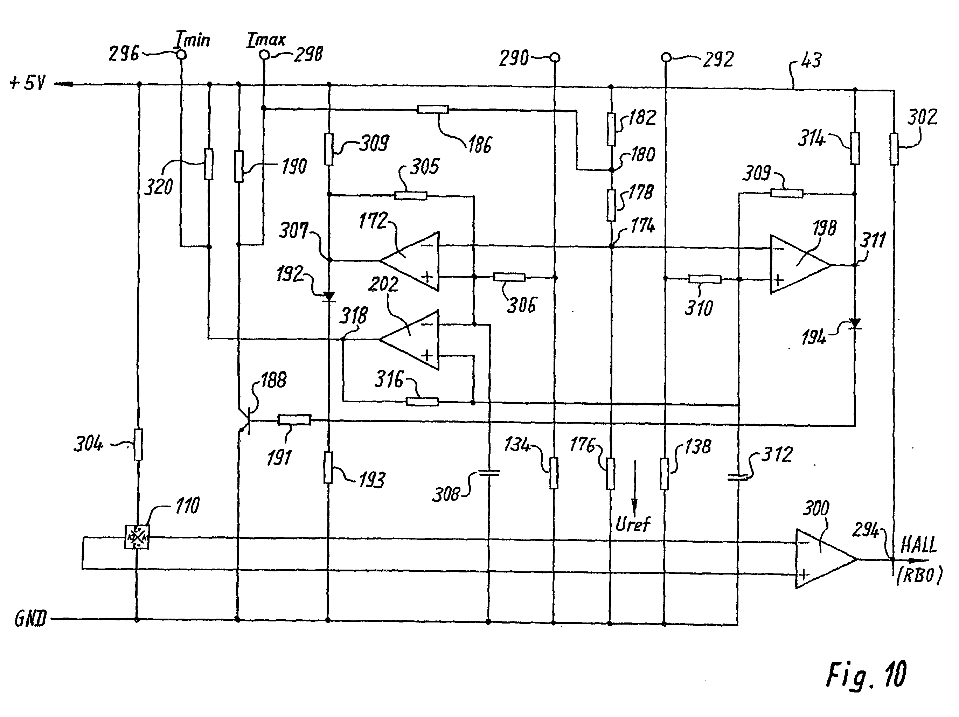

Die Anschlüsse RA1 bis RA5, RC3, RC4 und RB1 bis RB5 sind jeweils über einen Widerstand R (10kΩ) mit Masse GND verbunden, da diese Anschlüsse nicht verwendet werden. Diese Widerstände sind in Fig. 10 nicht dargestellt, damit dort die Darstellung übersichtlicher wird.

Die Anschlüsse CLKIN und CLKOUT sind mit einem Schwingquarz 42 verbunden. Die Anschlüsse VSS und VSS1 liegen an Masse, der Anschluss VDD an einer Plusleitung mit + 5 V (geregelt). Zwischen den Anschlüssen VDD und VSS liegt ein Siebkondensator 44 (z.B. 100 nF).

Der Reseteingang MCLR/ ist über einen Widerstand 46 mit einem Knotenpunkt 48 verbunden, der über einen Widerstand 50 mit + 5 V und über einen Kondensator 52 mit GND verbunden ist. Der Kondensator 52 ist beim Einschalten entladen, so dass der Eingang MCLR/ dann das Potenzial 0 V hat, was einen Resetvorgang beim Einschalten auslöst. Danach lädt sich der Kondensator 52 über den Widerstand 50 auf 5 V auf.

RA0 ist der Eingang eines prozessorinternen A/D-Wandlers im μC 40. Diesem Eingang kann eine Spannung zwischen 0 und 4,5 V (Vcc) zugeführt werden, und diese wird in ein digitales Signal umgesetzt. Das Signal an RA0 entspricht der gewünschten Drehzahl. Letztere wird einem Eingang 261 als PWM-Signal 262 zugeführt, dessen Tastverhältnis pwm die Drehzahlinformation enthält.

Ein Komparator 264 dient dazu, das PWM-Signal 262 zu verarbeiten und auf eine geregelte Amplitude a zu standardisieren. Sein + Eingang ist an einen Knotenpunkt 266 angeschlossen, der über einen Widerstand 268 an eine geregelte Spannung von + 5 V angeschlossen ist, mit der auch der µC 40 versorgt wird, und über einen Widerstand 270 an GND. Die Widerstände 268, 270 sind so gewählt, dass am Knotenpunkt 266 ein Potenzial von +2,3 V liegt.

Der Minuseingang des Verstärkers 264 ist an einen Knotenpunkt 272 angeschlossen, der über einen Widerstand 274 mit dem Eingang 261 und über einen Widerstand 276 mit GND verbunden ist. Die Widerstände 274, 276 können gleich groß sein.

Der Ausgang 278 des Verstärkers 264 ist über einen Pullup-Widerstand 280 mit +5 V und über einen Widerstand 282 mit RA0 verbunden. Zwischen RA0 und GND liegt ein Kondensator 284. Die Bauteile 282 und 284 bilden zusammen einen Tiefpass.

Das Signal 262 wird durch den Verstärker 264 invertiert, vgl. das Signal 286 am Ausgang 278, welches eine konstante Amplitude a hat, und dieses Signal 286 wird vom Tiefpass 282, 284 zu einer Gleichspannung geglättet, welche dem Eingang RA0 zugeführt und dort bei jeder Abfrage in einen digitalen Wert umgesetzt wird. Da das Signal 286, anders als das Signal 262, eine definierte Amplitude a hat, wird sein Tastverhältnis in eine definierte Gleichspannung und in einen definierten digitalen Wert umgesetzt.

Alternativ kann das Signal am Eingang RA0 auf beliebige andere Weise erzeugt werden, z.B. mittels eines Potentiometers. Bei diesem Prozessor entspricht die maximale Amplitude an RA0 5 V. Dies entspricht der internen A/ D-Referenz.

Der µC 40 hat einen Ringzähler TIMER1 sowie ein RAM und ein ROM. Zusätzlich kann noch ein externes RAM, EEPROM oder dgl. vorgesehen sein, wie das für den Fachmann selbstverständlich ist.

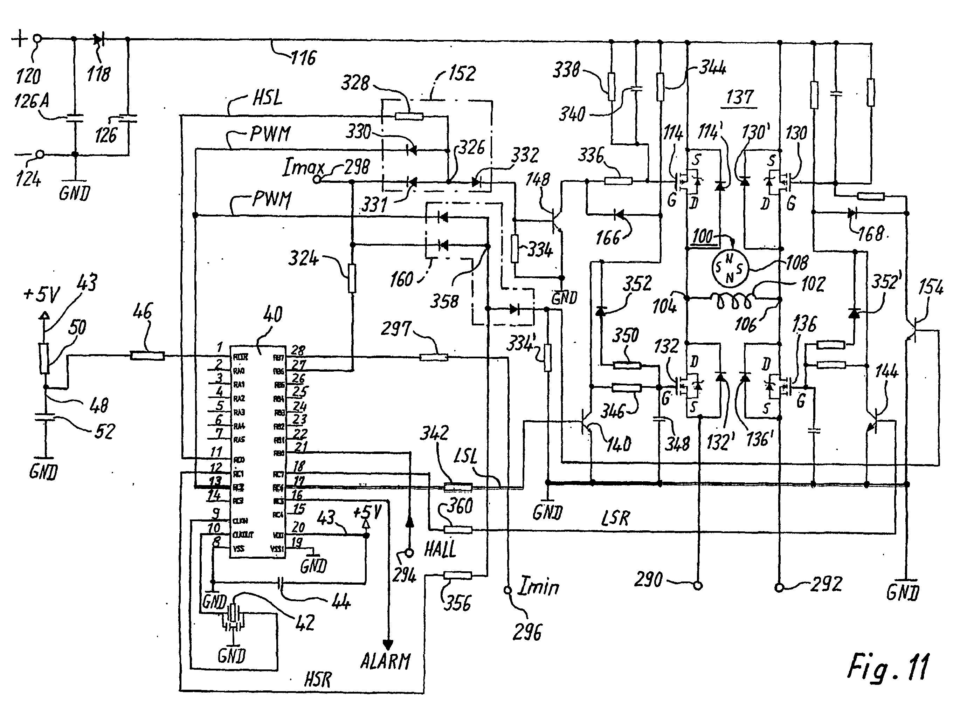

Die Fig. 10 und 11 zeigen ein detailliertes Ausführungsbeispiel für die Schaltung der Fig. 1. Fig. 10 zeigt die Hardware zur Erkennung von Imax und Imin, sowie den Hallgenerator 110. Fig. 11 zeigt den µC 40 und die von ihm gesteuerte H-Brücke 137. Gleiche oder gleich wirkende Teile wie in den vorhergehenden Figuren werden mit denselben Bezugszeichen bezeichnet wie dort und gewöhnlich nicht nochmals beschrieben.

Die Übergänge von Fig. 10 zu Fig. 11 sind mit 290, 292 (für die H-Brücke 137), 294 für das Signal HALL, 296 für das Signal Imin und 298 für das Signal Imax bezeichnet. Diese sind auch in Fig. 1 eingezeichnet.

**Fig. 10** zeigt den Hallgenerator 110, dessen Ausgangssignal mittels eines Komparators 300 verstärkt wird, dessen Ausgang 294 über einen Pullup-Widerstand 302 mit der Plusleitung 43 (+ 5 V, geregelt) verbunden ist. Die rechteckförmigen Signale HALL werden dem Eingang RB0 des µC 40 zugeführt. Jede Flanke dieses Signals bewirkt dort einen Hall-Interrupt, vgl. Fig. 16. Der Hallgenerator 110 wird über einen Widerstand 304 mit Strom von der Leitung 43 versorgt.

Der Pluseingang des Komparators 172 ist über einen Widerstand 305 mit seinem Ausgang 307, über einen Widerstand 306 mit dem Punkt 290, ferner mit dem Minuseingang des Komparators 202, und über einen Kondensator 308 mit GND verbunden. Widerstand 306 und Kondensator 308 bilden zusammen den Tiefpass 170 der Fig. 1. Der Ausgang 307 ist über einen Widerstand 309 mit der Plusleitung 43 verbunden.

Ebenso ist der Pluseingang des Komparators 198 über einen Widerstand 309 mit seinem Ausgang 311, über einen Widerstand 310 mit dem Punkt 292, mit dem Pluseingang des Komparators 202, und über einen Kondensator 312 mit GND verbunden. Widerstand 310 und Kondensator 312 bilden zusammen den Tiefpass 196 der Fig. 1. Der Ausgang 311 ist über einen Widerstand 314 mit der Plusleitung 43 verbunden.

Die Minuseingänge der Komparatoren 172, 198 sind mit dem Knotenpunkt 174 verbunden, an dem das Vergleichspotenzial Uref am Widerstand 176 liegt.

Der Pluseingang des Komparators 202 ist über einen Widerstand 316 mit seinem Ausgang 318 verbunden, der über einen Widerstand 320 mit der Plusleitung 43 verbunden ist.

Das Signal Imin erhält man am Ausgang 318 des Komparators 202. Es wird über einen Widerstand 297 dem Port RB7 des µC 40 zugeführt. Der Ausgang 318 ändert beim Nulldurchgang des Motorstroms sein Potenzial, wie bereits beschrieben, und die Schaltflanke beim Übergang bewirkt im µC 40 einen Imin—Interrupt, vgl. nachfolgend Fig. 19.

Wenn durch einen Statorstrom von z.B. 3 A der Spannungsabfall am Widerstand 134 größer wird als die Spannung Uref am Widerstand 176, wird der Ausgang des Komparators 172 hochohmig und erhält ein hohes Potenzial. Dadurch fließt über den Widerstand 309 und die Diode 192 ein Basisstrom zum Transistor 188 und macht diesen leitend, wodurch das Signal Imax am Punkt 298 niedrig wird und dadurch das Potenzial an den Knotenpunkten 180 und 174 reduziert. Dies bewirkt die bereits beschriebene Schalthysterese, d.h. die Spannung Uref wird entsprechend kleiner, so dass das Signal Imax erst dann wieder hoch wird, wenn der Strom im Widerstand 134 z.B. auf 1,6 A gesunken ist. Die Katoden der Dioden 192, 194 sind über einen gemeinsamen Widerstand 193 mit GND verbunden.

Wegen der Symmetrie der Anordnung gilt dasselbe, wenn der Statorstrom durch den Widerstand 138 den Wert 3 A überschreitet. Auch in diesem Fall wird der Transistor 188 leitend, bewirkt die beschriebene Schalthysterese, und erzeugt ein niedriges Signal Imax am Anschluss 298, das erst wieder hoch wird, wenn dieser Strom z.B. auf 1,6 A gesunken ist.

Das Signal Imax wird gemäß Fig. 11 direkt den Verknüpfungsgliedern 152, 160 zugeführt und sperrt über diese die oberen MOSFETs 114, 130. Es wird außerdem über einen Widerstand 324 dem Eingang RB6 des µC 40 zugeführt. Hierdurch werden beide Signale HSL und HSR auf niedrig geschaltet, so dass einer der oberen Transistoren 114, 130 erst dann wieder einschalten kann, wenn

    a) das Signal Imax wieder hoch geworden ist und
    b) das zugeordnete Signal HSL oder HSR ebenfalls wieder hoch geworden ist.

Auf diese Weise erreicht man folgendes:

- Bei Erzeugung des Signals Imax, z.B. bei einem Strom von 3 A, werden die oberen Transistoren 114, 130 direkt über die Hardware gesperrt, und kurz danach, zusätzlich, durch den µC 40.
- Nach Ende des Signals Imax kann der µC 40 die Kontrolle über die oberen Transistoren 114, 130 behalten und diese z.B. weiterhin sperren, falls die Zeit BW (Fig. 7 und 8) abgelaufen ist.

Gemäß Fig. 11 hat das Verknüpfungsglied 152 einen Knotenpunkt 326, der über einen Widerstand 328 mit dem Port RC0 des µC 40 verbunden ist und von dort das Signal HSL für die Kommutierung erhält. Ferner sind mit dem Knotenpunkt 326 die Anoden von drei Dioden 330, 331, 332 verbunden. Die Katode der Diode 330 ist mit dem Port RC2 verbunden, an dem ständig ein PWM-Signal PWM (20 KHZ) erzeugt wird, dessen Tastverhältnis pwm durch Softwarebefehle veränderbar ist. Die Katode der Diode 331 ist mit dem Punkt 298 verbunden, dem das Signal Imax zugeführt wird. Die Katode der Diode 332 ist mit der Basis des npn-Transistors 148 und über einen Widerstand 334 mit GND verbunden. Der Emitter des Transistors 148 ist mit GND, sein Kollektor über einen Widerstand 336 mit dem Gate G des MOSFET 114 verbunden. Dieses ist über einen Widerstand 338 und einen dazu parallelen Kondensator 340 mit der Leitung 16 verbunden, also der Betriebsspannung des Motors 100, die man auch als Zwischenkreisspannung (voltage on dc link) bezeichnet.

Solange die Dioden 330, 331 nicht leitend sind und vom Port RC0 ein hohes , Signal HSL zugeführt wird, hat der Knotenpunkt 326 ein hohes Potenzial, und die Diode 332 ist leitend und führt dem Transistor 148 einen Basisstrom zu, so dass dieser leitet und über die Widerstände 338, 336 ein Strom fließt, so dass am Gate G des Transistors 114 ein Signal erzeugt wird, das um einige Volt negativer ist als das Signal an seiner Source S, so dass der Transistor 114 voll einschaltet. Der Kondensator 340 bewirkt eine kleine Verzögerung der Schaltvorgänge und verhindert Oszillationen.

Dabei erhält auch die Katode der Verriegelungsdiode 166 das Potenzial GND, so dass dem Gate G des MOSFET 132 kein positives Potenzial zugeführt werden kann, um diesen einzuschalten, d.h. die Transistoren 114, 132 sind gegeneinander verriegelt.

Wird das Potenzial des Knotenpunkts 326 niedrig, z.B. weil eine der Dioden 330, 331 leitend oder vom Port RC0 ein niedriges Signal HSL zugeführt wird, sperrt die Diode 332, so dass der Transistor 148 keinen Basisstrom mehr erhält und sperrt. Dadurch erhält das Gate G des MOSFET 114 über den Widerstand 338 das Potenzial der Plusleitung 116, so dass der MOSFET 114 sperrt. Die Katode der Verriegelungsdiode 166 erhält hierdurch ein hohes Potenzial, so dass nunmehr der untere MOSFET 132 eingeschaltet werden kann.

Das Signal LSL vom Port RC6 wird über einen Widerstand 342 der Basis des npn-Transistors 140 zugeführt. Solange dieses Signal hoch ist oder die Katode der Verriegelungsdiode 166 auf einem niedrigen Potenzial liegt, liegt am Kollektor des Transistors 140 ein niedriges Potenzial, welches über einen Widerstand 346 dem Gate des MOSFET 132 zugeführt wird und diesen sperrt. Dieses Gate ist über einen Kondensator 348 mit GND verbunden, um die Schaltvorgänge etwas zu verzögern..

Wenn das Signal LSL am Port RC6 niedrig ist, wird der Transistor 140 gesperrt. Sofern das Potenzial an der Katode der Diode 166 hoch ist, erhält man jetzt über den Widerstand 344 ein hohes Potenzial am Kollektor des Transistors 140, und dieses macht über den Widerstand 346 den MOSFET 132 leitend. Über einen Widerstand 350 und eine Diode 352 ist das Gate des MOSFET 132 mit der Anode der Diode 166 verbunden, und wenn deren Katode auf GND liegt, wird ein positives Potenzial am Gate des MOSFET 132 sofort über den Widerstand 350, die Diode 352 und die Diode 166 nach GND entladen, so dass der MOSFET 132 sperrt. Da der Widerstand 350 bevorzugt kleiner ist als der Widerstand 346, kann das Verhältnis von Ladezeitkonstante zu Entladezeitkonstante variiert werden. Diese Konstanten sind auch eine Funktion der Gate-Kapazität und sonstiger Kapazitäten in der Schaltung.

Die rechte Hälfte der Schaltung gemäß Fig. 11 ist völlig symmetrisch zur linken Hälfte aufgebaut und wird deshalb nicht gesondert beschrieben, da der Fachmann aus der detaillierten Beschreibung der linken Hälfte sofort versteht, wie die rechte Hälfte arbeitet. Z.B. entspricht der Diode 352 auf der linken Hälfte eine Diode 352' auf der rechten Hälfte. Die rechte Verriegelungsdiode 168 hat die gleiche Arbeitsweise wie die Verriegelungsdiode 166 auf der linken Seite und verhindert, dass die MOSFETs 130 und 136 gleichzeitig leitend sind. Das Signal HSR wird vom Port RC1 über einen Widerstand 356 einem Knotenpunkt 358 im Verknüpfungsglied 160 zugeführt, und das Signal LSR wird vom Port RC7 über einen Widerstand 360 der Basis des npn-Transistors 144 zugeführt. Am Port RC5 kann ein Signal ALARM erzeugt werden, wenn der Motor 100 blockiert, also an einer Drehung gehindert ist.

Die Verriegelungsdioden 166, 168 bewirken vor allem eine Sicherung gegen unkontrollierbare Schaltzustände durch Stromspikes infolge EMV. Die Schaltvorgänge (Einschalten, Ausschalten der MOSFETs) dauern stets eine gewisse Zeit, weil das Gate G des betreffenden Transistors geladen oder entladen werden muss, so dass ein perfekter Schutz nicht möglich ist, aber man erreicht durch diese einfache Maßnahme eine starke Entlastung der Transistoren in der H-Brücke 137, falls solche Spikes auftreten sollten.

**Bevorzugte Werte der Bauelemente in Fig. 10 und 11**

| | |
|---|---|
| Quarz 42 | 4 MHz |
| Kondensator 44 | 100 nF |
| Widerstand 46 | 100 $\Omega$ |
| Widerstand 50, 176, 302, 306, 310, 314, 320 | 10 k$\Omega$ |
| Kondensator 52, 308, 312, 340 | 1 nF |
| Hallgenerator 110 | HW101 G |
| OP-Verstärker 172, 198, 202, 300 | LM2901 P |
| Widerstände 134, 138 | 0,15 $\Omega$ |
| Widerstand 178 | 75 k$\Omega$ |
| Widerstand 182 | 33 k$\Omega$ |
| Widerstand 186 | 15 k$\Omega$ |
| Transistor 188 | BC846B |
| Widerstand 190 | 22 k$\Omega$ |
| Widerstand 191 | 0,1 k$\Omega$ |
| Widerstand 193, 309, 316 | 1 M$\Omega$ |
| Dioden 192, 194 | BAV70 |
| Widerstand 280 | 3,3 k$\Omega$ |
| Widerstand 282 | 6,8 k$\Omega$ |
| Kondensator 284 | 220 nF |
| Widerstand 297 | 2 k$\Omega$ |
| Widerstand 304 | 1,2 k$\Omega$ |
| MOSFETs 114, 130, 132, 136 | IRF7379 |
| (Das Bauteil IRF 7379 enthält einen P-Kanal-MOSFET und einen N-Kanal-MOSFET in demselben Gehäuse.) | |
| Widerstand 328, 338 | 2,2 k$\Omega$ |
| Dioden 330, 331, 332 | BAW56S |
| Widerstand 334, 334', 344 | 5,1 k$\Omega$ |
| Transistoren 140, 144, 148, 154 | BC847BS |
| Widerstand 336 | 1,1 k$\Omega$ |
| Dioden 166, 168, 352, 352' | BAS316 |
| Dioden 114', 118, 130', 132', 136' | SMS2100 |
| Widerstand 350 | 100 $\Omega$ |
| Widerstand 346 | 330 $\Omega$ |
| Kondensator 348 | 4,7 nF |
| Widerstände 342, 360 | 2,7 k$\Omega$ |
| Kondensator 126 | 100 µF, 35 V |
| Kondensator 126A | 100 nF |
| Widerstand 356 | 0,8 $\Omega$ |

Naturgemäß sind dies nur Beispiele, die sich hier auf einen Motor 100 beziehen, der an einer 12 V-Batterie betrieben wird.

**Die Software des Motors 100**

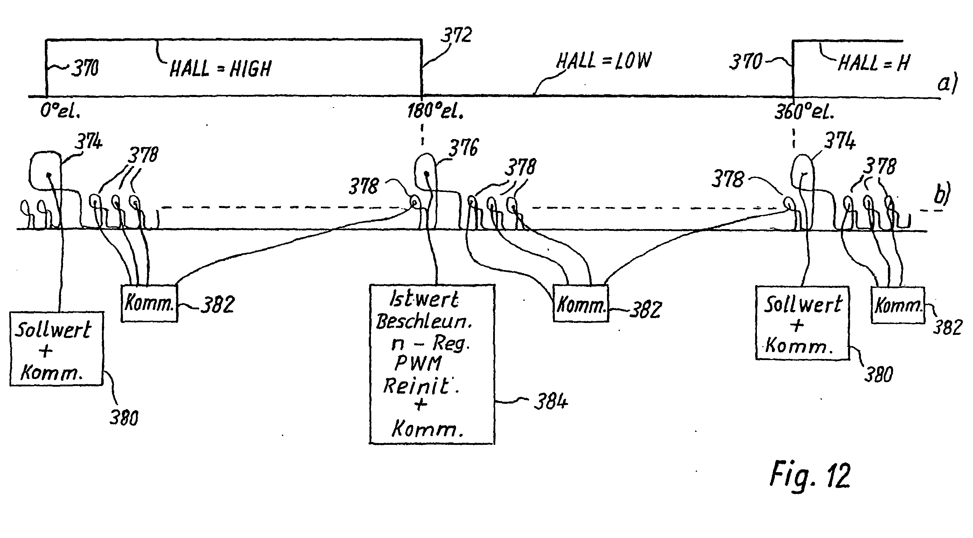

**Fig. 12** erläutert in einer Übersichtsdarstellung den Ablauf der Programmschritte im Motor 100 abhängig von der Drehstellung des Rotors 108. Ein Elektromotor, der durch einen µC 40 gesteuert wird, kann vielerlei zusätzliche Funktionen haben, je nach seiner Anwendung, z.B. eine Drehzahlregelung, eine Drehzahlbegrenzung, eine Strombegrenzung, eine Regelung auf konstanten Strom, Anordnungen zur Ausgabe von Alarmsignalen, Fehlerbehandlungsroutinen, etc.

Beim vorliegenden Ausführungsbeispiel wird die Drehzahl des Motors auf einen Sollwert geregelt (z.B. 3000 U/min), der seinerseits z.B. von der Umgebungstemperatur abhängig sein kann. Deshalb muss dieser Sollwert für das Regelungsprogramm häufig und automatisch aktualisiert werden.

Ferner muss man für eine Drehzahlregelung wissen, wie hoch die Drehzahl des Motors im Augenblick ist, z. B. 2990 U/min. Auch dieser Istwert der Drehzahl muss häufig und automatisch aktualisiert werden.

Ferner muss bei einem solchen Motor ggf. die Beschleunigung berechnet werden, ein PWM-Signal für den Motorstrom muss ausgegeben werden, die Rechenvorgänge der Drehzahlregelung müssen immer wieder erneut (repetitiv) durchgeführt werden, und ggf. müssen bestimmte Parameter von Zeit zu Zeit neu initialisiert werden, um einen stabilen Lauf des Motors sicherzustellen.

Ferner muss der µC 40 - entsprechend den Berechnungen des Drehzahlreglers - den Strom zum Motor ein- und ausschalten und auch, abhängig von der augenblicklichen Drehstellung, die Richtung des Motorstromes umschalten. Alle diese Vorgänge bezeichnet man im Elektromaschinenbau als Kommutierung. Diese sollte mit großer Präzision erfolgen, weil ein Motor nur ruhig läuft, wenn die Kommutierungsbefehle sehr exakt ausgeführt werden. Dies bedeutet, dass das Programm sehr häufig prüfen muss, ob ein Programmbefehl für die Kommutierung vorliegt und ausgeführt werden muss.

Gemäß Fig. 12 hat man deshalb direkt nach einer Flanke 370, 372 des Signals HALL eine große Rechenschleife 374 bzw. 376, in der - je nach dem Wert des Zählers HALL_CNT - längere Rechenprozeduren ausgeführt werden, und man hat anschließend viele kurze Rechenschleifen 378, in denen nur die Kommutierung geprüft und ggf. gesteuert wird. Da diese kurzen Schleifen 378 dicht aufeinander folgen, ergeben sie eine hohe Auflösung, d.h. es wird z.B. alle 60 bis 100 µs geprüft, ob an der Kommutierung etwas geändert werden muss.

Fig. 12 zeigt, dass z.B. direkt nach einer Flanke 370 des Signals HALL eine lange Schleife 374 ausgeführt wird, in der gemäß Legende 380 der Sollwert für das Regeln der Drehzahl berechnet und auch die Kommutierung überprüft wird.

An die große Schleife 374 schließen sich viele kurze Schleifen 378 an, in denen gemäß Legende 382 nur die Kommutierung geprüft und ggf. verändert wird.

Auf eine Flanke 372 des Signals HALL folgt bei diesem Beispiel eine lange Schleife 376, in der gemäß Legende 384 folgende Rechenschritte ausgeführt werden:

- Istwertberechnung
- Berechnung der Beschleunigung
- Drehzahlregelung
- Berechnung des Tastverhältnisses pwm des Signals PWM
- Reinitialisierung bestimmter Register
- Kommutierung.

Auf diese lange Schleife 376 folgen wieder die kurzen Schleifen 378 für die Überwachung und Steuerung der Kommutierung.

Bei der nächsten Flanke des Signals HALL folgt wieder eine lange Schleife 374 der bereits beschriebenen Art, d.h. bei diesem Ausführungsbeispiel wiederholen sich nach 360° el. die Vorgänge.

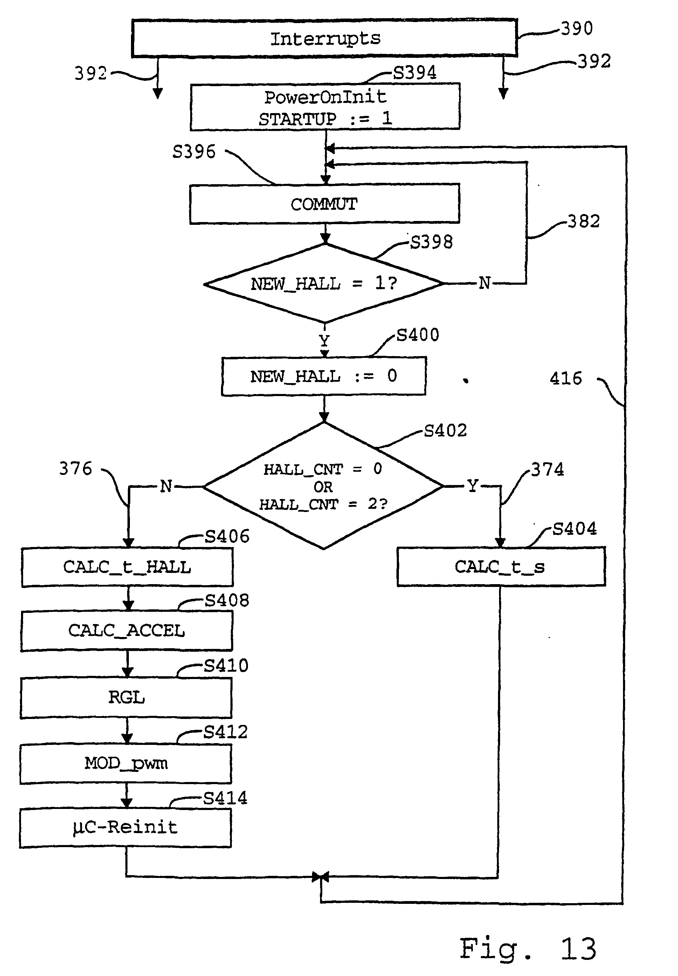

**Fig. 13** zeigt das zugehörige Flussdiagramm, welches in einer groben Übersicht den prinzipiellen Ablauf der soeben beschriebenen Schleifen zeigt.

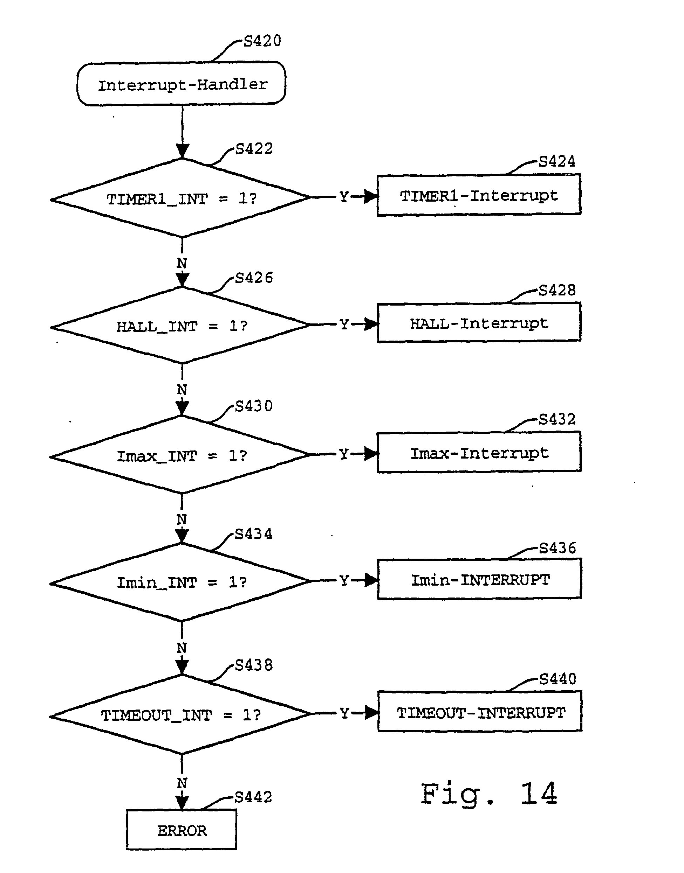

Ganz oben in Fig. 13 sind bei 390 die Interrupts dargestellt, welche nachfolgend bei den Fig. 14 bis 20 näher beschrieben werden und welche bei ihrem Auftreten den normalen Programmablauf unterbrechen, was durch die Pfeile 392 symbolisiert ist.

Beim Einschalten des Motors 100 erfolgt in der üblichen Weise im Schritt S394 eine Initialisierung des µC 40. Hier wird insbesondere ein Flag STARTUP auf 1 gesetzt, welches anzeigt, dass als erstes die Programmschritte für den Hochlauf des Motors 100 ausgeführt werden müssen. Diese unterscheiden sich von den Programmschritten, die im Bereich der Nenndrehzahl des Motors ausgeführt werden.

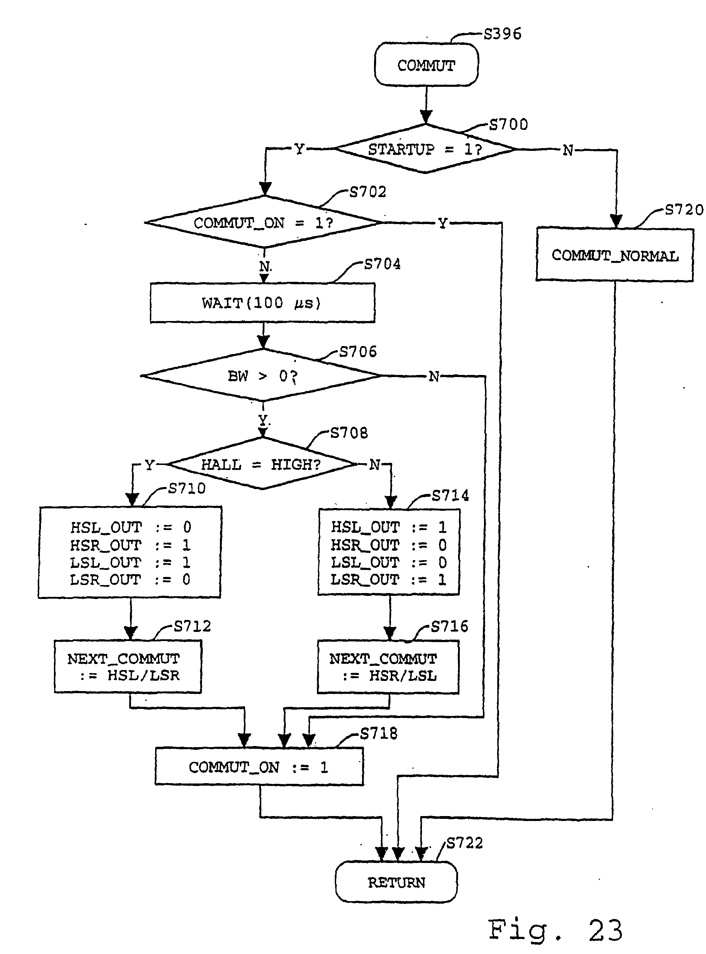

Anschließend folgt in S396 die Steuerung der Kommutierung, die bei den Fig. 23 bis 26 näher erläutert ist. Diese Steuerung ist sehr zeitkritisch und steht deshalb am Anfang des Flussdiagramms in einer kurzen Schleife 382.

Anschließend wird in S398 geprüft, ob das Flag NEW_HALL anzeigt, dass seit der letzten Flanke des Signals HALL bereits eine große Schleife 374 oder 376 durchlaufen wurde.

Falls dieses Flag noch den Wert 1 hat, geht das Programm zu S400 und setzt dort dieses Flag auf 0. Anschließend prüft es in S402, ob HALL_CNT entweder gleich 0 oder gleich 2 ist ist. (Die Variable HALL_CNT wird in Fig. 16 in S454 erzeugt. Diese Variable entspricht bestimmten Rotorstellungen, die beim Einschalten des Motors durch Zufall festgelegt werden, z.B. 0° el. und 360° el., oder 180° el. und 540° el.) Falls Ja, geht das Programm in die lange Schleife 374 und führt bei S404 die Berechnung des Sollwerts t_s durch, der bei diesem Ausführungsbeispiel aus dem analogen Signal am Eingang RA0 berechnet wird, vgl. Fig. 9.

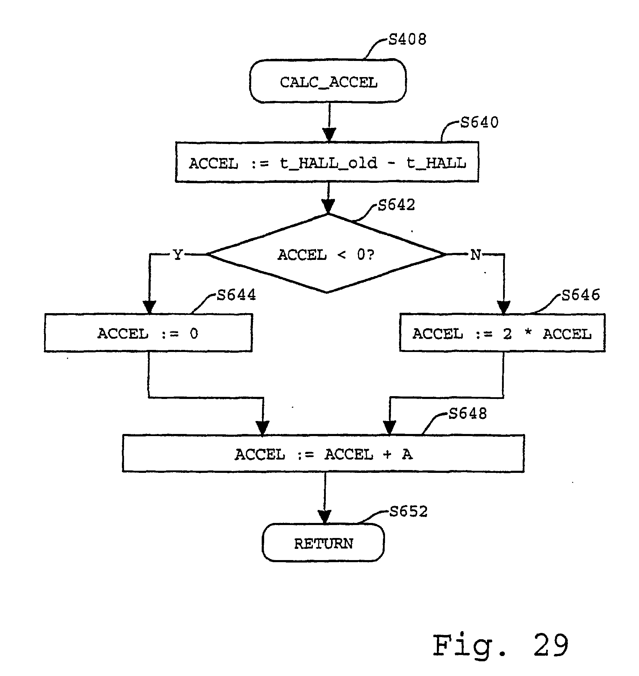

Ist in S402 die Antwort Nein, so geht das Programm in die lange Schleife 376 und dort zu den Schritten S406 und S408, wo der Istwert t_HALL und die Beschleunigung (Fig. 29) berechnet werden. Für die Erfassung des Istwerts geht man dabei wie folgt vor:

- Unterhalb von 2000 U/min wird die Zeit t_HALL zwischen zwei benachbarten Flanken 370, 372 oder 372 und 370 des Signals HALL gemessen, also die Zeit für eine Umdrehung von 180° el.
- Oberhalb von 2000 U/min wird die Zeit zwischen einer ersten und einer vierten Flanke des Signals HALL gemessen, was beim verwendeten vierpoligen Rotor 108 einer vollen Umdrehung von 360° mech. = 720° el. entspricht. Man misst also die Zeit für eine volle Umdrehung und teilt diese durch 4, um t_HALL zu erhalten.

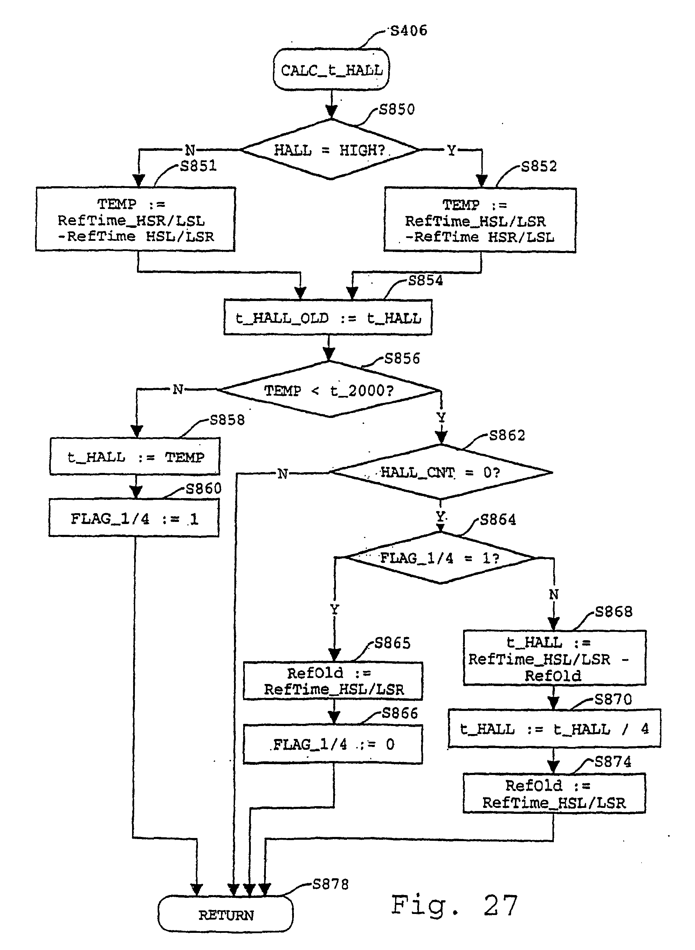

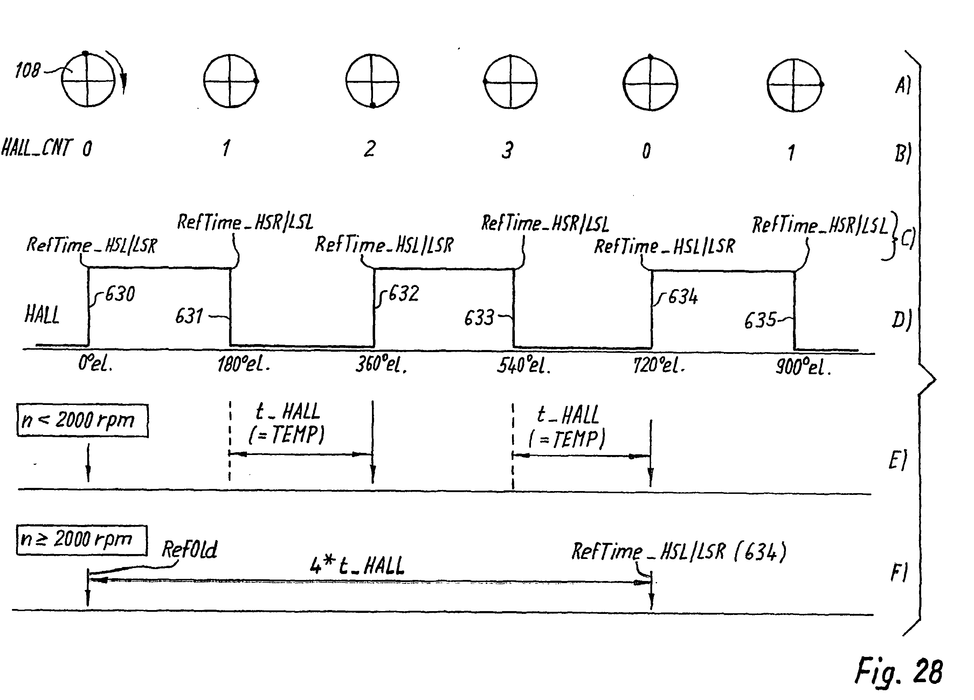

Diese Vorgänge werden anhand von Fig. 27 und 28 näher erläutert.

Auf S408 folgt S41 0, wo die Rechenvorgänge des Drehzahlreglers RGL ausgeführt werden, die in Fig. 30 näher erläutert sind.

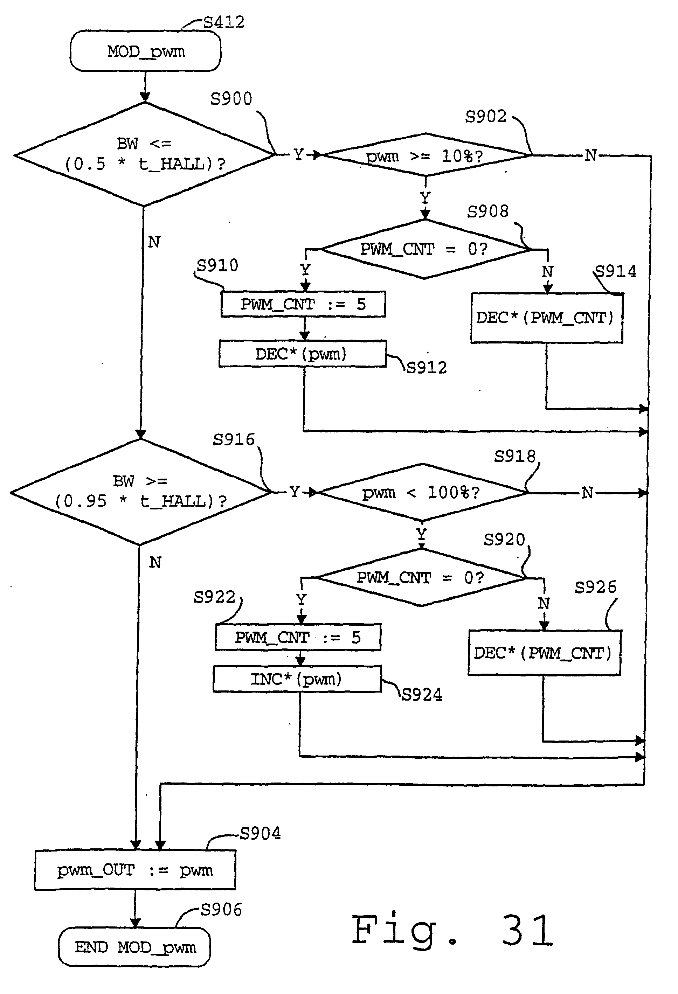

Im anschließenden S412 wird das Tastverhältnis pwm des PWM-Signals berechnet und am Ausgang RC2 eingestellt, vgl. hierzu Fig. 31.

Darauf folgt S414, wo bestimmte Register neu eingestellt werden. Das sind Register, deren Wert bekannt ist und sich nicht ändert, z.B. Register für die Drehrichtung oder für die Konfiguration eines Komparators. Diese Register könnten durch starke EMV-Störungen ihren Inhalt verlieren. Durch die Initialisierung wird dieser Inhalt wieder hergestellt. Dies geschieht beim Ausführungsbeispiel zweimal pro Umdrehung des Rotors.

Anschließend an die Programmschritte S404 oder S414 geht das Programm in einer Endlosschleife 416 zurück zum Schritt S396. Da im Schritt S400 das Flag "NEW_HALL" auf "0" umgeschaltet wurde, was bedeutet, dass eine der großen Schleifen 374, 376 durchlaufen worden ist, lautet anschließend die Antwort in S398 Nein, und es wird nur noch die kurze Schleife 382 durchlaufen, die wenige µs dauert.

Das Flag NEW_HALL wird bei der nächsten Hallflanke 370 oder 372 während des HALL-Interrupts wieder auf "1" umgeschaltet, vgl. S452 in Fig. 16, so dass dann erneut eine der großen Schleifen 374 oder 376 einmal durchlaufen wird, je nach dem augenblicklichen Wert der Variablen HALL_CNT.

Wenn der Motor 100 einen Rotor 108 mit vier Polen hat und mit 3000 U/min = 50 U/s rotiert, werden Sollwert und Istwert pro Sekunde 100 mal aktualisiert, was eine hochwertige Drehzahlregelung ermöglicht.

**Fig. 14** zeigt den Interrupt-Handler S420, welcher die Interrupts 390 (Fig. 13) bearbeitet. Der hier verwendete Prozessor hat einen Interrupt-Handler, der bei einem beliebigen Interrupt aktiviert wird, feststellt, um welchen Interrupt es sich handelt, und dann die notwendige Routine zur Bearbeitung dieses Interrupts ausführt. Vor der Bearbeitung eines Interrupts wird also durch S420 die Quelle des Interrupts ermittelt, z.B. das Auftreten des Signals Imin oder eine Änderung im Pegel des Signals HALL.

Der Interrupt-Handler S420 beginnt in S422 mit einer Abfrage, ob ein Interrupt des Ringzählers TIMER1 im µC 40 vorliegt. Falls dies der Fall ist, wird bei S424 die entsprechende Routine ausgeführt. Diese gehört zur Standard-Software des µC 40. Falls kein Interrupt des Ringzählers vorliegt, wird in S426 abgefragt, ob ein Hallinterrupt HALL_INT vorliegt. Falls dies der Fall ist, wird bei S428 die entsprechende Routine ausgeführt. Diese ist in Fig. 16 dargestellt.

Falls in S426 die Antwort Nein ist, wird in S430 geprüft, ob ein Imax-Interrupt vorliegt. Falls Ja, wird bei S432 die Imax-Interruptroutine ausgeführt, die in Fig. 17 dargestellt ist.

Falls in S430 die Antwort Nein lautet, wird in S434 geprüft, ob ein Imin-Interrupt vorliegt. Falls Ja, wird in S436 die Imin-Interruptroutine ausgeführt, die in Fig. 19 dargestellt ist.

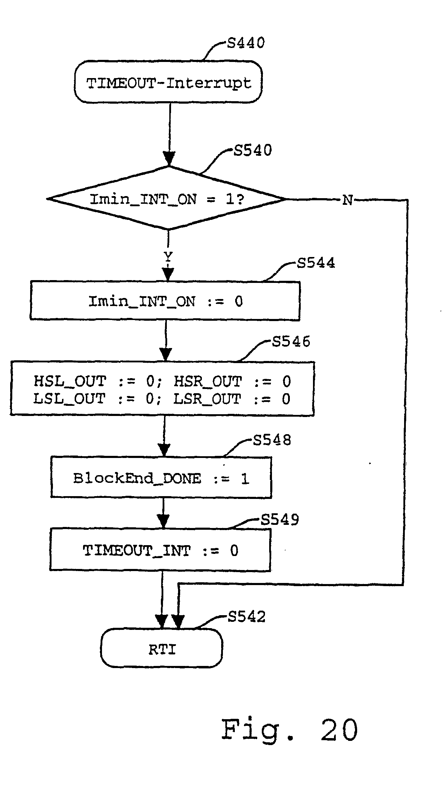

Falls die Antwort in S434 Nein lautet, wird in S438 geprüft, ob ein TIMEOUT-Interrupt vorliegt. Die TIMEOUT-Funktion wurde bereits weiter oben bei Fig. 6, 242 beschrieben. Falls ein solcher Interrupt vorliegt, wird bei S440 die TIMEOUT-Interruptroutine ausgeführt, die in Fig. 20 dargestellt ist.

Der Interrupt-Handler S420 ist jetzt an seinem Ende angelangt. Falls jedoch auch in S438 die Antwort Nein lauten sollte, muss ein Fehler vorliegen, und das Programm geht dann zum Schritt S442, wo eine entsprechende Fehlerbehandlung stattfindet, die im µC 40 implementiert sein kann.

**Fig. 15** dient zur Erläuterung der in Fig. 16 dargestellten Routine für die Bearbeitung eines Hall-Interrupts.

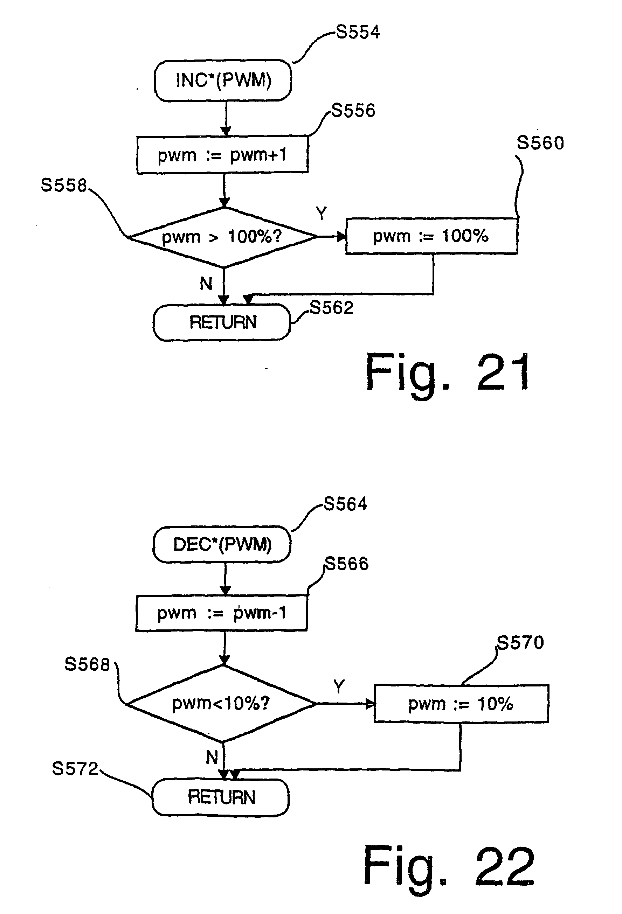

Fig. 15a zeigt das Signal PWM am Port RC2 des µC 40. Dieses Signal wird kontinuierlich erzeugt und hat z. B. eine Frequenz von 20 kHz. Sein Tastverhältnis pwm ist programmgesteuert einstellbar, vgl. Fig. 21 und 22.

Fig. 15b zeigt das Signal HALL. Dieses hat ansteigende Flanken 370 beim Übergang von Low nach High, und es hat abfallende Flanken 372 beim Übergang von High nach Low.

Die Zeitpunkte t1, t2 etc., an denen die Flanken auftreten, werden vom Ringzähler TIMER1 gemessen und in einer temporären Variablen t_TEMP gespeichert. Wie Fig. 15 zeigt, regieren die ansteigenden Flanken 370 die Einschaltung der Transistoren HSL 114 und LSR 136, also des Stromes $i_1$ (Fig. 1). Analog regieren die abfallenden Flanken 372 die Einschaltung der Transistoren HSR 130 und LSL 132, also des Stromes i2 (Fig. 1). Deshalb muss die Routine für den Hall-Interrupt unterscheiden zwischen ansteigenden Flanken 370 und abfallenden Flanken 372.

Die Dauer t_HALL zwischen zwei Flanken ergibt sich als

$$t\_HALL = t2 - t1 \tag{2}$$

Diese Zeitdauer ist ein Maß für die augenblickliche Drehzahl des Rotors 108 und entspricht der Zeit, die dieser für eine Drehung von 180° el. benötigt. Selbstverständlich kann diese Zeit auf vielerlei Arten gemessen werden, z.B. auch durch das sogenannte Sensorless-Prinzip, durch optische Geber, durch magnetoresistive Geber, etc. Bevorzugt misst man, sobald die Drehzahl hoch genug ist, die Zeit für einen größeren Drehwinkel, insbesondere für eine volle Umdrehung des Rotors 108, was beim Ausführungsbeispiel gemäß Fig. 1 einem Drehwinkel von 720° el. entspricht. Diese Messung wird nachfolgend erläutert.

Fig. 15c und 15d zeigen stark schematisiert die Signale für die Steuerung der H-Brücke 137. Fig. 15c zeigt die Signale HSR, LSL für die Steuerung der Transistoren 130 und 132, also für die Einschaltung des Stromes $i_2$. Fig. 15d zeigt die Signale HSL, LSR für die Steuerung der Transistoren 114 und 136, also für die Einschaltung des Stromes i1.

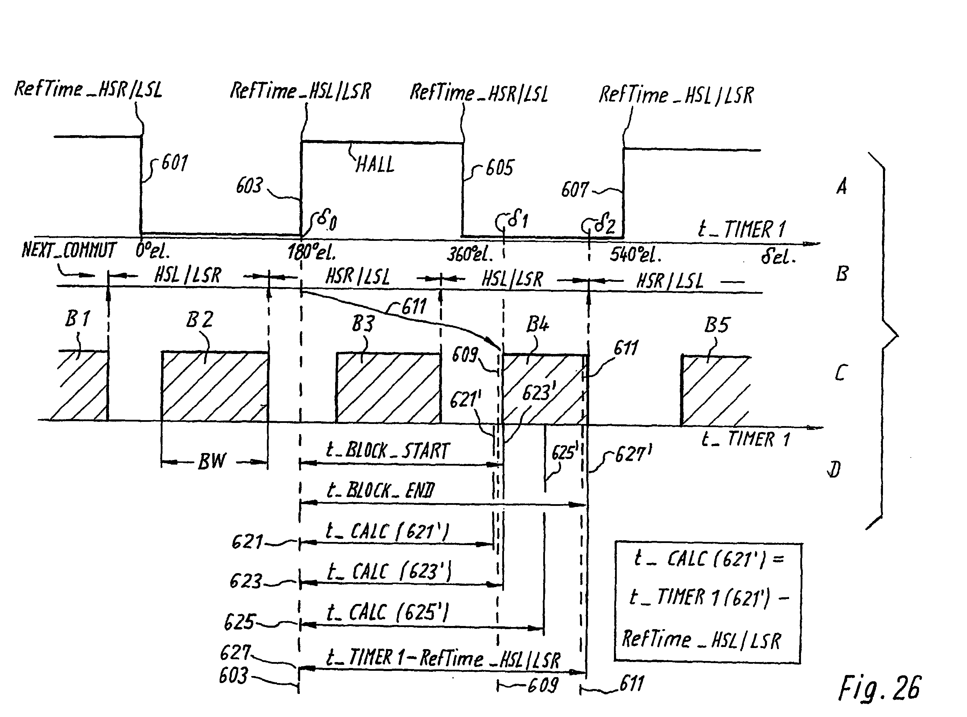

Der Beginn eines Impulses 444 der Fig. 15c wird berechnet ab der abfallenden Flanke 372 des Signals HALL, was durch den Pfeil 445 symbolisiert wird, und der Beginn eines Impulses 446 der Fig. 15d wird berechnet ab der ansteigenden Flanke 370 der Signale HALL, wie durch den Pfeil 447 symbolisiert. (Die Berechnung erfolgt in Fig. 30, S673). Die Flanken 370, 372 von HALL entsprechen vorgegebenen Drehstellungen des Rotors 108, vgl. Fig. 26A, wo der abfallenden Flanke 601 eine Drehstellung von 0° el., der ansteigenden Flanke 603 eine Drehstellung von 180° el. zugeordnet ist, etc. Bei der Berechnung von Kommutierungsvorgängen sind dies die einzigen Drehstellungen, die exakt bekannt sind, und deshalb beziehen sich die Berechnungen auf diese "Fixpunkte".

Unter der Voraussetzung, dass die Steuersignale 444, 446 symmetrisch zu den Impulsen des Signals HALL liegen, ergibt sich für den Zeitpunkt t3, an dem ein Signal 446 beginnt, der Wert

$$t3 = t1 + t\_HALL + (t\_HALL - BW)/2 \tag{3}$$

Dabei bedeutet

BW = Blocklänge der Signale 444, 446. Diese Blocklänge wird durch den Drehzahlregler RGL berechnet, der nachfolgend bei Fig. 30 beschrieben wird.

Analog ergibt sich für den Zeitpunkt t4, an dem das Steuersignal 444 beginnen soll, der Wert

$$t4 = t2 + t\_HALL + (t\_HALL - BW)/2 \tag{4}$$

Zu beachten ist, dass z.B. der Zeitpunkt t3 nicht ab dem Zeitpunkt t2 (direkt vorhergehende Flanke 372 des Signals HALL) berechnet wird, der am dichtesten bei t3 liegt, sondern ab einem früheren Zeitpunkt t1, nämlich ab der vorvorhergehenden Flanke 370. Der Grund ist, dass dann, wenn BW=t_HALL ist, der Zeitpunkt t2 mit dem Zeitpunkt t3 zusammenfallen würde, was nicht geht, da zwischen t2 und t3 Rechenschritte ausgeführt werden müssen.

Sofern eine sogenannte Zündwinkelverschiebung, z.B. um einen festen Wert VZ, verwendet wird, ändern sich die obigen Formeln wie folgt:

$$t3' = t1 + t\_HALL + ((t\_HALL - BW)/2) - VZ \tag{3a}$$

$$t4' = t2 + t\_HALL + ((t\_HALL - BW)/2) - VZ \tag{4a}$$

In diesem Fall liegen die Zeitpunkte t3 und t4 um die Größe VZ weiter links, wie in Fig. 15d für t3' angedeutet, was eine etwas frühere Einschaltung der Ströme $i_1$ und i2 bedeutet und eine Verbesserung des Wirkungsgrades bewirken kann. Man erkennt auch, dass t3' in diesem Fall zeitlich vor t2 liegt, was nur möglich ist, weil Bezugszeit RefTime für die Berechnung von t3' nicht der Zeitpunkt t2 ist, also die fallende Flanke 372, sondern der Zeitpunkt t1, also die ansteigende Hallflanke 370, wie durch den Pfeil 447 symbolisch dargestellt. VZ ist gewöhnlich eine Konstante, kann aber auch eine drehzahlabhängige Funktion sein oder durch separate, nicht dargestellte Programmteile ständig optimiert werden.

**Fig. 16** zeigt die Routine S428, die an einer Flanke 370, 372 (Fig. 15) bei einem HALL-Interrupt ausgelöst wird. Ein solcher wird erzeugt, wenn sich das Signal am Eingang RB0 von 0 nach 1 oder von 1 nach 0 ändert, d.h. der Eingang RB0 ist flankensensitiv und bewirkt beim Auftreten einer Flanke 370 oder 372 einen Interrupt. Die Routine unterscheidet eine ansteigende Flanke 370 von einer abfallenden Flanke 372, was für die nachfolgende Verarbeitung wichtig ist.

Im Schritt S451 wird der Zeitpunkt, zu dem der Interrupt aufgetreten ist, in einem temporären Speicher t_TEMP gespeichert. Dieser Zeitpunkt wird mittels des bereits erwähnten Ringzählers TIMER1 im µC 40 gemessen.

Im Schritt S452 wird das Flag NEW_HALL (Fig. 13) auf 1 gesetzt als Signal dafür, dass anschließend eine der großen Schleifen 374 oder 376 (Fig. 12) ausgeführt werden muss.

Im Schritt S454 wird der Hallzähler HALL_CNT auf den Wert

(HALL_CNT+1 ) MOD 4 gesetzt, also um 1 heraufgezählt und der Operation modulo 4 unterworfen. Die Berechnung mit modulo bewirkt eine Anzeige des Rests. Z.B. ist 4 mod 4 = 0, da 4 ganzzahlig und ohne Rest (remainder) durch 4 teilbar ist. Dagegen ist 5 mod 4 = 1, da sich hierbei der Rest 1 ergibt. Ebenso ist 6 mod 4 = 2, da sich hierbei der Rest 2 ergibt, 7 mod 4 ist 3, und 8 mod 4 = 0. Deshalb ergibt sich im Betrieb in S454 für HALL_CNT fortlaufend die Zahlenfolge 0, 1, 2, 3, 0, 1, 2, 3, 0, etc.

Im Schritt S456 wird abgefragt, ob HALL = HIGH ist. Gemäß Fig. 12a) bedeutet dies, dass sich der Rotor 108 in einer Winkelstellung zwischen 0° el. und 180° el. befindet.

Falls HALL nicht hoch ist, wird gemäß S458 die Referenzvariable (Bezugsgröße) für die Steuerung des oberen rechten Transistors HSR 130 und des unteren linken Transistors LSL 132 durch die im temporären Speicher t_TEMP gespeicherte Zeit ersetzt. Im anschließenden Schritt S460 wird die Interrupt-Empfindlichkeit so eingestellt, dass der Port RB0 für den nächsten HALL-Interrupt auf einen Wechsel von LOW nach HIGH sensibilisiert wird.

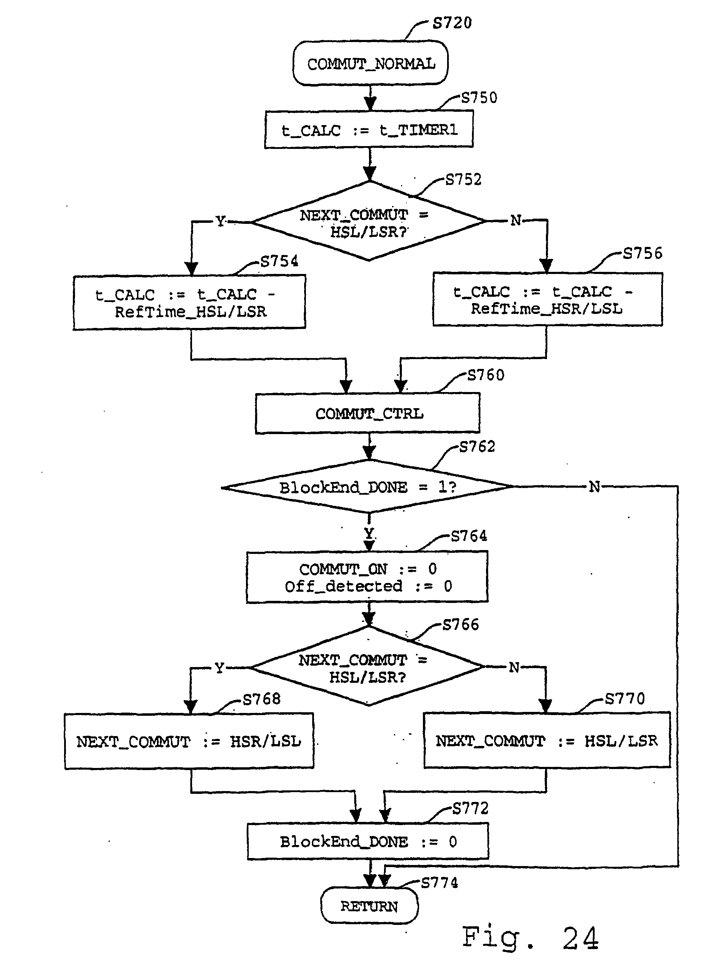

Bei S462 wird geprüft, ob das Flag COMMUT_ON den Wert 0 hat. Dieses Flag wird in der Routine COMMUT (Fig. 23) im Schritt S718 gesetzt, sobald die Wicklung Strom erhält, und es wird am Ende der Kommutierung in Fig. 24 oder 25 auf Null gesetzt, vgl. dort S764, S812 und S842. Falls die Antwort Nein lautet, bedeutet dies, dass zum Zeitpunkt des Hallwechsels von High nach Low noch ein Strom $i_2$ fließt.

Hierzu wird auf Fig. 15 Bezug genommen. Dort findet ein Hallwechsel 372 von High nach Low zum Zeitpunkt t2 statt. Dort müsste der Transistor HSR 130 bereits abgeschaltet sein, damit kein Strom i2 mehr fließt, und da HSR noch leitend ist, muss $i_2$ in einer "Not-Abschaltung" abgeschaltet werden. Dazu wird im Schritt S464 HSR 130 abgeschaltet, und im anschließenden Schritt S466 werden beide unteren Transistoren LSL 132 und LSR 136 eingeschaltet, damit der Strom i2 durch die Transistoren 132, 136 und Messwiderstände 134, 138 rasch abklingen kann und dabei ein Drehmoment erzeugt. (Wenn der Strom i2 durch Null geht, wird ein Imin-Interrupt gemäß Fig. 19 ausgelöst, der die Abschaltung beendet.) Anschließend geht das Programm zum Schritt S468, wo nun festgehalten wird, dass die Abschaltprozedur des Stromes $i_2$ eingeleitet ist (COMMUT_ON := 0), was gemäß Fig. 23, S702 Voraussetzung für die Einschaltung des Stromes i1 ist.

Falls im Schritt S462 festgestellt wird, dass der Strom i2 bereits abgeschaltet wurde, geht das Programm direkt zum Schritt S468.

Falls im Schritt S456 festgestellt wird, dass das Signal HALL hoch ist, d.h. dass es sich in Fig. 15 um eine der ansteigenden Flanken 370 handelt, geht das Programm zum Schritt S470, und dort wird als Referenzvariable für die Steuerung der Transistoren HSL 114 und LSR 136 die im temporären Speicher t_TEMP gespeicherte Zeit übernommen, d.h. bestimmte Zeiten werden jetzt ab dieser Variablen gemessen und berechnet. Anschließend wird in S472 die Interrupt-Empfindlichkeit so eingestellt, dass der Port RB0 für den nächsten HALL-Interrupt auf einen Wechsel von HIGH nach LOW sensibilisiert wird, also auf eine abfallende Flanke.

Im anschließenden Schritt S474 wird geprüft, ob ob das Flag COMMUT_ON den Wert 0 hat. Dieses Flag wird in der Routine COMMUT (Fig. 23) im Schritt S718 auf 1 gesetzt, sobald die Wicklung Strom erhält, und es wird am Ende der Kommutierung in Fig. 24 oder 25 auf Null gesetzt, vgl. dort S764, S812 und S842. Falls die Antwort Nein lautet, weil bei diesem Hallwechsel noch ein Strom i1 fließt, muss dieser in einer "Not-Abschaltung" abgeschaltet werden, und dazu wird im Schritt S476 der Strom i1 abgeschaltet, indem man den oberen Transistor HSL 114 abschaltet, und in S478 werden beide unteren Transistoren LSL 132 und LSR 136 eingeschaltet, damit der Strom $i_1$ durch die Komponenten 132, 134, 136, 138 rasch abklingen kann und dabei ein Drehmoment auf den Rotor 108 erzeugt. (Wenn der Strom i1 durch Null geht, wird die Abschaltprozedur beendet, z.B. durch den Imin-Interrupt der Fig. 19.) Es folgt S468, wo COMMUT_ON auf 0 gesetzt wird, um anzuzeigen, dass die Abschaltprozedur für i1 eingeleitet ist. Falls die Antwort in S474 Ja lautet, geht das Programm direkt zum Schritt S468.

Anschließend an S468 wird in S480 geprüft, ob das Flag STARTUP (Fig. 13, S394) den Wert 1 hat. Dies bedeutet, dass entweder noch gar kein Wert für die tatsächliche Drehzahl vorliegt, oder dass die tatsächliche Drehzahl unter 1000 U/min liegt. Falls dieses Flag nicht gesetzt ist, springt das Programm direkt zum Ende S493 der Routine S428.

Falls bei S480 die Antwort Ja ist, geht das Programm zum Schritt S482 und prüft dort, ob t_HALL kleiner als ein Wert t_HALL_min ist (vgl. Gleichung (7)), welcher z.B. einer Drehzahl von 1000 U/min entspricht, d.h. es wird geprüft, ob die Drehzahl 1000 U/min überschritten wurde. Falls Nein, geht das Programm zu S493.

Falls 1000 U/min überschritten wurden, wird in S486 das Flag STARTUP auf Null gesetzt. Anschließend wird in S488 geprüft, ob das Signal HALL hoch ist. Falls Nein, wird in S490 in der prognostischen Variablen NEXT_COMM festgelegt, dass der nächste Stromblock ein Stromblock 446 (Fig. 15) sein wird, d.h. dass bei ihm HSL 114 und LSR 136 eingeschaltet werden müssen. Ist in S488 die Antwort Ja, so wird bei S492 festgelegt, dass der nächste Stromblock ein Stromblock 444 (Fig. 15) sein wird, d.h. dass bei ihm HSR 130 und LSL 132 eingeschaltet werden müssen. Nach S490 oder S492 geht das Programm zu S493 und beendet die Routine S428. Die Werte für NEXT_COMMUT werden in Fig. 24, S752 und Fig. 25, S806 abgefragt und ermöglichen den Übergang zur Kommutierung bei höheren Drehzahlen.

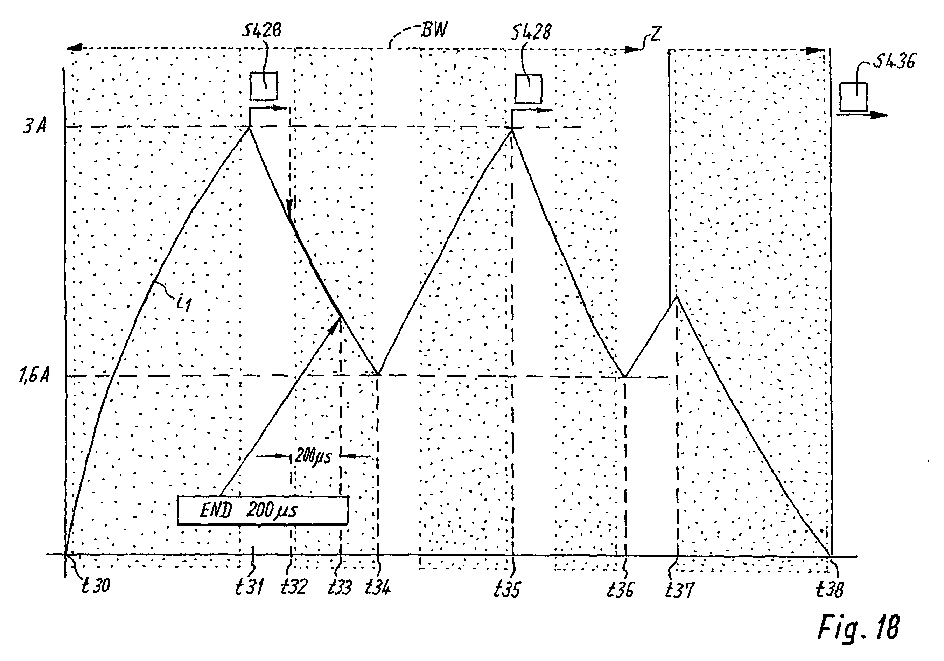

**Fig. 17** zeigt eine bevorzugte Ausführungsform für die Routine S428 zur Bearbeitung eines Imax-Interrupts S428. Die Funktion dieser Routine wird anschließend anhand von Fig. 18 erläutert.

Bei S500 wird geprüft, ob in der Routine COMMUT_CTRL (Fig. 25) das Flag Imax_CTRL_ON auf 1 gesetzt wurde. Hierdurch wird erreicht, dass die Routine S428 durch das Signal Imax nur ausgelöst werden kann, wenn in der Wicklung 102 ein Strom fließt, nicht aber durch Störsignale bei stromloser Wicklung. Falls die Antwort bei S500 Ja lautet, wird in S501 geprüft, ob der Imax_Interrupt bei der Obergrenze (3 A) oder der Untergrenze (1,6 A) erzeugt wurde. Bei einem Interrupt an der Obergrenze des Stromes geht das Signal Imax von High nach Low, weil der Transistor 188 (Fig. 1) leitend wird, und der Strom zur Statorwicklung 102 ist bereits durch das low-aktive Signal Imax über die Hardware abgeschaltet worden, indem beide oberen Transistoren 114 und 130 gesperrt wurden. Dies wurde bereits bei Fig. 1 beschrieben. Redundant werden zusätzlich, wenn die Antwort bei S501 Ja lautet, in S502 die Signale HSL_OUT und HSR_OUT für die oberen Transistoren 114 und 130 auf Null gesetzt, um eine Kontrolle über diese beiden Transistoren auch mittels Software zu erhalten, d.h. diese können erst wieder eingeschaltet werden, wenn die Software das gestattet. Wenn bei S500 die Antwort Nein ist, geht die Routine direkt zu ihrem Ende, also S522. Auch wenn der Interrupt an der Untergrenze (1,6 A) des Stromes erzeugt wurde (S501: Nein), geht die Routine direkt zu S522.

Bei S504 schließt sich an S502 eine Wartezeit von 30 μs an. Während dieser Zeit fließt der Strom im unteren Teil der Brücke 137 z.B. über den leitenden Transistor 136 und die Freilaufdiode 132', oder umgekehrt über den leitenden Transistor 132 und die Freilaufdiode 136'.

Anschließend werden bei S506 beide unteren Transistoren LSL 132 und LSR 136 eingeschaltet, so dass der Strom in der Wicklung 102 über die Komponenten 132, 134, 136, 138 abklingen kann, wobei er ein Drehmoment auf den Rotor 108 erzeugt.

Bei S508 folgt die Routine DEC*(pwm), die in Fig. 22 dargestellt ist und bei der das Tastverhältnis pwm des Signals PWM um eine Stufe reduziert wird, damit der Strom durch die Wicklung 102 abnimmt und nicht mehr die Obergrenze, hier 3 A, erreicht. Dadurch wird adaptiv vermieden, dass der Motor unnötig mit Strombegrenzung arbeitet, und der reduzierte Strom wird durch Vergrößerung des Wertes BW (im Regler RGL) ausgeglichen.

Anschließend wird im Schritt S510 z.B. 200 μs gewartet, damit der Strom in der Wicklung 102 genügend Zeit hat, abzuklingen. Bei S511 wird geprüft, ob die Variable für die nächsten einzuschaltenden Transistoren HSULSR lautet. Falls ja, bleibt in S512 der Transistor LSR 136 leitend und der Transistor LSL 132 wird ausgeschaltet, so dass der Kurzschlussstrom jetzt über den Transistor 136 und die Freilaufdiode 132' fließt. Anschließend hieran wird in S512 z.B. 30 μs gewartet, und dann wird der obere Transistor HSL 114 wieder einschaltbereit gemacht, d.h. dieser kann durch die Hardware eingeschaltet werden, wenn das Signal Imax hoch wird. In Fig. 17 ist dies bei 513 durch "Hardware: ON" symbolisch angedeutet. Die Einschaltung erfolgt also nicht durch den Befehl HSL_OUT := 1, sondern erst durch eine logische Verknüpfung dieses Signals mit der Änderung des Signals Imax bei Unterschreiten von 1,6 A. Bei der Unterschreitung von 1,6 A erhält der Motor also sofort wieder Energie aus dem Gleichstromnetz 121, und i1 steigt wieder an.

Falls in S511 die Antwort Nein lautet, wird in S514 der Transistor LSR 136 gesperrt, und der Transistor LSL 134 bleibt eingeschaltet, vgl. S506, so dass der Kurzschlussstrom über den Transistor 134 und die Freilaufdiode 136' fließt. Anschließend wird 30μs gewartet, und dann wird der obere Transistor HSR 130 wieder einschaltbereit gemacht, d.h. dieser kann jetzt durch die Hardware eingeschaltet werden, wie bei 513 angedeutet, sobald das Signal Imax wider hoch wird, also bei einem Strom unterhalb 1,6 A. Die Einschaltung erfolgt auch hier nicht durch das Signal HSR_OUT := 1, sondern erst durch die Änderung des Signals Imax bei 1,6 A, oder anders gesagt: Durch eine konjunktive Verknüpfung des Signals HSR_OUT := 1 mit dem Signal Imax = 1. Nach der Unterschreitung von 1,6 A erhält der Motor 100 also wieder Strom aus dem Gleichstromnetz 121, und der Strom i2 steigt wieder an.

Anschließend an S512 oder S514 geht die Routine S428 zu S522 und ist dort zu Ende.

Es ist hier darauf hinzuweisen, dass die Signale HSL_OUT, HSR_OUT etc so lange gespeichert bleiben, bis am betreffenden Ausgang des μC 40 ein anderes Signal erzeugt wird. Z.B. bleibt im Anschluss an S502 das Signal HSL_OUT so lange auf 0, bis es in S512 auf 1 umgeschaltet wird, und es bleibt im Anschluss an S512 so lange auf 1, bis es irgendwann wieder auf 0 umgeschaltet wird.

**Fig. 18** erläutert die Wirkungsweise der Routine gemäß Fig. 17. In Fig. 18 ist für die obere Stromschwelle der Wert 3 A eingetragen, und für die untere Stromschwelle der Wert 1,6 A, um die Verständlichkeit zu erhöhen. Selbstverständlich können diese Zahlenwerte je nach Motor verschieden sein.

Bei t30 wird der Strom i1 eingeschaltet, indem die Transistoren 114 und 136 eingeschaltet werden. Bei t31 erreicht i1 den zulässigen Maximalwert von 3 A, und durch die Änderung des Signals Imax auf Low wird der Transistor 114 sofort über die Hardware abgeschaltet. Gleichzeitig läuft ab t31 die Rouline S428 gemäß Fig. 17. Diese schaltet durch S506 bei t32 zusätzlich den unteren Transistor 132 ein, so dass die Wicklung 102 im Kurzschluss betrieben wird. Dies geht während 200 µs bis t33. Dort wird der Transistor 132 wieder abgeschaltet, so dass nur noch der Transistor 136 leitet, und die Software-Abschaltung des oberen Transistors 114 wird durch die Schritte S516 und S518 aufgehoben. Jedoch leitet der obere Transistor 114 erst wieder ab t34, nämlich dem Erreichen der unteren Stromschwelle 1,6 A, wodurch das Signal Imax wieder hoch wird, so dass der Strom i1 eingeschaltet wird und wieder ansteigt. Bei t35 erreicht er erneut den Wert 3 A, und der Transistor 114 wird erneut durch die Hardware abgeschaltet, die Routine S428 wird erneut gestartet, und der beschriebene Vorgang wiederholt sich.

Bei t36 wird der Transistor 114 erneut durch die Hardware eingeschaltet, und bei t37 wird der Abschaltbefehl wirksam, weil die Zeitdauer BW des Stromblocks abgelaufen ist.

An sich hätte der Strom i1 bereits an der Stelle Z abgeschaltet werden müssen, an der die Zeit BW abgelaufen ist, doch kann der Abschaltbefehl nur in den Bereichen wirksam werden, die in Fig. 18 grau hinterlegt sind, in diesem Fall also erst zum Zeitpunkt t37, wodurch sich die Ausschaltung geringfügig verzögert.

Zum Zeitpunkt t38 geht der Strom i1 durch Null, und deshalb wird dort der Imin-Interrupt S436 erzeugt, der nachfolgend beschrieben wird.

Etwas nachteilig bei Fig. 17 und 18 ist, dass z.B. zwischen den Zeitpunkten t33 und t34 erhöhte Verluste entstehen, denn dort fließt i1 durch die Freilaufdiode 132', weil der Transistor 132 nicht mehr leitend ist. Nachfolgend wird auch noch eine Variante beschrieben, die sich besonders für langsame Motoren eignet und mit der diese Verluste weiter reduziert werden können. Die Lösung gemäß Fig. 17 und 18 stellt nach derzeitiger Erkenntnis das Optimum für schnelllaufende Motoren dar, weil bei diesen die Stromänderungen außerordentlich rasch ablaufen und deshalb die Rechenzeiten im µC 40 zu lang sind im Vergleich zu den Zeiten, in denen diese Stromänderungen stattfinden. Mit schnelleren Prozessoren wären vermutlich noch bessere Lösungen möglich, doch sind diese heute für Motoren noch zu teuer.

**Fig. 19** zeigt den Ablauf der Serviceroutine 436 für die Bearbeitung eines Imin-Interrupts.

Bei S530 wird abgefragt, ob das Flag Imin_INT_ON = 1 ist. Dieses Flag wird gesetzt in der Routine COMMUT_CTRL Fig. 25, S824. Wenn ein TIMEOUT-Interrupt (Fig. 20) direkt vorausgegangen ist, hat dieses Flag den Wert 0, und das Programm geht dann direkt zum Ende, also zu S532 dieser Routine.

Falls bei S530 die Antwort Ja ist, wird in S534 das Flag TIMEOUT_INT_ON auf 0 gesetzt, damit ein nachfolgender TIMEOUT_Interrupt nicht mehr bearbeitet wird, und anschließend werden bei S536 alle vier Transistoren 114, 130, 132, 136 gesperrt, weil die Wicklung 102 im wesentlichen stromlos ist und in ihr keine induktive Energie gespeichert ist. (Diese wurde in kinetische Energie des Rotors 108 umgesetzt.)

Anschließend wird bei S538 das Flag BlockEnd_DONE auf 1 gesetzt, das in Fig. 24 während der Routine COMMUT_NORMAL in S762 abgefragt wird und dazu dient, die nächste Kommutierung vorzubereiten, und bei S539 wird Imin_INT_ON auf 0 gesetzt, weil die Routine abgearbeitet ist.

**Fig. 20** zeigt den Ablauf der Serviceroutine S440 für die Bearbeitung eines TIMEOUT-Interrupts.

Bei S540 wird abgefragt, ob das Flag TIMEOUT_INT_ON den Wert 1 hat. Wenn ein Imin-Interrupt (Fig. 19) vorausgegangen ist, hat dieses Flag den Wert 0, und die Routine geht in diesem Fall direkt zu ihrem Ende S542.

Falls bei S540 die Antwort Ja lautet, geht die Routine zum Schritt S544 und setzt dort das Flag Imin_INT_ON auf 0, damit ein nachfolgender Imin-Interrupt nicht mehr bearbeitet wird, vgl. S530 in Fig. 19.

Im anschließenden Schritt S546 werden alle vier Transistoren 114, 130, 132, 136 gesperrt, weil der Strom in der Wicklung 102 bei Ablauf von TIMEOUT einen niedrigen Wert hat und folglich in der Wicklung 102 keine große induktive Energie mehr gespeichert ist. Dadurch wird die Wicklung 102 stromlos geschaltet.

Anschließend wird bei S548 das Flag BlockEnd_DONE auf 1 gesetzt, das in Fig. 24 während der Routine COMMUT_NORMAL in S762 abgefragt wird, und in S549 wird TIMEOUT_INT auf 0 gesetzt, weil der Interrupt abgearbeitet ist.

**Fig. 21** zeigt die Routine INC*(PWM) S554 zur Erhöhung des Tastverhältnisses pwm des Signals PWM am Ausgang RC7 des µC 40. Bei S556 wird der Wert im PWM-Register um 1 erhöht, was etwa einer Erhöhung des Tastverhältnisses um 1 % entspricht.

Im Schritt S558 wird geprüft, ob pwm durch die Erhöhung größer als 100 % geworden ist. Falls Ja, geht das Programm zu S560, wo in diesem Fall pwm auf 100 % gesetzt wird, was bedeutet, dass der Strom $i_1$ oder $i_2$ voll eingeschaltet wird.

Falls bei S558 die Antwort Nein lautet, geht die Routine zu ihrem Ende S562, ebenso im Anschluss an S560.

Fig. 22 zeigt die Routine DEC*(PWM) S564 zur Reduzierung des Tastverhältnisses pwm. Bei S540 wird die Größe pwm um 1 erhöht, was etwa 0,5 % entspricht. Bei S568 wird geprüft, ob hierdurch pwm unter 10 % gesunken ist. Falls Ja, geht die Routine zu S570, wo pwm nach unten auf 10 % begrenzt wird. Falls bei S568 die Antwort Nein lautet, geht die Routine zu ihrem Ende S572, ebenso im Anschluss an S570.

Die Routinen gemäß Fig. 21 und 22 spielen vor allem eine Rolle im Rahmen des adaptiven Reglers, der nachfolgend bei Fig. 31 beschrieben wird.

Die **Fig. 23 bis 25** zeigen die Routine COMMUT S396, welche ständig im Hauptprogramm (Fig. 13) aufgerufen wird und die Ströme i1, i2 in der Wicklung 102 steuert. Die Steuerung der Kommutierung ist die Funktion, die am häufigsten ausgeführt wird. Sie besteht aus zwei Teilen:

1. Dem Startup-Teil für den Start und den Hochlauf
2. Dem Teil für den Normalbetrieb.

Im Startup-Programmteil steht der Motor still oder versucht gerade, anzulaufen. Nach Anschließen der Versorgungsspannung wird in Fig. 13 im Schritt S394 das Flag STARTUP gesetzt, damit der Motor mit der Routine STARTUP beginnt. Das Flag COMMUT_ON wird ebenfalls in der Initialisierung auf 0 gesetzt, damit eine neue Bestromung starten kann.

In S700 wird überprüft, ob sich der Motor 100 im Startup befindet (STARTUP=1). Falls Ja, wird nach S702 gesprungen und eine vereinfachte Kommutierung durchgeführt.

**Kommutierung bei niedrigen Drehzahlen**

Bei niedrigen Drehzahlen wird der Strom durch die Wicklung 102 durch die Routine COMMUT S396 (Fig. 23) eingeschaltet und in der jeweils folgenden Hall-Interruptroutine (Fig. 16) wieder ausgeschaltet. Zuerst wird in S702 überprüft, ob der Stromblock in dieser Hallperiode bereits gestartet wurde. Falls Ja, wird zum Ende S722 gesprungen, da erst nach dem nächsten Hallwechsel wieder eine Bestromung stattfindet. Falls jedoch in S702 COMMUT_ON = 0 war, ist dies der erste Aufruf der Routine COMMUT S396, und die Bestromung wird gestartet.

Hierzu wird in S704 100 μs gewartet, um eine Stromlücke zu erzeugen, damit nicht alle MOSFETs gleichzeitig leitend werden. In S706 wird überprüft, ob die Blocklänge BW größer als Null ist. Falls Nein, soll der Motor keinen Strom erhalten. Deshalb springt dann die Routine an das Ende S722.

Falls BW > 0 ist, wird in Abhängigkeit vom Signal HALL die richtige Bestromung der Wicklung 102 gestartet, also entweder $i_1$ oder $i_2$, vgl. Fig. 1. Der Rotor 108 beginnt nun, sich um 180° el. zu drehen.

Ist HALL hoch, so werden in S710 die Signale HSR_OUT und LSL_OUT auf 1 gesetzt, so dass die Wicklung 102 über die Transistoren HSR 130 und LSL 132 bestromt wird und ein Strom $i_2$ fließt.

In S712 wird vorausschauend festgelegt, dass die nächste Kommutierung über die Transistoren HSL 114 und LSR 136 erfolgen muss. Dies ist für den Wechsel von dieser Kommutierungsart zu der Kommutierungsart bei hohen Drehzahlen wichtig, vgl. nachfolgend die Beschreibung zu Fig. 27.

War dagegen in S708 das Signal HALL niedrig (LOW), so werden in S714 die anderen Transistoren HSL 114 und LSR 136 eingeschaltet, so dass ein Strom $i_1$ fließt, und in S716 wird NEXT_COMMUT vorausschauend auf den richtigen Wert für die folgende Kommutierung gesetzt.

In S718 wird schließlich das Flag COMMUT_ON auf 1 gesetzt, damit beim nächsten Aufruf der Routine COMMUT S396 direkt von S702 nach S722 gesprungen wird, da die Wicklung 102 bereits Strom erhält. Dies geht so fort, bis sich der Rotor 108 etwa 180° el gedreht hat.

Sind 180° el. erreicht, so erkennt das die Software durch einen Hall-Interrupt. Die Abschaltung der Bestromung und das Setzen von COMMUT_ON auf 0 geschehen in der Hall-Interruptroutine (Fig. 16, S462 bis 478, S468), so dass die Kommutierungssteuerung erneut ab S704 eine neue Bestromung mit der richtigen Stromrichtung startet.

**Kommutierung bei hohen Drehzahlen.**

Ist in S700 STARTUP = 0, so wird die Kommutierung COMMUT_NORMAL S720 für hohe Drehzahlen durchgeführt, vgl. Fig. 24. Fig. 26 zeigt ein schematisches Diagramm, in dem der Ablauf dieser Kommutierung dargestellt ist.

In S750 wird in **Fig. 24** die augenblickliche Zeit t_TIMER1, die fortlaufend durch einen Ringzähler gemessen wird, in der Variablen t_CALC gespeichert, und in S752 wird anhand der Variablen NEXT_COMMUT entschieden, in welcher Richtung der Strom durch die Wicklung 102 fließen soll.

Falls die Transistoren HSL und LSR eingeschaltet werden sollen, wird nach S754 gesprungen, und von der Variablen t_CALC wird die Variable RefTime_HSL/LSR abgezogen, weiche dem Zeitpunkt des vorhergehenden Hallwechsels von Low nach High entspricht. In Fig. 26 ist dies dargestellt. Fig. 26A zeigt das Signal HALL mit den Hallwechseln 601, 603, 605, 607 etc., während deren in den Variablen RefTime_HSR/LSL (bei 601 und 605) und RefTime_HSL/LSR (bei 603 und 607) jeweils die Zeit des augenblicklichen Hallwechsels gespeichert wird (S458 und S470 in Fig. 16).

**Fig. 26** erläutert das Grundprinzip der Kommutierung. Für das Ein- und Ausschalten eines Stromblocks bezieht man sich nach Erreichen der Betriebsdrehzahl des Motors auf eine diesem Stromblock zugeordnete Referenzstellung des Rotors, welche bei allen Betriebszuständen einen Mindestabstand zu diesem Stromblock einhält.

Z.B. verwendet man für das Ein- und Ausschalten des Stromblocks B4 (Fig. 26C) eine Referenzstellung $\partial 0$, hier 180° el., und ausgehend von dieser Referenzstellung $\partial 0$ berechnet man eine Winkelstellung $\partial 1$ für das Einschalten des Stromblocks B4, hier bei 405° el., und eine Winkelstellung $\partial 2$ für das Ausschalten des Blocks B4, hier bei 495° el.

Die Winkelstellung $\partial 0$ ist also für diesen Stromblock der Referenzpunkt, und deshalb wird an ihr im TIMER1 eine Referenzzeit RefTime_HSL/LSR gemessen, weil im Stromblock B4 die Transistoren HSL 114 und LSR 136 leitend sein müssen.

Der Motor 100 hat keinen Sensor, mit dem der Drehwinkel $\partial$ überall exakt gemessen werden könnte, sondern pro Rotorumdrehung kann man nur an vier Stellen die Drehstellung einigermaßen exakt erfassen, weil sich dort das Signal HALL ändert, nämlich bei 0° el., 180° el., 360° el., und 540° el.. Zwischen diesen Drehstellungen muss interpoliert werden, was möglich ist, weil sich die Winkelgeschwindigkeit des Rotors 108 im Verlauf einer Umdrehung nur wenig ändert.

Wenn man also an der Drehstellung $\partial 1$ einschalten und an der Stellung $\partial 2$ ausschalten möchte, weiß man, dass der Winkelabstand zwischen $\partial 0$ und $\partial 1$ z.B. 405 - 180 = 225° el. beträgt, und dass der Winkelabstand zwischen $\partial 0$ und $\partial 2$ z.B. 495 - 180 = 315° el. beträgt.

Da man weiß, dass der Rotor für eine Drehung von 180° el. die Zeit t_HALL benötigt, ergibt sich für eine Drehung vom 225° el. die Zeit

$$t\_HALL * (225/180) = 1{,}25 * t\_HALL$$

Das ist bei diesem Beispiel die Zeit t_BLOCK_START.

Ebenso ergibt sich für 315° el. die Zeit

$$t\_HALL * (315/180) = 1{,}75 * t\_HALL$$

Das ist bei diesem Beispiel die Zeit t_BLOCK_END.

Beim Durchlaufen der Drehstellung $\partial 0$ wird also eine Referenzzeit gemessen, nämlich RefTime_HSL/LSR, z.B. 67,34 ms.

**Fig. 33** zeigt die angegebenen Werte an einem Zahlenbeispiel für n = 3000 U/min. Dabei ist gemäß Gleichung (6) die Zeit t_HALL = 5 ms. Dies ist die Zeit, die der Rotor 108 bei 3000 U/min für 180° el. benötigt.

Vom Regler RGL (Fig. 30) wird bei 613 - als Beispiel - eine Blocklänge BW von 2,5 ms vorgegeben, und man weiß folglich aus Fig. 33 prognostisch, dass nach einer Zeit von 6,25 ms die Drehstellung $\partial 1$ (405° el.) erreicht sein wird, an der der Strom i1 eingeschaltet werden muss. Ebenso weiß man prognostisch, dass nach einer Zeit von 8,75 ms die Drehstellung $\partial 2$ (495° el.) erreicht sein wird, an der der Strom i1 abgeschaltet werden muss, bzw. an dem die Kommutierungsprozedur beginnt und die Energiezufuhr aus dem Gleichstromnetz abgeschaltet wird.

Ferner zeigt Fig. 33 als Beispiel, dass im TIMER1 zum Referenzzeitpunkt $\partial 0$ eine Referenzzeit von 65,34 ms gemessen wird. Das ist die Zeit RefTime_HSL/LSR.

Zur Überwachung des Einschaltens bei $\partial 1$ und des Ausschaltens bei $\partial 2$ geht man so vor, dass man gemäß S754 der Fig. 24 fortlaufend die zeitliche Differenz t_CALC zwischen dem augenblicklich gemessenen Zeitpunkt und den 65,34 ms bildet. Zu t_CALC vergleiche Gleichung (5).

Wenn z.B. zum Zeitpunkt t40 vom TIMER1 eine Zeit von 66,34 ms gemessen wird, so ergibt sich als Differenz

$$t\_CALC = 66{,}34 - 65{,}34 = 1 \text{ ms}$$

Da der Strom $i_1$ erst nach einer Zeit von 6,25 ms eingeschaltet werden muss, sind 1 ms zu wenig, und der Strom i1 wird noch nicht eingeschaltet.

Beträgt zum Zeitpunkt t41 die aktuelle Zeit im TIMER1 71,60 ms, so ergibt sich als Differenz

$$t\_CALC = 71{,}60 - 65{,}34 = 6{,}26 \text{ ms.}$$

In diesem Fall wird der Strom i1 eingeschaltet, da t_CALC größer als 6,25 ms ist.

Ab der Drehstellung ∂0 wird also ständig in Fig. 25, S800, überwacht, ob t_CALC größer geworden ist als t_BLOCK_START, und wenn das der Fall ist, werden in diesem Fall in S810 von Fig. 25 die Transistoren HSL 114 und LSR 136 eingeschaltet.

Die Abschaltung erfolgt nach dem gleichen Prinzip, nur dass t_CALC mit der Größe t_BLOCK_END verglichen wird, vgl. S820 in Fig. 25. In Fig. 33 beträgt diese Größe 8,75 ms. Sie entspricht dem Abschaltwinkel ∂2, und wenn sie erreicht ist, wird die Kommutierungsprozedur gemäß Fig. 25, S826 bis S844 durchlaufen.

Die Kommutierung beruht also darauf, dass in den kurzen Schleifen 382 der Fig. 13 in ganz kurzen Abständen von z.B. 0,1 ms die Zeit t_CALC neu berechnet und mit den prognostischen Werten t_BLOCK_START und t_BLOCK_END verglichen wird. Dies geschieht in Fig. 33A zwischen den Zeiten 65,34 ms 74,1 ms und ist durch Punkte 615 angedeutet. Dabei geht man für jeden Stromblock von einem diesem zugeordneten Referenzwinkel aus, an dem man eine Referenzzeit für diesen Stromblock misst, die dann bei den Vergleichen verwendet wird. Bei der Drehung des Rotors 108 werden also ständig neue Referenzzeiten ermittelt und neue Vergleiche vorgenommen, um die Ströme i1 und i2 durch die Wicklung 102 richtig zu steuern, d.h. die Referenzwinkel "wandern" ständig mit der Drehung des Rotors mit. Dasselbe Prinzip lässt sich selbstverständlich auch bei Motoren mit mehr als einer Wicklung anwenden.

Soll der Strom um eine Zeit ZV = 0,4 ms früher eingeschaltet werden, was man auch als "Frühzündung" bezeichnet, so verwendet man in Fig. 33 statt der Zeit 6,25 ms für das Einschalten eine Zeit von

$$6{,}25 - 0{,}4 = 5{,}85 \text{ ms,}$$

und für das Ausschalten eine Zeit von

$$8{,}75 - 0{,}4 = 8{,}35 \text{ ms.}$$

Der Winkel ∂1 verschiebt sich dann bei dieser Drehzahl um 14,4° el. nach links auf 390,6° el., und der Winkel ∂2 verschiebt sich bei dieser Drehzahl ebenfalls um 14,4° el. nach links auf 480,6° el., d.h. der Strom i1 wird zeitlich früher einund ausgeschaltet, und der Winkel, um den früher ein- und ausgeschaltet wird, nimmt mit steigender Drehzahl zu und beträgt hier bei 3000 U/min 14,4° el., bei 6000 U/min 28,8° el. etc. Meist wird ZV eine Funktion der Drehzahl sein. Diese frühere Einschaltung der Ströme in der Wicklung 102 kann den Wirkungsgrad des Motors 100 bei höheren Drehzahlen verbessern. Sie ist bei der vorliegenden Erfindung sehr einfach zu realisieren.

Fig. 26B zeigt den Wert der Variablen NEXT_COMMUT, also entweder HSL/LSR oder HSR/LSL. Fig. 26C zeigt symbolisch Bestromungsblöcke B1 bis B5 über der Zeit TIMER1. Fig. 26D zeigt die Zeiten t_BLOCK_START und t_BLOCK_END für den Bestromungsblock B4, der bei 609 beginnt und bei 611 aufhört. Der Block B4 hat für seine Einschaltung und seine Aussschaltung als Referenzzeit die Flanke 603 des Signals HALL, also die bei 603 gemessene Zeit RefTime_HSL/LSR(603), was in Fig. 26C durch einen Pfeil 611 symbolisiert ist. Bei 621, 623, 625 und 627 wird - durch neue Berechnung im Programm - die Zeitdauer

$$t\_CALC = t\_TIMER1 - RefTime\_HSL/LSR \qquad (5)$$

an die aktuelle Zeit im TIMER1 angepasst. Zum Beispiel wird bei 621 eine Zeit t_CALC(621') für den Zeitpunkt 621' berechnet, mittels deren geprüft wird, ob der Beginn des Blocks B4 bereits erreicht ist.

Zu den Zeitpunkten 621', 623', 625' und 627' hat die Variable NEXT_COMMUT (Fig. 26B) den Wert HSULSR, so dass von S752 (Fig. 24) nach S754 gesprungen wird und dort die momentane Differenz zwischen dem in S750 abgespeicherten Wert t_TIMER1 und dem Wert RefTime_HSL/LSR(603) berechnet und der Variablen t_CALC zugewiesen wird. Bei einem Aufruf der Routine COMMUT_NORMAL zum Zeitpunkt 621' hat der Wert t_CALC daher den bei 621 (Fig. 26D) angegebenen Wert. In S756 erfolgt die analoge Berechnung, falls die Variable NEXT_COMMUT den Wert-HSR/LSL hat.

Daraufhin wird in die eigentliche Kommutierungsroutine COMMUT_CTRL S760 gesprungen, welche in Fig. 25 dargestellt ist. Der ab S762 beginnende Teil der Fig. 24 dient zum Abschluss der Kommutierung, also zum Abschalten des Stromes, wird nur einmal nach Abschluss der Bestromung durchlaufen, und wird später beschrieben.

In der Routine COMMUT_CTRL S760 erfolgt das Ein- und Ausschalten der Transistoren 114, 130, 132 und 136, was anhand von Fig. 26 beschrieben wird.

Ist die in t_CALC berechnete Dauer (wie zum Zeitpunkt 621') kleiner als t_BLOCK_START, so soll keine Bestromung der Wicklung 102 erfolgen.

Bei 623' ist t_CALC das erste Mal größer als t_BLOCK_START, und deshalb wird der Strom zur Wicklung 102 eingeschaltet.

Zum Zeitpunkt 625' hat der Wert t_CALC noch nicht den Wert t_BLOCK_END erreicht, so dass die Bestromung der Wicklung 102 fortgesetzt wird.

Bei 627' hat t_CALC schließlich die Zeitdauer t_BLOCK_EMD überschritten, und daher wird die Energiezufuhr zur Wicklung 102 jetzt abgeschaltet.

Die soeben genannten Schritte werden in der Routine COMMUT_CTRL S760 ausgeführt. Ist t_CALC in S800 kleiner als t_BLOCK_START (Zeitpunkt 621'), so geschieht nichts, und es wird an das Ende S848 gesprungen.

Ist t_CALC jedoch in S800 größer oder gleich t_BLOCK_START (Zeitpunkte 623', 625', 627'), so wird in S802 überprüft, ob die Bestromung der Wicklung 102 bereits aktiviert ist (COMMUT_ON = 1). Falls Nein (Zeitpunkt 623'), findet ab S804 die Einschaltprozedur statt.

Ist in S804 die Blocklänge BW = 0, so wird kein Strom zugeführt und nach S812 gesprungen. Ist dagegen BW > 0, so werden je nach Wert der Variablen NEXT_COMMUT in S808 die Transistoren HSR 130 und LSL 132 oder in S810 die Transistoren HSL 114 und LSR 136 leitend gesteuert.

In S812 wird COMMUT_ON auf 1 gesetzt, um anzuzeigen, dass jetzt die Bestromung der Wicklung 102 eingeschaltet ist. Danach wird an das Ende S848 gesprungen.

Ist in S802 der Wert COMMUT_ON = 1 (Zeitpunkte 625', 627'), d.h. es fließt ein Strom zur Wicklung 102, so wird in S820 überprüft, ob die Variable t_CALC bereits den Wert der Zeitdauer t_BLOCK_END erreicht hat, die in Fig. 30, S673, berechnet wird.

Falls Nein (Zeitpunkt 625'), wird in S822 noch überprüft, ob t_CALC größer oder gleich (2 * t_HALL - A*) ist. Dabei ist (2 * t_HALL) bei diesem Motor die Zeit, die der Rotor 108 benötigt, um sich um 360° el. zu drehen, und A* ist eine Konstante, die z.B. 400 µs beträgt. Durch S822 wird der Strom zur Wicklung auch bei Störungen im Programmablauf etwa 400 µs vor dem nächsten Hallwechsel unterbrochen.

Diese 400 µs werden benötigt, um die gesamte Abschaltprozedur abarbeiten zu können, bevor der Hallwechsel kommt. Dies dient dazu, ein gleichzeitiges Einschalten aller Leistungstransistoren zu vermeiden. Diese "Not-Abschaltung" wird bei hohen Drehzahlen benötigt, da bei diesen die Blocklänge BW fast so groß wird wie t_HALL (hoher Leistungsbedarf bei hoher Drehzahl). Bei niedrigen Drehzahlen ist das Ende eines Stromblocks schon lange erreicht, bevor der nächste Hallwechsel erreicht wird, d.h dann lautet in S822 die Antwort stets Nein, und in S824 wird der Imax-Interrupt (Fig. 17) aktiviert, um ggf. auf einen zu hohen Motorstrom reagieren zu können.

Ist dagegen in S820 der Wert von t_CALC größer oder gleich t_BLOCK_END, oder lautet in S822 die Antwort Ja, so wird in S826 die Abschaltprozedur aufgerufen.

In S826 wird anhand der Variablen Off_detected überprüft, ob die Abschaltung der Bestromung, also die Kommutierungsprozedur zur Abschaltung, bereits eingeleitet wurde. Falls Ja, wird an das Ende S848 gesprungen. Falls dies jedoch der erste Aufruf ist, wird von S826 nach S828 gesprungen.

Die Variable Off_detected wird in S828 auf 1 gesetzt. In S830 wird der Imax-Interrupt deaktiviert und in S832 der Imin-Interrupt aktiviert. (Die Interrupts werden mit großem Vorteil nur in den Bereichen aktiviert, in denen sie nach der Logik des Programms auftreten können.)

In S834 werden beide oberen Transistoren HSL 114 und HSR 130 abgeschaltet. In S836 wird 30 µs gewartet, und in S838 wird der TIMEOUT-Interrupt (Fig. 20) aktiviert und eine TIMEOUT-Zeit t_TIMEOUT wird aus dem augenblicklichen Wert des TIMER1 und einer Konstanten t_T0 berechnet.

Anschließend werden bei S840 beide unteren Transistoren LSL 132 und LSR 136 leitend gesteuert, damit der Strom in der Wicklung 102 im Kurzschluss abklingen und dabei kinetische Energie im Rotor 108 erzeugen kann. Bei S842 wird das Flag COMMUT_ON auf 0 gesetzt, und in S844 wird die Variable BlockEnd_DONE auf 0 gesetzt, um anzuzeigen, dass die Kommutierung noch nicht ganz abgeschlossen ist. Diejenige der beiden Interruptroutinen Imin-Interrupt und TIMEOUT-Interrupt, welche zuerst aufgerufen wird, schaltet anschließend beide unteren Transistoren LSL 132 und LSR 136 aus, vgl. S536 der Fig. 19 und S546 der Fig. 20 und setzt BlockEnd_DONE auf 1, vgl. S538 der Fig. 19 und S548 der Fig. 20. Damit ist die Abschaltung komplett beendet, was durch BlockEnd_DONE = 1 angezeigt wird.

Beim nächsten Aufruf der Routine COMMUT_NORMAL S720 wird in S762, Fig. 24, nach S764 gesprungen. In S764 werden COMMUT_ON und Offdetected auf 0 gesetzt, da die Bestromung abgeschaltet ist, und in S766 bis S770 wird der prognostische Wert von NEXT_COMMUT gewechselt, d.h. der Wert HSULSR wird zu HSR/LSL, und umgekehrt, vgl. Fig. 26B. Dadurch wird auch bei einer Frühzündung, bei der der Strom vor dem eigentlich zugeordneten Hall-Interrupt eingeschaltet wird, die Richtung der Bestromung in der Wicklung 102 richtig festgelegt, d.h. durch den Wert NEXT_COMMUT wird festgelegt, welches Transistorpaar anschließend hinsichtlich Einschalten und Ausschalten überwacht werden muss. Danach wird in S772 das Flag BlockEnd_DONE auf 0 gesetzt, damit beim nächsten Durchlauf in S672 die Antwort Nein lautet und die Routine direkt zu S774 geht.

**Fig. 27** zeigt die Routine CALC_t_HALL S406 zur Berechnung der momentanen Hallzeit t_HALL, also der Zeit, die der Rotor 108 braucht, um sich um 180° el. zu drehen.

**Fig. 28** zeigt eine Übersicht zur Erläuterung. Fig. 28D zeigt das Signal HALL. Dieses hat Flanken an den Stellen 630, 631, 632, 633, 634, 635, d.h. dort findet jeweils ein Hallwechsel statt, der zur Ermittlung der Rotorstellung und zur Ermittlung von Drehzahl und Beschleunigung verwendet wird. Da bei einem vierpoligen Rotor 108 vier Mal pro Umdrehung ein Hallwechsel stattfindet, ist pro Umdrehung vier Mal die genaue Rotorstellung messbar.

Fig. 28B zeigt den Wert der Variablen HALL_CNT. Dies ist ein Zähler, welcher gemäß S454, Fig. 16, modulo 4 inkrementiert wird. Dies bedeutet, dass diese Variable nacheinander die Werte 0, 1, 2, 3, 0, 1, 2, 3, 0, ... annimmt.

Fig. 28A zeigt beispielhaft die Lage des Rotors 108, der wie in Fig. 1 als vierpoliger Rotor dargestellt ist. Die Flanke 630 des Signals HALL entspricht der Rotorstellung 0° el. und dem Zählerstand HALL_CNT = 0, die Flanke 631 der Rotorstellung 180° el, und dem Zählerstand HALL_CNT = 1, die Flanke 632 der Rotorstellung 360° el. und dem Zählerstand HALL_CNT = 2, etc.

Es werden zwei Arten der Messung verwendet. Fig. 28E zeigt die eine Art, die bei niedrigen Drehzahlen n verwendet wird, z.B. unter 2000 U/min, wo t_HALL große Werte annimmt, vgl. nachfolgend die Gleichungen (6) und (7). Fig. 28F zeigt die andere Art, die bei höheren Drehzahlen, z.B. oberhalb 2000 U/min, verwendet wird, bei denen die Hallzeiten t_HALL kleiner sind und durch Messung der Zeit für eine volle Umdrehung (720° el.) Ungenauigkeiten infolge von Magnetisierungsfehlern des Rotors 108 vermieden werden.

Die Routine CALC_t_HALL S406 wird vom Hauptprogramm (Fig. 13) zu jedem zweiten Hall-Interrupt aufgerufen, nämlich dann, wenn die Variable HALL_CNT (Fig. 28) geradzahlig ist, also entweder den Wert 0 oder 2 hat, vgl. den Schritt S402 in Fig. 13.

Zuvor wurde in der Hall-Interrupt-Routine S428 (Fig. 16) die augenblickliche Zeit des Hallwechsels abgespeichert, und zwar in RefTime_HSR/LSL bei einer Flanke von Hoch nach Niedrig (S458 in Fig. 16; Fig. 28C), und in RefTime_HSL/LSR bei einer Flanke von Niedrig nach Hoch (S470 in Fig. 16; Fig. 28C). Bei den Rotorstellungen 0° el., 360° el, 720° el. etc wird also die Zeit für die betreffende Rotorstellung als Referenzzeit für HSULSR abgespeichert, und bei den Rotorstellungen 180° el., 540° el., 900° el. wird die Zeit für die betreffende Rotorstellung als Referenzzeit für HSR/LSL abgespeichert, wie in Fig. 28C explizit angegeben.

In S851 bzw. S852 (Fig. 27) wird je nach Wert des Signals HALL die Zeitdauer zwischen dem momentanen und dem vorhergehenden Hallwechsel berechnet und in der Variablen TEMP gespeichert. Bei Fig. 28E wäre das z.B. nach dem Hallwechsel 632 die Zeitdauer zwischen den Flanken 631 und 632, also [RefTime_HSL/LSR (632) - RefTime_HSR/LSL (631)]. In S854 wird die augenblickliche Zeit t_HALL in t_HALL_OLD abgespeichert, um eine Berechnung der Beschleunigung durchführen zu können, vgl. Fig. 29.

In S856 wird überprüft, ob die Zeitdauer TEMP kleiner als die Zeitdauer t_2000 ist. (Die Zeit t_2000 ist gleich der Zeit t_HALL bei 2000 U/min.) Falls Nein, ist die Drehzahl n des Motors 100 kleiner als 2000 U/min, und der linke Zweig S858, S860 wird durchlaufen, bei dem die Zeit t_HALL für eine Viertels-Umdrehung gemessen wird, also für 180° el. Hierbei wird in S858 der Wert TEMP aus S851 oder S852 der Hallzeit t_HALL zugewiesen, und in S860 wird durch Setzen von FLAG_1/4 auf 1 angezeigt, dass im Augenblick nur die Zeit für eine Viertel-Umdrehung gemessen wird.

Hat die Drehzahl des Motors in S856 bereits die Drehzahl n = 2000 U/min erreicht, so wird in S862 geprüft, ob die Variable HALL_CNT = 0 ist. Dies ist nach jeder vollen mechanischen Umdrehung des Rotors 108 der Fall (vgl. Fig. 28A und 28B). Falls Nein, wird sofort an das Ende S878 gesprungen, z.B. bei der Flanke 632 in Fig. 28D. Falls jedoch HALL_CNT = 0 ist, wird in S864 überprüft, ob FLAG_1/4 = 1 ist.

Falls Ja, ist dies der allererste Durchlauf der t_HALL-Berechnung für eine volle Rotorumdrehung, und daher wird bei diesem Durchlauf der momentane Wert RefTime_HSULSR in RefOld gespeichert, damit ab dem nächsten Durchlauf die Berechnung mit einem gültigen Wert für RefOld möglich ist. Im allerersten Durchlauf findet keine Berechnung von t_HALL über eine volle mechanische Umdrehung statt, sondern der bisherige Wert wird weiter verwendet. In S866 wird FLAG_1/4 auf Null gesetzt, d.h. ab dem nächsten Durchlauf kann die Messung über eine volle Umdrehung des Rotors 108 erfolgen.

Beim nächsten Aufruf von CALC_t_HALL S406, bei welchem HALL_CNT = 0 ist, wird von S864 nach S868 gesprungen. Dort wird die Zeitdauer zwischen dem augenblicklichen Wert RefTime HSULSR (z.B. von der Flanke 634 der Fig. 28D) und dem eine Rotorumdrehung früher in RefOld abgespeicherten Wert (z.B. an der Flanke 630 der Fig. 28D) berechnet. Diese Zeitdauer entspricht der vierfachen Hallzeit t_HALL, und in S870 wird deshalb der berechnete Wert durch 4 geteilt, so dass der Wert t_HALL genau einem Viertel der Zeitdauer für eine gesamte Umdrehung (von 630 bis 634 in Fig. 28E, also für 720° el.) entspricht. Diese Art der Messung von t_HALL ist besonders genau und führt deshalb zu einem besonders ruhigen Lauf des Motors.

In S874 wird der augenblickliche Wert RefTime_HSL/LSR für die nächste Berechnung in der Variablen RefOld gesichert. Daraufhin wird die Routine in S878 verlassen.

Anstelle von RefTime_HSL/LSR könnte ebenso die Zeit RefTime_HSR/LSL verwendet werden, wie das für den Fachmann selbstverständlich ist. Dies hängt davon ab, bei welcher Rotorstellung der Zähler HALL_CNT den Zählerstand 0 hat.

Die Routine CALC_t_HALL S406 wird in diesem Ausführungsbeispiel aufgrund der Verzweigung S402 im Hauptprogramm (Fig. 13) nur nach jedem zweiten Hall-Interrupt aufgerufen. Durch die Abfrage in S402 von Fig. 13-wird sicher gestellt, dass ihr bei ihrem Aufruf die richtigen Referenzzeiten für die Drehzahlberechnung über eine volle Umdrehung zur Verfügung stehen.

Bei einem schnellen Prozessor könnte die gleiche Routine CALC_t_HALL S406 auch häufiger aufgerufen werden.

**Fig. 29** zeigt die Routine CALC_ACCEL S408, welche zur Berechnung der Beschleunigung des Rotors 108 dient. Gemäß Fig. 13 wird diese Routine im Anschluss an die Routine CALC_t_HALL ausgeführt, in der im Schritt S854 die Ausführung der Routine S408 vorbereitet wird.

Im Schritt S640 wird die Variable ACCEL als Differenz von t_HALL_OLD und t_HALL berechnet.

In S642 wird geprüft, ob ACCEL kleiner 0 ist, was bedeutet, dass die Drehzahl des Motors abnimmt, z.B. durch einen Bremsvorgang. In diesem Fall wird in S644 ACCEL auf 0 gesetzt.

Ist in S642 ACCEL $\geq$ 0, so geht die Routine zu S646, wo der Wert von ACCEL verdoppelt wird. ACCEL größer 0 bedeutet, dass der Rotor 108 beschleunigt wird, z.B. beim Hochlauf des Motors. ACCEL wird prognostisch deshalb verdoppelt, weil beim Start eines Motors die Drehzahl nach einer e-Funktion ansteigt und folglich der Wert von ACCEL schon nach Abschluss der Berechnungen zu niedrig wäre, wenn die Verdoppelung nicht vorgenommen würde.

Im Anschluss an S644 und S646 geht die Routine zu S648, wo zum Wert von ACCEL (aus S644 oder S646) der Wert A* addiert wird, der z.B. 400 µs beträgt, weil für die Kommutierungsprozedur eine Zeit von etwa 400 µs benötigt wird. Dieser Wert von ACCEL wird anschließend in der Routine RGL verwendet, um den Wert von BW zu modifizieren. Die Routine S408 wird dann im Schritt S652 beendet.

Fig. 30 zeigt die Routine RGL S410 für die Drehzahlregelung. Diese beruht auf einem Vergleich der Hallzeit t_HALL mit der Sollzeit t_s, welch letztere der gewünschten Drehzahl entspricht und am Eingang RA0 des µC40 vorgegeben wird. Der Regler gemäß Ausführungsbeispiel arbeitet also nicht direkt mit Drehzahlen, sondern mit Zeiten, die der Rotor 108 für einen bestimmten Drehwinkel benötigt. Die Hallzeit t_HALL entspricht der Zeit, die der Rotor für eine Umdrehung von 180° el. benötigt. Ist der Rotor 108 vierpolig und rotiert mit 3000 U/min, so gilt

$$t\_HALL = 60/(3000 \times 4) = 0{,}005 \text{ s} = 5 \text{ ms} \tag{6}$$

Analog beträgt diese Zeit bei 1000 U/min

$$t\_HALL = 60/(1000 \times 4) = 0{,}015 \text{ s} = 15 \text{ ms} \tag{7}$$

Bei niedrigen Drehzahlen wird also der Istwert t_HALL sehr groß, z.B. bei 100 U/min 150 ms = 0,15 s und ist dann wesentlich größer als der Sollwert t_s, der z.B. für 3000 U/min 5 ms beträgt. Aus diesem Grund wird die Regeldifferenz RGL_DIFF gemäß Schritt S654 als Differenz (t_HALL - t_s) gebildet, damit man ein positives Resultat der Differenzbildung erhält.

Bei S656 wird geprüft, ob die Regeldifferenz größer als ein zulässiger positiver Maximalwert RGL_DIFF_MAX ist. Ist dies der Fall, so wird bei S658 die Regeldifferenz auf diesen positiven Maximalwert gesetzt. Dies ist vor allem beim Anlauf wichtig, wo die Regeldifferenz sonst sehr groß würde.

Ist bei S656 die Antwort Nein, so geht das Programm zum Schritt S660 und prüft dort, ob die Regeldifferenz kleiner als ein zulässiger maximaler negativer Wert -RGL_DIFF_MAX ist. Falls Ja, wird bei S662 die Regeldifferenz auf diesen negativen Maximalwert gesetzt. (Dies betrifft den Fall, dass der Motor schneller ist als die gewünschte Drehzahl.)

Auf die Schritte S658, S660 oder S662 folgt S664, wo die Rechenschritte eines PI-Reglers ausgeführt werden. Hierzu wird die Regeldifferenz mit einem Proportionalfaktor RGL_P multipliziert, der z.B. 2 betragen kann, und man erhält den Proportionalanteil RGL_PROP.

Ebenso wird die Regeldifferenz mit einem Integralfaktor RGL_I multipliziert, der z.B. 0,0625 betragen kann, und wird dann zum alten Integralanteil RGL_INT addiert, so dass man einen neuen Integralanteil erhält.

Schließlich wird die Länge BW eines Stromblocks 444 oder 446 (Fig. 15) berechnet als Summe von neuem Proportionalanteil und neuem Integralanteil.

Proportionalfaktor RGL_P und Integralfaktor RGL_I werden empirisch festgelegt, abhängig von der Größe des Motors und dem Trägheitsmoment der anzutreibenden Last.

Da BW nicht länger sein darf als die Zeit t_HALL, die der Rotor für das Durchlaufen von 180° el. benötigt, wird im nächsten Schritt S666 geprüft, ob BW zu groß ist, und ggf. wird die Blocklänge im Schritt S668 begrenzt, z.B. auf den augenblicklichen Wert t_HALL.

Wenn in S666 die Antwort Nein ist, geht die Routine S410 zum Schritt S670, wo geprüft wird, ob BW kleiner als 0 ist, was bedeutet, dass der Motor zu schnell dreht. In diesem Fall wird in S671 der Wert BW auf 0 gesetzt, d.h. es fließt kein Strom zum Motor. Gleichzeitig wird der Integralanteil RGL_INT auf 0 (oder einen niedrigen Wert) zurückgesetzt. Es hat sich gezeigt, dass durch dieses Rücksetzen des Integralanteils auf einen niedrigen Wert die Eigenschaften des Reglers wesentlich verbessert werden, besonders hinsichtlich Überschwingen (overshooting of the set speed).

Wenn in S670 die Antwort Nein ist, wird in S672 die Blocklänge verkürzt auf (BW - ACCEL), wobei der Wert ACCEL aus S648 der Fig. 29 übernommen wird. Dieser Wert enthält eine beschleunigungsabhängige Komponente und den Wert A* (z.B. 400 μs), der bei Fig. 29 erläutert wurde. Der Grund für S672 ist, dass bei einer Beschleunigung, z.B. beim Hochlauf, der nächste Hallwechsel früher auftritt als bei konstanter Drehzahl, weshalb die Blocklänge BW während der Beschleunigung entsprechend verkürzt werden muss. Die Verdoppelung des Wertes ACCEL in S646 (Fig. 29) dient ebenfalls dazu, beim Hochlauf genügend Zeit für die Kommutierungsprozedur bereitzustellen, denn beim Hochlauf eines Motors nimmt die Drehzahl etwa nach einer e-Funktion zu, und dies wird in S646 berücksichtigt.

Mit der Blocklänge BW gemäß S672 werden nun in S673 die Zeiten t_BLOCK_START UND t_BLOCK_END berechnet, die in Fig. 15 eingetragen sind. Dort ist t_BLOCK_START der zeitliche Abstand zwischen t1 und t3, und seine Größe ergibt sich aus Gleichung (3). Die Zeit t_BLOCK_END ergibt sich gemäß Fig. 15d, indem man zu t_BLOCK_START den Wert für BW addiert. Die Zeiten t_BLOCK_START und t_BLOCK_END werden anschließend für die Berechnungen in Fig. 25 (Routine COMMUT_CTRL) benötigt, wie das bei Fig. 26 ausführlich erläutert wurde.

Falls eine "Frühzündung" gewünscht wird, wie das anhand der Gleichungen (3a) und (4a) erläutert wurde, wird in S673 die Formel

$$t\_BLOCK\_START := t\_HALL + (t\_HALL - BW)/2 - VZ \qquad (8)$$

verwendet. VZ ist in diesem Fall eine Konstante von z.B. 400 μs, und durch sie wird gemäß Fig. 15d der Beginn des Blocks 446 nach t3' verschoben, d.h. der Strom wird früher ein- und ausgeschaltet, wobei dann t3' vor t2 liegen kann. Dies wird bei der Erfindung ermöglicht, weil als Bezugspunkt für die Berechnung von t_BLOCK_START für die Transistoren HSL 114 und LSR 136 die ansteigende Flanke 370 des Signals HALL verwendet wird, also die vorvorhergehende Flanke, vgl. die Pfeile 445 und 447 der Fig. 15.

Nach S673 endet die Routine S410 bei S674.

Durch die Routine der Fig. 30 erhält man also eine Blocklänge BW, die umso kleiner wird, je mehr sich die tatsächliche Drehzahl dem gewünschten Wert nähert.

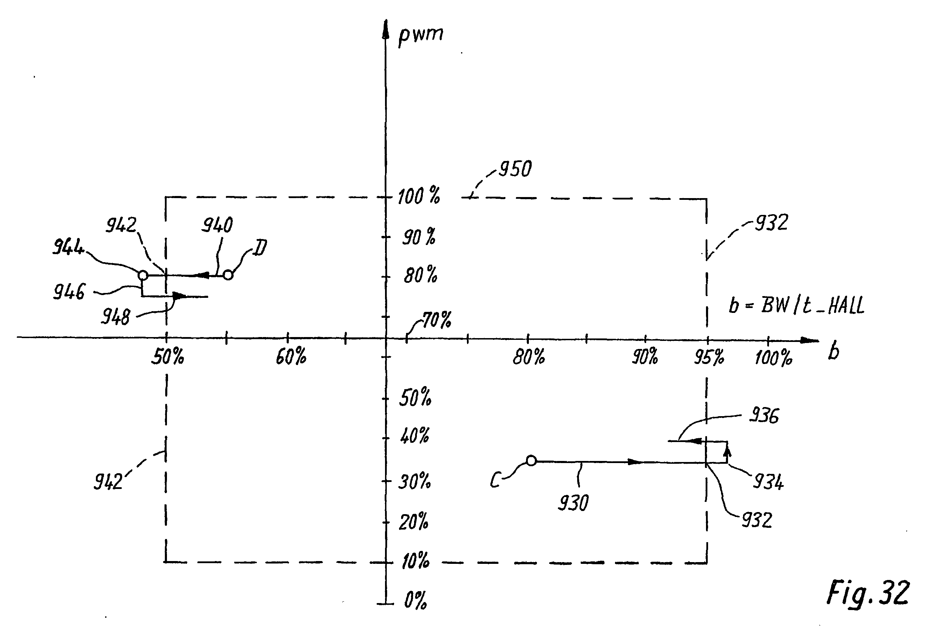

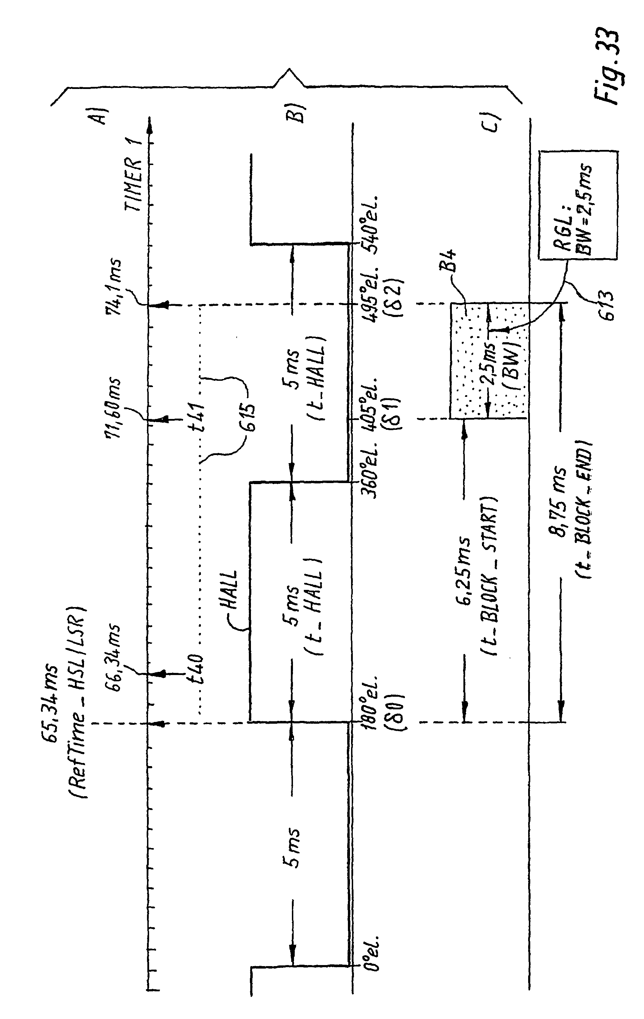

Die Regelung der Blocklänge BW steht in Wechselwirkung mit dem nachfolgend bei Fig. 31 und Fig. 32 beschriebenen adaptiven Regler, welcher über das Tastverhältnis pwm den Wert BW weiter optimiert. BW sollte 95 % von t_HALL nicht überschreiten, damit Zeit für die Kommutierungsprozedur zur Verfügung steht, und dies wird dadurch erreicht, dass die PWM-Impulse, aus denen ein Stromblock 444 oder 446 (Fig. 15) zusammengesetzt ist, entsprechend modifiziert werden, d.h. der mittlere Strom in einem Block wird durch den adaptiven Regler herauf- oder herabgesetzt. Wenn BW zu groß ist, wird automatisch der mittlere Strom durch Vergrößerung des Tastverhältnisses dieser Impulse so weit erhöht, bis die Blocklänge BW auf einen Wert "geschrumpft" ist, der einen optimalen Ablauf der Kommutierungsprozedur erlaubt.

**Fig. 31** zeigt eine Routine S412 MOD_pwm zur Modifikation des Tastverhältnisses pwm abhängig von Betriebsbedingungen des Motors.

Im Schritt S900 wird geprüft, ob die vom Regler (Fig. 30) in S672 erzeugte Blocklänge BW ≤ 50 % der augenblicklichen Hallzeit t_HALL ist. Dieser (drehzahlabhängige) Wert von 0,5 * t_HALL stellt einen unteren Grenzwert dar, der nicht wesentlich unterschritten werden sollte, um die Motorgeräusche niedrig zu halten. Kurze Antriebsstromimpulse verursachen nämlich einen erhöhten Körperschall des Motors, was unerwünscht ist, und sie reduzieren auch den Wirkungsgrad.

Falls der untere Grenzwert unterschritten wurde, wird bei S902 geprüft, ob das Tastverhältnis pwm bei mindestens 10 % liegt. (Dieser Wert sollte nicht wesentlich unterschritten werden).

Falls pwm kleiner oder gleich 10 % ist, geht das Programm zum Schritt S904, wo das Tastverhältnis pwm_OUT am Ausgang RC2 des μC40 auf den augenblicklichen Wert pwm eingestellt wird, und dann zu S906, nämlich dem Ende der Routine MOD_pwm S412. In diesem Fall ist es nicht möglich, pwm noch weiter zu reduzieren.

Falls pwm größer als 10 % ist, geht das Programm zum Schritt S908. Dort wird geprüft, ob ein Zähler PWM_CNT den Wert 0 hat. Dieser Zähler zählt, wie oft der untere Grenzwert, also 0,5 * t_HALL, erreicht oder unterschritten wird, und bei jedem fünften Zählwert bewirkt er, dass das Tastverhältnis pwm reduziert wird.

Dazu hat der μC ein internes Register mit 8 Bit, also mit Werten zwischen 1 und 256, und diese Werte legen das Tastverhältnis pwm des vom μC 40 an seinem Ausgang RC2 ausgegebenen PWM-Signals fest, das bei diesem μC eine konstante Frequenz von 20 kHz hat. Durch Reduzieren des Wertes in diesem internen Register wird pwm reduziert, und durch Erhöhen des Wertes in diesem Register wird es erhöht.

Wenn in S908 der Zähler PWM_CNT den Wert 0 hat, geht das Programm zum Schritt S910, wo dieser Zähler auf den Wert 5 eingestellt wird. Anschließend wird in S912 das Tastverhältnis pwm erniedrigt, vgl. Fig. 22, wodurch der Mittelwert des Motorstroms i1, i2 abnimmt. Anschließend geht das Programm zu S904.

Wenn bei S908 der Zähler PWM_CNT ungleich 0 ist, geht das Programm zum Schritt S914, wo PWM_CNT um 1 heruntergezählt wird, d.h. in diesem Fall ändert sich pwm nicht.

Wenn in S900 die Antwort Nein ist, geht das Programm zum Schritt S916. Dort wird geprüft, ob die vom Regler RGL berechnete Blocklänge BW zu groß ist, nämlich größer oder gleich 95 % von t_HALL. Dies ist deshalb unerwünscht, weil die Kommutierungsprozedur ca. 400 μs benötigt, die bei einem zu großen BW nicht mehr zur Verfügung stehen würden.

Falls BW nicht zu groß ist, geht das Programm zu dem bereits erläuterten Schritt S904, und pwm_OUT bleibt unverändert.

Falls BW zu groß ist, geht das Programm zum Schritt S918. Dort wird geprüft, ob pwm bereits 100 % erreicht hat, und in diesem Fall geht das Programm direkt zu S904, da eine Erhöhung über 100 % hinaus nicht möglich ist, d. h. während der Dauer von BW fließt dann ein kontinuierlicher Strom.

Ist in S918 das Tastverhältnis kleiner als 100 %, so folgt der Schritt S920, wo der Zähler PWM_CNT geprüft wird, ob er den Wert 0 hat. Falls Ja, wird bei S922 der Zähler PWM_CNT auf 5 gesetzt. Anschließend wird bei S924 der Wert pwm inkrementiert, vgl. Fig. 21, so dass der Mittelwert des Motorstroms $i_1$ oder $i_2$ entsprechend zunimmt.

Falls bei S920 die Antwort Nein ist, geht das Programm zum Schritt S926, wo PWM_CNT um den Wert 1 heruntergezählt wird, und dann geht die Routine zum Schritt S904.

**Fig. 32** erläutert die Vorgänge des Flussdiagramms der Fig. 31. In Fig. 32 zeigt die Abszisse die relative Blocklänge b. Diese ist definiert als

$$b = BW/t\_HALL \qquad\qquad (9)$$

Sie entspricht also dem augenblicklichen Verhältnis von Blocklänge BW zu Hallzeit t_HALL, in Prozent. Die Ordinate zeigt das augenblickliche Tastverhältnis pwm, ebenfalls in Prozent. Zur Erinnerung: t_HALL ist die Zeit, die der Rotor 108 bei der augenblicklichen Drehzahl für eine Drehung von 180° el. benötigt, vgl. die Gleichungen (6) und (7).

### a) Die relative Blocklänge b wird zu groß.

Es sei angenommen, dass der Motor 100 an einem Arbeitspunkt C arbeitet, nämlich bei einer Blocklänge BW, die 80 % von t_HALL beträgt, also bei b = 80 %, und bei einem Tastverhältnis pwm von 35 %.

Bei Belastung des Motors nimmt b durch die Wirkung des Reglers RGL längs einer Kennlinie 930 zu, wobei pwm = 35 % unverändert bleibt. Bei 932 wird der obere Grenzwert von b = 95 % überschritten, und bei 934 wird durch S924 (Fig. 31) das Tastverhältnis pwm erhöht, so dass ein höherer mittlerer Strom fließt, dem Motor 100 mehr Energie zugeführt wird, und seine Drehzahl ansteigt.

Deshalb wird bei 936 durch den Drehzahlregler RGL die relative Blocklänge b reduziert und kehrt wieder in den zulässigen Bereich zurück, nun aber mit einem erhöhten pwm. (In Fig. 32 ist die Erhöhung von pwm übertrieben dargestellt; diese erfolgt nur in kleinen Schritten.)

Der Zähler PWM_CNT verhindert, dass jede kleine Überschreitung des oberen Grenzwerts 932 eine Zunahme von pwm zur Folge hat. Empirisch wurde ermittelt, dass eine Erhöhung bei jedem fünften Mal einen sehr stabilen Lauf des Motors ergibt, doch kann dieser Faktor z.B. von der Motorgröße, der Art der Last etc. abhängen. Ist dieser Faktor zu klein, so neigt der Regler zum Oszillieren. Werte zwischen 3 und 7 erscheinen nach den derzeitigen Kenntnissen als optimal.

### b) Die relative Blocklänge b wird zu klein.

Fig. 32 zeigt als zweites Beispiel einen Arbeitspunkt D mit einer relativen Blocklänge von b = 55 % und einem pwm von 80 %.

Bei Entlastung des Motors folgt die Kennlinie einer Geraden 940, die den unteren Grenzwert 942 (b = 50 %) unterschreitet und bei 944 zu einer relativen Blocklänge b von etwa 47 % führt. Dies führt zu einem Ansteigen der Motorgeräusche und ist ungünstig für den Wirkungsgrad des Motors.

Deshalb wird durch S912 das Tastverhältnis pwm längs einer senkrechten Geraden 946 (Fig. 32) reduziert, wodurch der Mittelwert des Stromes abnimmt, der dem Motor zugeführt wird, so dass die Drehzahl sinkt.

Aus diesem Grund berechnet der Drehzahlregler RGL (Fig. 30) eine größere Blocklänge BW, so dass die relative Blocklänge b längs einer Geraden 948 wieder in einen Bereich oberhalb des unteren Grenzwertes 942 zurückkehrt.

Bei starken Laständerungen können sich die beschriebenen Vorgänge mehrfach wiederholen. Prinzipiell kann der Drehzahlregler die relative Blocklänge b und das Tastverhältnis pwm im gesamten Bereich einstellen, der in Fig.

**EP 1 317 795 B1**

32 von einer gestrichelten Linie 950 umrandet ist, also bei diesem Beispiel zwischen einem pwm von 10 und 100 % und einer relativen Blocklänge b zwischen 50 und 95 %. Man könnte dies auch als einen adaptiven Regler bezeichnen, der immer wieder in das Gebiet seines optimalen Wirkungsgrades bzw. niedriger Motorgeräusche zurückfindet.

Naturgemäß sind im Rahmen der vorliegenden Erfindung vielfache Abwandlungen und Modifikationen möglich.

**Patentansprüche**

1. Elektronisch kommutierter Gleichstrommotor, welcher aufweist:

   Einen Rotor (108);
   einen Stator mit einer Wicklungsanordnung, welche mindestens einen Wicklungsstrang (102) aufweist;
   eine H-Brückenschaltung (137) zur Speisung dieses Wicklungsstranges (102) mit alternierenden Stromimpulsen (i1, i2) aus einer Gleichstromquelle, welch letztere eine positive. Leitung (116) und eine negative Leitung (122) aufweist, wobei die H-Brückenschaltung (137) in der Verbindung von einem Anschluss (104) des Wicklungsstranges (102) zur positiven Leitung (116) einen ersten P-Kanal-MOSFET (114) und in der Verbindung von diesem einen Anschluss (104) zur negativen Leitung (122) einen ersten N-Kanal-MOSFET (132) aufweist, und in der Verbindung vom anderen Anschluss (106) des Wicklungsstranges (102) zur positiven Leitung (116) einen zweiten P-Kanal-MOSFET (130) und in der Verbindung von diesem anderen Anschluss (106) zur negativen Leitung (122) einen N-Kanal-MOSFET (136) aufweist;
   ferner ein zwischen den Gates der beiden ersten Transistoren (114, 132) vorgesehenes erstes Verriegelungsglied (166), welches ein gleichzeitiges Einschalten der beiden ersten MOSFETs (114, 132) zumindest behindert; und ein zwischen den Gates der zweiten MOSFETs (130, 136) vorgesehenes zweites Verriegelungsglied (168), welches ein gleichzeitiges Einschalten der beiden zweiten MOSFETs zumindest behindert.

2. Motor nach Anspruch 1, bei welchem das Verriegelungsglied eine erste Diode (Fig. 11: 166, 168) aufweist, deren Katode mit dem Gate eines P-Kanal-MOSFETs und deren Anode mit dem Gate eines N-Kanal-MOSFETs der H-Brückenschaltung (137) verbunden ist.

3. Motor nach Anspruch 2, bei welchem die Katode der ersten Diode (Fig. 11: 166, 168) über einen Widerstand (336) mit dem Gate des P-Kanal-MOSFETs verbunden ist.

4. Motor nach Anspruch 2 oder 3, bei welchem die Anode der ersten Diode (Fig. 11: 166, 168) über einen Widerstand (346) mit dem Gate des N-Kanal-MOSFETs verbunden ist.

5. Motor nach Anspruch 4, bei welchem parallel zu dem Widerstand (346) die Reihenschaltung einer zweiten Diode (352) und eines Widerstands (350) vorgesehen ist, wobei erste Diode (166) und zweite Diode (352) gleich gepolt sind.

6. Motor nach Anspruch 5, bei welchem der dritte Widerstand (350) einen kleineren Widerstandswert hat als der zweite Widerstand (346).

7. Motor nach einem oder mehreren der vorhergehenden Ansprüche, bei welchem zur Steuerung der H-Brückenschaltung (137) ein Mikrocomputer (40) vorgesehen ist, dem ein Kommutierungsprogramm zugeordnet ist, welches spezielle Programmschritte (Fig. 25: S822) zum Verhindern einer gleichzeitigen Einschaltung der beiden ersten MOSFET-Transistoren (114, 132) aufweist.

8. Motor nach einem oder mehreren der vorhergehenden Ansprüche, bei welchem zur Steuerung der H-Brückenschaltung (137) ein Mikrocomputer (40) vorgesehen ist, dem ein Kommutierungsprogramm zugeordnet ist, welches spezielle Programmschritte (Fig. 25: S822) zum Verhindern einer gleichzeitigen Einschaltung der beiden zweiten MOSFET-Transistoren (130, 136) aufweist.

9. Motor nach Anspruch 7 oder 8, bei welchem das Programm Programmschritte (Fig. 19: S536) aufweist, welche vor einer Umschaltung der Stromrichtung im Wicklungsstrang (102) alle Transistoren der H-Brücke (137) kurzzeitig abschalten.

10. Motor nach Anspruch 9, bei welchem vor dem Abschalten aller Transistoren der Wicklungsstrang (102) über zwei MOSFETs (132, 136) der H-Brückenschaltung (137) im wesentlichen im Kurzschluss betrieben wird, um ein rasches Abklingen des Stromes in diesem Wicklungsstrang (102) zu ermöglichen.

11. Motor nach Anspruch 10, bei welchem eine Überwachungsanordnung (202) für den im Kurzschluss durch den Wicklungsstrang (102) fließenden Strom vorgesehen ist, welche bei einem Nulldurchgang dieses Stromes ein Signal (Imin) erzeugt, das dazu verwendet wird, nach Auftreten dieses Signals alle Transistoren der H-Brücke (137) kurzzeitig abzuschalten.

**Claims**

1. Electronically commutated direct current motor which comprises:

   a rotor (108);
   a stator with a winding arrangement which comprises at least one phase winding (102);
   an H-bridge circuit (137) to feed this phase winding (102) with alternating current pulses (i1, i2) from a direct current source, which latter comprises a positive lead (116) and a negative lead (122), the H-bridge circuit (137) comprising a first P-channel MOSFET (114) in the link from a connection (104) of the phase winding (102) to the positive lead (116) and a first N-channel MOSFET (132) in the link from this first connection (104) to the negative lead (122),
   and comprising a second P-channel MOSFET (130) in the link from the other connection (106) of the phase winding (102) to the positive lead (116) and an N-channel MOSFET (136) in the link from this other connection (106) to the negative lead (122);
   further a first interlock member (116) which is provided between the gates of the first two transistors (114, 132) and at least prevents the first two MOSFETs (114, 132) from being turned on at the same time;
   and a second interlock member (168) which is provided between the gates of the second MOSFETs (130, 136) and at least prevents the second two MOSFETs from being turned on at the same time.

2. Motor according to claim 1, in which the interlock member comprises a first diode (fig. 11: 166, 168) the cathode of which is connected to the gate of a P-channel MOSFET and the anode of which is connected to the gate of an N-channel MOSFET of the H-bridge circuit (137).

3. Motor according to claim 2, in which the cathode of the first diode (fig. 11: 166, 168) is connected to the gate of the P-channel MOSFET via a resistor (336).

4. Motor according to claim 2 or 3, in which the anode of the first diode (fig. 11: 166, 168) is connected to the gate of the N-channel MOSFET via a resistor (346).

5. Motor according to claim 4, in which the series circuit of a second diode (352) and a resistor (350) is provided parallel to the resistor (346), the first diode (166) and the second diode (352) having the same polarity.

6. Motor according to claim 5, in which the third resistor (350) has a smaller resistance than the second resistor (346) .

7. Motor according to one or more of the preceding claims, in which a microcomputer (40) is provided for controlling the H-bridge circuit (137), said microcomputer having associated with it a commutation programme which comprises specific programme steps (fig. 25: S822) for preventing the first two MOSFET transistors (114, 132) from being turned on at the same time.

8. Motor according to one or more of the preceding claims, in which a microcomputer (40) is provided for controlling the H-bridge circuit (137), said microcomputer having associated with it a commutation programme which comprises specific programme steps (fig. 25: S822) for preventing the second two MOSFET transistors (130, 136) from being turned on at the same time.

9. Motor according to claim 7 or 8, in which the programme comprises programme steps (fig. 19: S536) which briefly turn off all the transistors of the H-bridge (137) before the direction of the current is reversed in the phase winding (102).

10. Motor according to claim 9, in which the phase winding (102) is operated essentially in a short circuit by means of two MOSFETs (132, 136) of the H-bridge circuit (137) before all the transistors are turned off, in order to allow the current in this phase winding (102) to decay rapidly.

11. Motor according to claim 10, in which a monitoring arrangement (202) is provided for the current flowing through the phase winding (102) in the short circuit, which monitoring arrangement when this current passes through zero, produces a signal (Imin) which is used to turn off all the transistors of the H-bridge (137) briefly after the appearance of this signal.

**Revendications**

1. Moteur à courant continu à commutation électronique qui présente :

   un rotor (108) ;
   un stator avec un arrangement d'enroulements qui présente au moins un enroulement (102);
   un circuit en pont en H (137) pour l'alimentation de cet enroulement (102) avec des impulsions de courant alternantes ($i_1$, $i_2$) issues d'une source de courant continu, cette dernière présentant une ligne positive (116) et une ligne négative (122), le circuit en pont en H (137) présentant dans la liaison d'une connexion (104) de l'enroulement (102) avec la ligne positive (116) un premier MOSFET à canal P (114) et dans la liaison de cette connexion (104) avec la ligne négative (122) un premier MOSFET à canal N (132),
   et dans la liaison de l'autre connexion (106) de l'enroulement (102) avec la ligne positive (116) un deuxième MOSFET à canal P (130) et dans la liaison de cette autre connexion (106) avec la ligne négative (122) un MOSFET à canal N (133);
   ainsi qu'un premier circuit de verrouillage (166) prévu entre les grilles des deux premiers transistors (114, 132) qui, à tout le moins, gêne une activation simultanée des deux premiers MOSFET (114, 132) ;
   et un deuxième circuit de verrouillage (168) prévu entre les grilles des deuxièmes MOSFET (130, 136) qui, à tout le moins, gêne une activation simultanée des deux deuxièmes MOSFET.

2. Moteur selon la revendication 1 dans lequel le circuit de verrouillage présente une première diode (fig. 11 : 166, 168) dont la cathode est reliée à la grille d'un MOSFET à canal P et dont l'anode est reliée à la grille d'un MOSFET à canal N du circuit en pont en H (137).

3. Moteur selon la revendication 2 dans lequel la cathode de la première diode (fig. 11 : 166, 168) est reliée à la grille du MOSFET à canal P par l'intermédiaire d'une résistance (336).

4. Moteur selon la revendication 2 ou 3 dans lequel l'anode de la première diode (fig. 11 : 166, 168) est reliée à la grille du MOSFET à canal N par l'intermédiaire d'une résistance (346).

5. Moteur selon la revendication 4 dans lequel il est prévu en parallèle sur la résistance (346) le montage en série d'une deuxième diode (352) et d'une résistance (350), la première diode (166) et la deuxième diode (352) étant polarisées de la même manière.

6. Moteur selon la revendication 5 dans lequel la troisième résistance (350) a une plus faible valeur de résistance que la deuxième résistance (346).

7. Moteur selon une ou plusieurs des revendications précédentes dans lequel il est prévu pour la commande du circuit en pont en H (137) un microordinateur (40) auquel est associé un programme de commutation qui présente des pas de programme spéciaux (fig. 25 : S822) pour empêcher une activation simultanée des deux premiers transistors MOSFET (114, 132).

8. Moteur selon une ou plusieurs des revendications précédentes dans lequel il est prévu pour la commande du circuit en pont en H (137) un microordinateur (40) auquel est associé un programme de commutation qui présente des pas de programme spéciaux (fig. 25 : S822) pour empêcher une activation simultanée des deux deuxièmes transistors MOSFET (130, 136).

9. Moteur selon la revendication 7 ou 8 dans lequel le programme présente des pas de programme (fig. 19 : S536) qui désactivent temporairement tous les transistors du circuit en pont en H (137) avant une inversion du sens du courant dans l'enroulement (102).

**10.** Moteur selon la revendication 9 dans lequel, avant la désactivation de tous les transistors, l'enroulement (102) est commandé essentiellement en court-circuit par deux MOSFET (132, 136) du circuit en pont en H (137) pour permettre une décroissance rapide du courant dans l'enroulement (102).

**11.** Moteur selon la revendication 10 dans lequel il est prévu un dispositif de surveillance (202) pour le courant circulant en court-circuit à travers l'enroulement (102), lequel dispositif génère lors d'un passage à zéro de ce courant un signal (1min) qui est utilisé pour désactiver temporairement tous les transistors du pont en H (137) après la survenue de ce signal.

Fig. 1

Fig. 2
( Prior Art )

EP 1 317 795 B1

Fig. 3

Fig. 4

EP 1 317 795 B1

Fig.5

Fig. 6

Fig. 7

Fig.8

Fig. 9

EP 1 317 795 B1

39

Fig. 10

Fig. 11

a)

HALL = HIGH    HALL = LOW    HALL = H

0°el.    180°el.    360°el.

370    372    370

b)

374    376    374

378    378    378    378

Sollwert + Komm.    380

Komm.    382

Istwert
Beschleun.
n – Reg.
PWM
Reinit.
+
Komm.    384

Komm.    382

Sollwert + Komm.    380

Fig. 12

```
                    ┌──────────────────────────┐        390
                    │        Interrupts         │────────
                    └──────────────────────────┘
       392                    │        S394
     ──────  ↓          ┌───────────────────────┐  ↓
                        │      PowerOnInit        │
                        │     STARTUP := 1        │
                        └───────────────────────┘
    S396                        │
   ──────          ┌────────────↓────────────┐
                   │         COMMUT          │
                   └───────────────────────┘
                            │          S398
                            ↓       ──────              382
                     ╱──────────────╲                 ──────
                    ╱  NEW_HALL = 1?  ╲──── N
                     ╲────────────────╱
                            │ Y
                            │        S400
                   ┌────────↓────────┐
                   │   NEW_HALL := 0  │              416
                   └─────────────────┘          ──────
                            │
                            │              S402
                     ╱──────────────╲
         376        ╱  HALL_CNT = 0   ╲
       ────── N ───╱      OR           ╲──── Y      374
                   ╲  HALL_CNT = 2?    ╱          ──────
                    ╲────────────────╱
              │              S406                      S404
   ┌──────────↓──────┐                        ┌────────↓────────┐
   │   CALC_t_HALL    │                        │    CALC_t_s      │
   └─────────────────┘                        └─────────────────┘
              │          S408
   ┌──────────↓──────┐
   │   CALC_ACCEL     │
   └─────────────────┘
              │          S410
   ┌──────────↓──────┐
   │       RGL        │
   └─────────────────┘
              │          S412
   ┌──────────↓──────┐
   │     MOD_pwm      │
   └─────────────────┘
              │          S414
   ┌──────────↓──────┐
   │    µC-Reinit     │
   └─────────────────┘
```

Fig. 13

S420

Interrupt-Handler

S422

TIMER1_INT = 1? —Y→ TIMER1-Interrupt — S424

N

S426

HALL_INT = 1? —Y→ HALL-Interrupt — S428

N

S430

Imax_INT = 1? —Y→ Imax-Interrupt — S432

N

S434

Imin_INT = 1? —Y→ Imin-INTERRUPT — S436

N

S438

TIMEOUT_INT = 1? —Y→ TIMEOUT-INTERRUPT — S440

N

S442

ERROR

Fig. 14

Fig. 15

EP 1 317 795 B1

```
                                              ┌─ S428
                                    ┌─────────────────────┐
                                    │    HALL-Interrupt    │
                                    └─────────────────────┘
                                               │         ┌─ S451
                                    ┌─────────────────────┐
                                    │  t_TEMP := t_TIMER1  │
                                    └─────────────────────┘
                                               │         ┌─ S452
                                    ┌─────────────────────┐
                                    │    NEW_HALL := 1     │
                                    └─────────────────────┘
                                               │               ┌─ S454
                            ┌──────────────────────────────────────┐
                            │ HALL_CNT := (HALL_CNT + 1) MOD 4      │
                            └──────────────────────────────────────┘
                                               │       ┌─ S456
                                       ◇───────────────────◇
                          N ────────── │   HALL = HIGH?    │ ────────── Y
                          │            ◇───────────────────◇                │
                          │                                                  │
              ┌─ S458     │                                    ┌─ S470      │
        ┌──────────────────────────┐              ┌──────────────────────────┐
        │ RefTime_HSR/LSL := t_TEMP │              │ RefTime_HSL/LSR := t_TEMP │
        └──────────────────────────┘              └──────────────────────────┘
                          │  ┌─ S460                              │  ┌─ S472
        ┌──────────────────────────┐              ┌──────────────────────────┐
        │ INT_SENSITIVITY := LOW->HIGH │          │ INT_SENSITIVITY := HIGH->LOW │
        └──────────────────────────┘              └──────────────────────────┘
                          │  ┌─ S462                              │  ┌─ S474
                   ◇───────────────◇                       ◇───────────────◇
                   │ COMMUT_ON = 0? │ ── Y         Y ── │ COMMUT_ON = 0? │
                   ◇───────────────◇       │     │      ◇───────────────◇
                          │ N  ┌─ S464      │     │             │ N  ┌─ S476
                   ┌──────────────┐         │     │      ┌──────────────┐
                   │ HSR_OUT := 0 │         │     │      │ HSL_OUT := 0 │
                   └──────────────┘         │     │      └──────────────┘
                          │  ┌─ S466        │     │             │  ┌─ S478
                   ┌──────────────┐         │     │      ┌──────────────┐
                   │ LSL_OUT := 1 │         │     │      │ LSL_OUT := 1 │
                   │ LSR_OUT := 1 │         │     │      │ LSR_OUT := 1 │
                   └──────────────┘         │     │      └──────────────┘
                          │                 │     │             │
                          └─────────────────┴─────┴─────────────┘
                                       │         ┌─ S468
                            ┌──────────────────────┐
                            │   COMMUT_ON := 0      │
                            └──────────────────────┘
                                       │     ┌─ S480
                               ◇───────────────────◇
                               │   STARTUP = 1?     │ ───────── N
                               ◇───────────────────◇               │
                                       │ Y   ┌─ S482                │
                               ◇───────────────────◇               │
                               │ t_HALL < t_HALL_min? │ ── N        │
                               ◇───────────────────◇      │        │
                                       │ Y   ┌─ S486       │        │
                               ┌──────────────┐            │        │
                               │ STARTUP := 0 │            │        │
                               └──────────────┘            │        │
                                       │     ┌─ S488        │        │
                               ◇───────────────────◇        │        │
              N ────────────── │   HALL = HIGH?    │ ── Y    │        │
              │                ◇───────────────────◇    │   │        │
    ┌─ S490   │                                          │ ┌─ S492  │
┌────────────────────────┐              ┌────────────────────────┐   │
│ NEXT_COMMUT := HSL/LSR │              │ NEXT_COMMUT := HSR/LSL │   │
└────────────────────────┘              └────────────────────────┘   │
              │                                  │                     │
              └──────────────┬───────────────────┴─────────────────────┘
                             │   ┌─ S493
                   ┌──────────────────┐
                   │      RETURN       │
                   └──────────────────┘
```

*Fig. 16*

Fig. 17

Fig. 18

EP 1 317 795 B1

S436

Imin-Interrupt

S530

Imin_INT_ON = 1? ──N──┐

Y

S534

TIMEOUT_INT_ON := 0

S536

HSL_OUT := 0; HSR_OUT := 0
LSL_OUT := 0; LSR_OUT := 0

S538

BlockEnd_DONE := 1

S539

Imin_INT_ON := 0

S532

RTI

Fig. 19

S440

TIMEOUT-Interrupt

S540

Imin_INT_ON = 1? —— N

Y

S544

Imin_INT_ON := 0

S546

HSL_OUT := 0; HSR_OUT := 0
LSL_OUT := 0; LSR_OUT := 0

S548

BlockEnd_DONE := 1

S549

TIMEOUT_INT := 0

S542

RTI

Fig. 20

Fig. 21

Fig. 22

COMMUT ——S396

STARTUP = 1? ——S700

Y

COMMUT_ON = 1? ——S702

N.

WAIT(100 µs) ——S704

BW > 0? ——S706

Y.

HALL = HIGH? ——S708

Y —— N

HSL_OUT := 0
HSR_OUT := 1
LSL_OUT := 1
LSR_OUT := 0
——S710

HSL_OUT := 1
HSR_OUT := 0
LSL_OUT := 0
LSR_OUT := 1
——S714

NEXT_COMMUT
:= HSL/LSR
——S712

NEXT_COMMUT
:= HSR/LSL
——S716

COMMUT_ON := 1 ——S718

N

COMMUT_NORMAL ——S720

RETURN ——S722

Fig. 23

S720

COMMUT_NORMAL

S750

t_CALC := t_TIMER1

S752

NEXT_COMMUT = HSL/LSR?

Y ——— S754

t_CALC := t_CALC - RefTime_HSL/LSR

N ——— S756

t_CALC := t_CALC - RefTime_HSR/LSL

S760

COMMUT_CTRL

S762

BlockEnd_DONE = 1? ——— N

Y

S764

COMMUT_ON := 0
Off_detected := 0

S766

NEXT_COMMUT = HSL/LSR?

Y ——— S768

NEXT_COMMUT := HSR/LSL

N ——— S770

NEXT_COMMUT := HSL/LSR

S772

BlockEnd_DONE := 0

S774

RETURN

Fig. 24

Fig. 25

Fig. 26

EP 1 317 795 B1

55

S406

CALC_t_HALL

S850

HALL = HIGH?

N ─── S851

TEMP :=
RefTime_HSR/LSL
-RefTime HSL/LSR

Y ─── S852

TEMP :=
RefTime_HSL/LSR
-RefTime HSR/LSL

S854

t_HALL_OLD := t_HALL

S856

TEMP < t_2000?

N

S858

t_HALL := TEMP

S860

FLAG_1/4 := 1

Y

S862

HALL_CNT = 0?

N

Y

S864

FLAG_1/4 = 1?

Y

N

S865

RefOld :=
RefTime_HSL/LSR

S866

FLAG_1/4 := 0

S868

t_HALL :=
RefTime_HSL/LSR -
RefOld

S870

t_HALL := t_HALL / 4

S874

RefOld :=
RefTime_HSL/LSR

S878

RETURN

Fig. 27

Fig. 28

Fig. 29

Fig. 30

S412

MOD_pwm

S900

BW <= (0.5 * t_HALL)?

—Y→ S902 pwm >= 10%? —N—

Y

S908

PWM_CNT = 0?

Y

S910

PWM_CNT := 5

DEC*(pwm) S912

N

S914

DEC*(PWM_CNT)

N

S916

BW >= (0.95 * t_HALL)?

—Y→ S918 pwm < 100%? —N—

Y

S920

PWM_CNT = 0?

Y

S922

PWM_CNT := 5

INC*(pwm) S924

N

S926

DEC*(PWM_CNT)

S904

pwm_OUT := pwm

S906

END MOD_pwm

Fig. 31

60

Fig.32

EP 1 317 795 B1

Fig. 33

EP 1 317 795 B1